(19) Europäisches Patentamt
European Patent Office
Office européen des brevets

(11) EP 2 236 562 B1

(12) **EUROPEAN PATENT SPECIFICATION**

(45) Date of publication and mention of the grant of the patent:
**10.10.2018 Bulletin 2018/41**

(21) Application number: **08865919.8**

(22) Date of filing: **24.12.2008**

(51) Int Cl.:
***C09B 67/46*** *(2006.01)* ***C09B 67/22*** *(2006.01)*
***C09B 57/00*** *(2006.01)* ***G02B 1/04*** *(2006.01)*
***G02B 5/28*** *(2006.01)*

(86) International application number:
**PCT/JP2008/073403**

(87) International publication number:
**WO 2009/081930 (02.07.2009 Gazette 2009/27)**

(54) **PIGMENT COMPOSITION FOR RED COLOR FILTER, METHOD FOR PRODUCING THE SAME, COLOR COMPOSITION USING THE SAME, AND COLOR FILTER**

PIGMENTZUSAMMENSETZUNG FÜR ROTFILTER, VERFAHREN ZUR HERSTELLUNG, FARBZUSAMMENSETZUNG DAMIT UND FARBFILTER

COMPOSITION DE PIGMENT POUR UN FILTRE COLORÉ ROUGE, SON PROCÉDÉ DE FABRICATION, COMPOSITION COLORÉE L’UTILISANT ET FILTRE COLORÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.12.2007 JP 2007335400**

(43) Date of publication of application:
**06.10.2010 Bulletin 2010/40**

(73) Proprietors:
- **Toyo Ink Mfg. Co., Ltd**
  **Tokyo 104-8377 (JP)**
- **Toyo Ink Europe Specialty Chemicals S.A.**
  **60870 Rieux (FR)**

(72) Inventors:
- **MUROHOSHI, Taro**
  **Tokyo 104-8377 (JP)**
- **OMURA, Toru**
  **Tokyo 104-8377 (JP)**
- **TSURUTANI, Shinsuke**
  **Tokyo 104-8377 (JP)**

(74) Representative: **Maiwald Patent- und Rechtsanwaltsgesellschaft mbH**
**Elisenhof**
**Elisenstraße 3**
**80335 München (DE)**

(56) References cited:

| | |
|---|---|
| **WO-A2-2009/049736** | **DE-A1- 10 235 573** |
| **JP-A- 7 090 189** | **JP-A- 8 199 085** |
| **JP-A- 9 132 728** | **JP-A- 61 120 861** |
| **JP-A- 63 048 279** | **JP-A- 2004 211 095** |
| **JP-A- 2006 301 122** | **JP-A- 2007 224 177** |
| **JP-A- 2007 293 061** | **JP-T- 2006 519 167** |
| **JP-T- 2007 514 798** | **US-A- 6 036 766** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a pigment composition for color filters that is used to produce color filters installed in the image pick-up elements of, for example, color liquid crystal displays, digital cameras, video cameras, copiers, and scanners, and also relates to a method of producing this pigment composition. The present invention further relates to a color composition for color filters that uses this pigment composition and to color filters. More particularly, the present invention relates to a diketopyrrolopyrrole pigment that is a finely divided diketopyrrolopyrrole pigment which provides dramatically less foreign material production than conventional ones when a red film containing this pigment is subjected to thermal processing, and which can provide an excellent contrast ratio when used in a color filter, and further relates to a color composition, a red film, and a color filter that use this diketopyrrolopyrrole pigment.

### BACKGROUND ART

Color filters are composed of microscopic bands (stripes), disposed in parallel or intersecting, or microscopic pixels, disposed in a vertically and horizontally constant array, of two or more different hues elaborated on the surface of a transparent substrate such as glass. The pixels are microscopic at from several tens of microns to several hundred microns and are systematically disposed with a specific array for each hue. Color filters are used in color liquid crystal display devices, where typically a transparent electrode is formed on the color filter by vapor deposition or sputtering in order to drive the liquid crystal and an alignment film is formed over this in order to align the liquid crystals in a uniform direction.

In order for the properties of this transparent electrode and alignment film to be fully manifested, the processes by which they are formed must be performed at high temperatures, i.e., generally at least 200°C and preferably at least 230°C. As a consequence, so-called pigment dispersion methods, which use highly light-resistant and heat-resistant pigments as the colorant, are primarily used to produce color filters at the present time, and color filters are produced mainly by the following two procedures.

In a first procedure, a dispersion of pigment in a photosensitive transparent resin solution is coated on a transparent substrate, e.g., glass; the solvent is removed by drying; patternwise photoexposure is performed for one filter color and the non-photoexposed regions are then removed in a developing process to form a first color pattern; as necessary treatments such as heating are applied; and the same process is thereafter performed sequentially for all the filter colors to produce the color filter.

In a second procedure, a dispersion of the pigment in a transparent resin solution is coated on a transparent substrate, e.g., glass, and the solvent is removed by drying; onto this film is then applied a resist, e.g., a positive-acting resist; patternwise photoexposure is performed for one filter color and development is then carried out to form a resist pattern; utilizing this as an etching resist, an etching solution is used to remove the pigment dispersion film to which the resist pattern is not attached; the resist film is then stripped off to form a first color pattern; as necessary treatments such as heating are applied; and the same process is thereafter performed sequentially for all the filter colors to produce the color filter. Development of the resist and etching of the pigment dispersion film may also be performed simultaneously.

A liquid crystal display has a structure in which a liquid crystal cell is interposed between two polarizing plates. To carry out image display, light, polarized by the first polarizing plate, has its plane of polarization rotated by the liquid crystal layer in conformity to the image signal, thus controlling the amount of light at the individual pixels that passes through the second polarizing plate. Accordingly, when the plane of polarization of the light that has traversed the first polarizing plate is disturbed by something other than the liquid crystal, the display characteristics of the display are diminished. Specifically, light may leak in the black display mode or the transmitted light in the white mode may be reduced, causing a decline in the display's contrast ratio.

A color filter is installed between a polarizing plate and the liquid crystal cell sandwiched by the two polarizing plates. Due to this, the display characteristics of the color filter are quite important. The display characteristics of this color filter are given by the characteristic value known as the contrast ratio, which is very important as an indicator of how sharp the light/dark contrast of a liquid crystal display can be made. The contrast ratio refers to the value obtained by interposing the color filter between two polarizing plates and dividing the luminance in the light state with the two polarizing plates positioned in parallel by the luminance in the dark state with the polarizing plates positioned crossed.

Pigments are typically commercially available as powders; however, these are clusters (secondary particles) of powder particles formed by the aggregation of many of the smallest particle unit, which is known as a primary particle. The pigment is typically used as a colorant for ink or paint after microscopic dispersion - by a process known as dispersion - in a vehicle to the primary particle level to the greatest extent possible.

When, with regard to a color composition (a dispersion composition in which a pigment powder is dispersed) for color filter applications, one considers the effect exercised on the contrast ratio by a color filter from the perspective

of the primary and secondary particles in the pigment, the contrast ratio gradually rises when the degree of dispersion is increased (the average particle diameter of the dispersed material is reduced) in order to reduce the average particle diameter in the color composition. However, since it is quite difficult with ordinary dispersion methods to make the average dispersed particle diameter smaller than the primary particle diameter, there are limits on the contrast ratio that can be achieved even by raising the degree of dispersion. Accordingly, the primary particle diameter of the pigment must be reduced in order to obtain higher contrast ratios.

One factor thought to cause a decline in the contrast ratio is the perturbation of the polarized light (extinction of polarization) that occurs when light polarized by the first polarizing plate undergoes rotation of its plane of polarization when reflected at the surface of large-diameter pigment particles while traversing the color filter layer. Accordingly, boosting the contrast ratio by eliminating large-diameter pigment particles in the color filter must be approached through the method of production.

Reducing the width of the particle size distribution of the primary particles and bringing the primary particle shape near to spherical can relax the strength of aggregation and can thereby provide a good dispersibility and facilitate microdispersion of the secondary particles to primary particles and are important for engineering a pigment for color filter applications.

The production of a red filter by the previously described methods has heretofore been carried out using pigments that exhibit an excellent light resistance and an excellent heat resistance, for example, dianthraquinone pigments, perylene pigments, diketopyrrolopyrrole pigments. Among these, diketopyrrolopyrrole pigments, which are pigments with a red to orange color, are preferred pigments for color filter service because they have an excellent light fastness and an excellent heat resistance, exhibit a suitable spectrum for application as a red color filter, and also have a high transparency.

Using the Colour Index numbers, the diketopyrrolopyrrole pigments can be specifically exemplified by C.I. Pigment Red 254, 255, 264 and C.I. Pigment Orange 71. Among these, C.I. Pigment Red 254 (diketopyrrolopyrrole pigment that has chlorine in para position on the pyrrolopyrrole ring) is frequently used as a red color filter pigment because it has a particularly good spectrum for red color filter service, also exhibits an excellent dispersibility, and provides a very high brightness (= Y value). A high brightness is a very important quality for a liquid crystal display for realizing a low power consumption and vivid colors.

Commercially available C.I. Pigment Red 254 pigments for color filter service include IRGAPHOR Red BCF and IRGAPHOR Red BT-CF (both from Ciba Specialty Chemicals Corporation). According to transmission electron microscope (TEM) observations, the particles in these pigments are relatively spherical and have a primary particle diameter of 40 to 80 nm.

With regard to methods for producing diketopyrrolopyrrole pigments for color filter service, Japanese Patent Application Laid-open No. 2001-220520 (Patent Reference 1) discloses a diketopyrrolopyrrole pigment for color filter service that is obtained by kneading, for example, with a kneader, a mixture that contains (A) a diketopyrrolopyrrole pigment, (B) a dye derivative, (C) a water-soluble inorganic salt, and (D) a water-soluble organic solvent that substantially does not dissolve the water-soluble inorganic salt (C) (this kneading of a mixture that contains pigment, water-soluble inorganic salt, and water-soluble organic solvent is referred to below as salt milling), followed by removal of the water-soluble inorganic salt (C) and water-soluble organic solvent (D).

Because crystal growth occurs in parallel with comminution of the primary pigment particles in this salt milling processing method, the primary particle diameter can be adjusted downward, the presence of coarse particles can be eliminated, and a pigment with a narrow primary particle size distribution can be obtained, making this a microfine-sizing method that is very good for color filter applications.

The direct production during pigment synthesis of a diketopyrrolopyrrole pigment that has a small primary particle is accomplished by limitations on the protonation conditions in the production methods (referred to below as the succinate ester synthesis method) disclosed in Japanese Patent Application Laid-open No. Sho 58-210084 (Patent Reference 2) and Japanese Patent Application Laid-open No. Hei 07-90189 (Patent Reference 3).

In this synthesis method, the alkali metal salt of a diketopyrrolopyrrole compound is produced by carrying out a condensation reaction between two moles of an aromatic nitrile compound and one mole of a succinate diester at an elevated temperature of 80 to 110°C in an inert organic solvent, e.g., tert-amyl alcohol, in the presence of a strongly basic compound in the form of an alkali metal or alkali metal alkoxide; this diketopyrrolopyrrole compound alkali metal salt is then protonated using water, an alcohol, or an acid, thereby precipitating crystals of the diketopyrrolopyrrole compound. The size of the obtained primary particle diameter can be controlled through the temperature during protonation and the type and proportion or quantity of the water, alcohol, or acid during protonation.

The method of using a plurality of nitrile compounds in the succinate ester synthesis method to obtain a mixture of a plurality of diketopyrrolopyrrole compounds is disclosed in Japanese Patent Application Laid-open No. Sho 61-120861 (Patent Reference 4). However, this reference makes no mention whatever with regard to the suitability for color filter service, nor does it provide information on the particle size.

As liquid crystal displays become more widely used as household televisions, liquid crystal display quality is

rising and as a consequence the quality demands on the pigments that are the main material constituting color filters have substantially increased with regard to both degree and variety. For example, a high contrast ratio is required in order to realize color reproduction over a wide range; a visibility is required such that the hue does not change regardless of the viewing angle; a high brightness is required in order to lower the power consumption as the size increases; and a hue is required that is stabilized in a very narrow range. The demands for improvement from a quality standpoint are thus quite severe.

Color filter excellence has in recent years been discussed with a focus on the contrast ratio, and manufacturers have engaged in a competitive development targeted to boosting the contrast. In addition, in order to respond to demands for a higher contrast, pigment producers have focused on the development of production technology that will provide very small primary particles and a narrower primary particle size distribution.

However, while higher contrast ratios are obtained as the primary particle diameter is made ever smaller, the processing robustness with respect to the color filter production sequence frequently also deteriorates. Specifically, the production of foreign material on the pixels with a reduction in manufacturing yield has been a problem when a radiation-sensitive pigment composition containing finely divided C.I. Pigment Red 254 is used for processing into a red color filter. It has thus been necessary to make a trade-off between inhibition of the generation of foreign material and boosting the contrast through microfine-sized primary particles.

In view of these circumstances, there is strong demand for the development of a pigment composition for a color filter that can form a red pixel, wherein the pigment composition provides a sufficiently high contrast ratio while providing a satisfactorily low level of foreign material production on the pixel.

Patent Reference 1: Japanese Patent Application Laid-open No. 2001-220520
Patent Reference 2: Japanese Patent Application Laid-open No. Sho 58-210084
Patent Reference 3: Japanese Patent Application Laid-open No. Hei 07-90189
Patent Reference 4: Japanese Patent Application Laid-open No. Sho 61-120861

## DISCLOSURE OF THE INVENTION

An object of the present invention is to provide a microfine-sized red pigment composition that, when applied to color filters, has a high contrast ratio and can inhibit the generation of foreign material during heating steps and can thereby eliminate defects. Additional objects of the present invention are to provide a red color composition that uses this pigment composition and a red film that uses this pigment composition. A method of producing this pigment composition is also described herein.

The present invention relates to a diketopyrrolopyrrole pigment composition. As a result of continuing investigations directed to solving the previously described problems, the present inventors discovered that a diketopyrrolopyrrole pigment composition having microfine-sized primary particles is obtained by the use of at least two or more benzonitrile compounds and by performing a suitable conditioning.

The present inventors also discovered that the application of this pigment composition to color filters provides a high contrast ratio and at the same time provides an inhibition of the production of foreign material during thermal processing. In particular, it was discovered that the combination of cyanobiphenyl and/or naphthonitrile with 4-chlorobenzonitrile - which is a starting material for the C.I. Pigment Red 254 frequently used in color filter applications - yields very substantial effects and itself avoids any loss of the excellent color tone of C.I. Pigment Red 254 while yielding a color filter that has a very high contrast ratio and that exhibits an inhibition of foreign material production.

[1] A diketopyrrolopyrrole pigment composition, containing at least diketopyrrolopyrrole compounds represented by the following general formulas (I) and (II),
wherein in formulas (I) and (II),

(I)

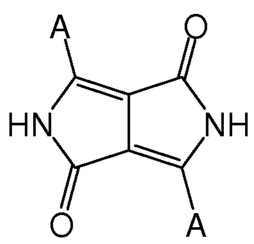

(II)

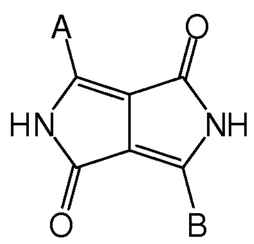

(B-1) (B-2) (B-3)

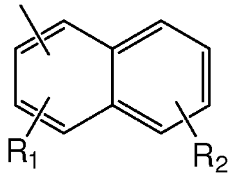
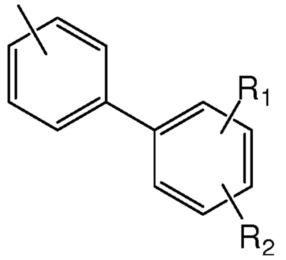
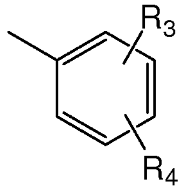

A is a 4-chlorophenyl group;
B is a group represented by the formula (B-1), (B-2), or (B-3);
$R_1$ and $R_2$ in formulas (B-1) and (B-2) are each independently hydrogen, halogen, $C_{1-6}$ alkyl, $C_{1-18}$ alkoxy, $C_{2-19}$ alkoxycarbonyl, $C_{2-19}$ alkylcarbamoyl, $C_{1-18}$ alkylmercapto, $C_{1-18}$ alkylamino, or $C_{5-6}$ cycloalkyl; and
$R_3$ and $R_4$ in formula (B-3) are each independently hydrogen or $C_{1-6}$ alkyl, wherein $R_3$ and $R_4$ are not both hydrogen,

wherein the diketopyrrolopyrrole type pigment composition has an average primary particle diameter of not more than 40 nm,
with the proviso that the diketopyrrolopyrrole type pigment composition does not have a median particle size $d_{50}$ in the range from 10 to 60 nm when it comprises a compound of the following formula

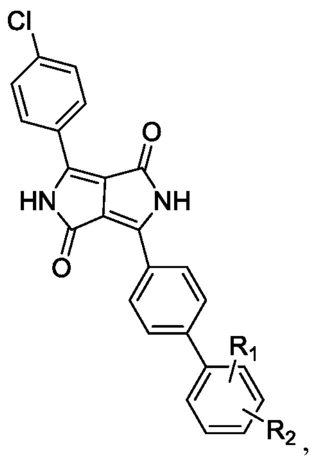

wherein $R_1$ and $R_2$ are each independently hydrogen, F, Cl, Br, $C_{1-6}$ alkyl, $C_{1-8}$ alkoxy, or $C_{5-6}$ cycloalkyl.
[2] The diketopyrrolopyrrole pigment composition according to the aforementioned [1], that contains at least one diketopyrrolopyrrole compound represented by the following formula (II-1) or (II-2)

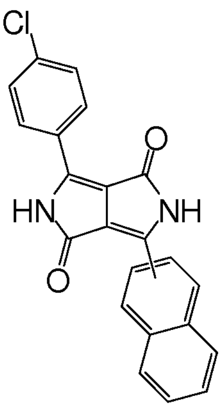
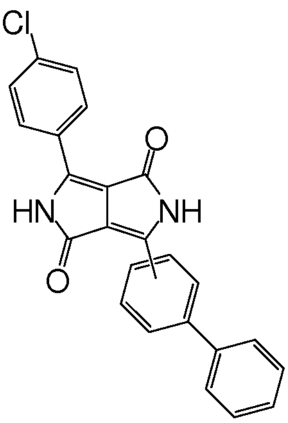

(II-1) (II-2)

with the proviso that the diketopyrrolopyrrole type pigment composition does not have a median particle size $d_{50}$ in the range from 10 to 60 nm when it comprises a compound of formula (II-2) having the formula (II-6)

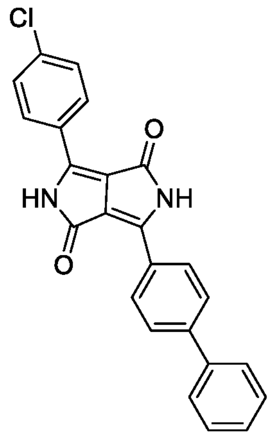

(II-6).

[3] The diketopyrrolopyrrole pigment composition according to the aforementioned [1], that contains at least one diketopyrrolopyrrole compound represented by the following formula (II-3) or (II-4)

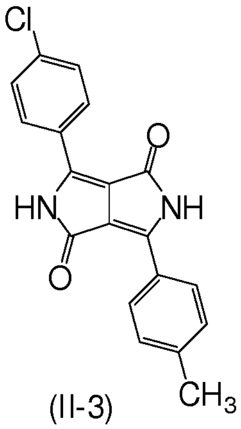

(II-3)

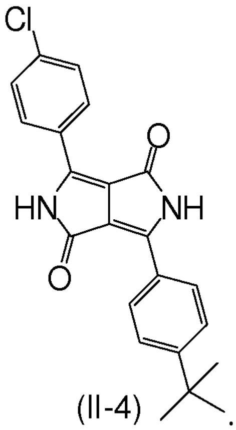

(II-4) .

[4] The diketopyrrolopyrrole pigment composition according to the aforementioned [1], that contains at least one diketopyrrolopyrrole compound represented by the following formula (II-5) or (II-6)

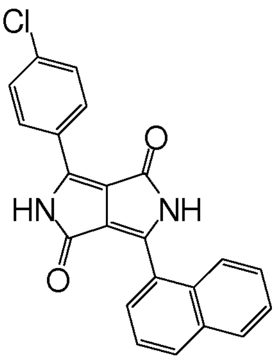

(II-5)

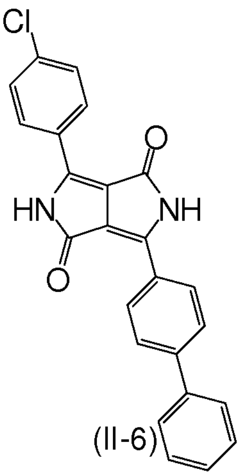

(II-6) ,

with the proviso that the diketopyrrolopyrrole type pigment composition does not have a median particle size $d_{50}$ in the range from 10 to 60 nm when it comprises the compound (II-6).

[5] The diketopyrrolopyrrole pigment composition according to any one of the aforementioned [1] to [4], that is obtained by comprising the step of reacting, with one mole of a succinate diester, a mixture of a total of two moles comprising 60 mol% to 99.8 mol% of a benzonitrile compound represented by the formula "A-CN" and 0.2 mol% to 40 mol% of a benzonitrile compound represented by the formula "B-CN".

[6] The diketopyrrolopyrrole pigment composition according to any one of the aforementioned [1] to [5], that is obtained by a method comprising the steps of:

reacting a succinate diester with a mixture of benzonitrile compounds represented by formulas "A-CN" and "B-CN" to obtain an alkali metal salt of diketopyrrolopyrrole pigments and protonating the alkali metal salt; and further adding, prior to the protonation, a diketopyrrolopyrrole compound represented by the formula (II).

[7] The diketopyrrolopyrrole pigment composition according to any one of the aforementioned [1] to [5], that is obtained by a method comprising the step of reacting a succinate diester with a mixture of benzonitrile compounds represented by formulas "A-CN" and "B-CN" to obtain an alkali metal salt of diketopyrrolopyrrole pigments and protonating the alkali metal salt under acidic or basic conditions.

[8] The diketopyrrolopyrrole pigment composition according to any one of the aforementioned [1] to [7], that contains a dye derivative represented by the general formula "Q-X",

wherein in the general formula "Q-X",

Q is a quinacridone residue, diketopyrrolopyrrole residue, benzoisoindole residue, anthraquinone residue, dianthraquinone residue, thiazineindigo residue, azo dye residue, or quinophthalone residue;

each X is independently -OH, $-SO_3H$, -COOH, or a monovalent to trivalent metal salt, alkylamine salt, piperazinyl salt, or morpholinyl salt of these acidic groups; or a phthalimidomethyl group; or a group in which a triazine ring bearing a tertiary amino group-containing basic group is bonded on one side of -NH-; or a group represented by the following formula (a), (b), (c), (d), (e), (f), (g), or (h);

each $T_1$ is independently $-SO_2NH-$, -CONH-, $-CH_2NHCOCH_2-$, -S-, or -NH-;

each $T_2$ is independently $C_{1-4}$ alkylene; and

$R_1$ and $R_2$ are each independently $C_{1-4}$ alkyl, and $R_3$ is -H, $-NH_2$, $-NHCOCH_3$, or $-NHR_4$, wherein $R_4$ is $C_{1-4}$ alkyl or a triazine ring bearing a tertiary amino group-containing basic group.

(a)

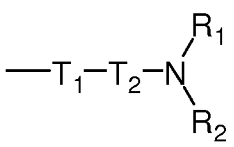

(b)

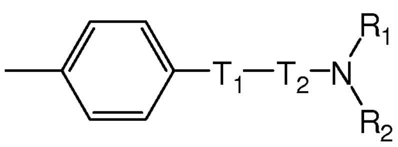

(c)

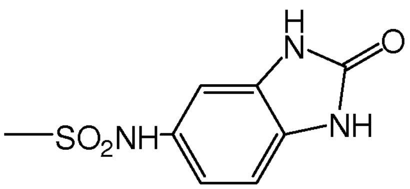

(d)

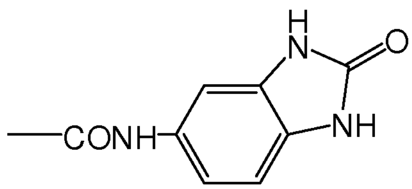

(e)

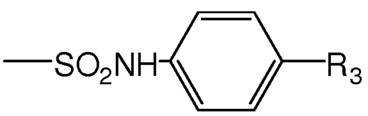

(f)

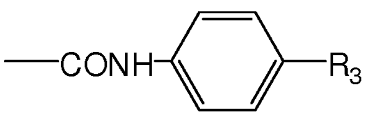

(g)

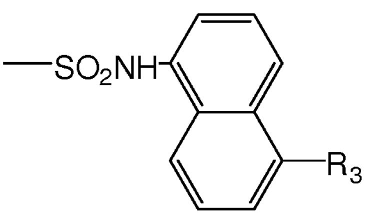

(h)

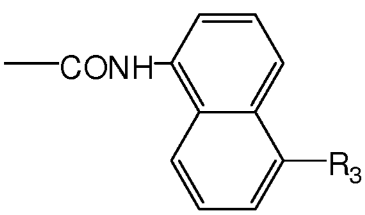

[9] An organic polymer material, that is colored by the diketopyrrolopyrrole pigment composition according to any

one of the aforementioned [1] to [8].

[10] A color composition for a color filter, that is obtained by dispersing the diketopyrrolopyrrole pigment composition according to any one of the aforementioned [1] to [8] in a transparent resin.

[11] A red film, comprising a pigment vehicle and the diketopyrrolopyrrole pigment composition according to any one of the aforementioned [1] to [8].

A red color filter is thereby obtained that has a high contrast ratio and that is free of the production of foreign material during heating steps.

## BRIEF DESCRIPTION OF THE DRAWINGS

Figure 1 is the relationship between the amount of heteroDPP production and the amount of 4-cyanobiphenyl addition.

## BEST MODE FOR CARRYING OUT THE INVENTION

As a result of various investigations, the present inventors discovered that a diketopyrrolopyrrole pigment composition produced by a cyclization reaction between a succinate diester and at least two benzonitrile compounds, when applied to color filters, has a high contrast ratio while exhibiting a surprising inhibition of the generation of foreign material during heating episodes. Accordingly, a red pigment composition can be provided that has a high contrast ratio and that is microfine sized and that can produce a color filter in which the generation of foreign material during heating steps is inhibited and defects are thereby eliminated. A red composition and a red film that use this red pigment composition can also be provided. A method of producing this pigment composition is also disclosed herein.

The diketopyrrolopyrrole pigment composition of the present invention can be produced, for example, by the following two steps: a step (referred to as the first step) in which crude diketopyrrolopyrrole pigment crystals of microfine-sized and uniform primary particles are synthesized, and a step (referred to as the second step) in which the crystal form is controlled while the growth of the crude crystals of the diketopyrrolopyrrole pigment is inhibited. The "crude crystal" terminology used for the first step does not refer to crystals for which the primary particle diameter and/or its particle size distribution is coarse, but rather refers to crystals that have yet to go through the second step and undergo control of the crystal form.

Specifically, in the first step, crude diketopyrrolopyrrole pigment crystals of microfine-sized and uniform primary particles can be produced by reacting a succinate diester and benzonitrile compounds, for example, at elevated temperature in the presence of a strongly basic compound in an inert organic solvent, to produce an alkali metal salt of the diketopyrrolopyrrole pigments and then adding the obtained diketopyrrolopyrrole pigment alkali metal salt to a stirred protonation medium (medium that protonates the alkali metal salt).

In the second step, control of the crystal form of the diketopyrrolopyrrole pigment is performed by subjecting the crude diketopyrrolopyrrole pigment crystals obtained in the first step, for example, to a mixing/stirring treatment at low temperature in a medium containing 80 to 100 weight% alcohol and 20 to 0 weight% water. The first step and the second step are described in additional detail herebelow.

### The first step

As previously described, the first step is a step in which crude diketopyrrolopyrrole pigment crystals of microfine-sized and uniform primary particles are synthesized. The first step is carried out based on the succinate ester production method described in Japanese Patent Application Laid-open No. Sho 58-210084 (the previously cited Patent Reference 2). The conditions for protonating the diketopyrrolopyrrole pigment alkali metal salt are particularly important, and these protonating conditions can be exemplified by the composition of the medium that performs protonation, the method of mixing the protonation medium with the solution of diketopyrrolopyrrole pigment alkali metal salt when protonation is performed, the regime for adding this alkali metal salt solution, the temperature of the medium, and the stirring conditions or stirring regime. These protonation conditions are described in detail below.

In the synthesis in the first step of crude diketopyrrolopyrrole pigment crystals based on the succinate ester production method, the alkali metal salt of the diketopyrrolopyrrole pigment is first produced by reacting two moles of the prescribed benzonitrile compounds with one mole succinate diester at elevated temperature in an inert organic solvent in the presence of a strongly basic compound (for example, an alkali metal alkoxide). Then, the diketopyrrolopyrrole pigment alkali metal salt is protonated and crude crystals of the diketopyrrolopyrrole pigment are precipitated by adding the obtained alkali metal salt solution in small portions - while holding the solution of the diketopyrrolopyrrole pigment alkali metal salt at 70 to 100°C - to a protonation medium (for example, a $C_{1-3}$ alcohol, water, an acid, or their mixture) that is being stirred so that the alkali metal salt undergoes immediate dispersion upon addition; this addition is

performed so as to maintain the temperature of the alkali metal salt solution + protonation medium mixture at not more than 10°C.

The reaction ratio between the succinate diester and benzonitrile compound is basically two moles of the benzonitrile compound per one mole of the succinate diester; however, the use of one reactant in about a 10 to 20 mol% excess is effective for raising the yield.

The succinate diester

The succinate diester used as a starting compound in the first step can be exemplified by the dialkyl esters of succinic acid, the diaryl esters of succinic acid, and the monoalkyl monoaryl esters of succinic acid. Representative examples of these succinate esters are dimethyl succinate, diethyl succinate, dipropyl succinate, diisopropyl succinate, diisobutyl succinate, di-tert-butyl succinate, dipentyl succinate, di-tert-amyl succinate, diphenyl succinate and di-4-chlorophenyl succinate. Symmetric diesters are preferred over asymmetric diesters, and branched alkyl is preferred for the alkyl group. Examples of preferred branched alkyl are $C_{3-5}$ branched alkyl such as isopropyl, isobutyl, tert-butyl and tert-amyl.

Cosynthesis and the type of benzonitrile compound

The benzonitrile compounds used as starting compounds for the pigment composition of the present invention consist of the benzonitrile compound represented by the formula "A-CN" (i.e., 4-chlorobenzonitrile) plus a benzonitrile compound represented by the formula "B-CN". The B group in the benzonitrile compound represented by the formula "B-CN" is a group represented by the formula (B-1), (B-2), or (B-3).

Optionally substituted cyanobiphenyl, naphthonitrile, and benzonitrile are preferred as the benzonitrile compound represented by the formula "B-CN" for the pigment composition of the present invention. The substituted benzonitrile compound can be exemplified by methylbenzonitrile, ethylbenzonitrile, propylbenzonitrile, n-butylbenzonitrile, isobutylbenzonitrile, tert-butylbenzonitrile, pentylbenzonitrile, tert-amylbenzonitrile, hexylbenzonitrile, tert-hexylbenzonitrile, 2-cyanobiphenyl, 3-cyanobiphenyl, 4-cyanobiphenyl, 4-cyano-4'-methylbiphenyl, 1-naphthonitrile, and 2-naphthonitrile. There are no limitations on the position of cyano group substitution in these compounds. 4-cyanobiphenyl, 1-naphthonitrile, 4-methylbenzonitrile, and 4-tert-butylbenzonitrile are particularly preferred for the benzonitrile compound represented by the formula "B-CN". When these are used, an excellent hue as a red color filter and an excellent inhibition of foreign material production are obtained, and they are therefore strongly preferred for the color filter pigment.

The pigment composition of the present invention can be produced according to the succinate ester synthesis method by reacting, per one mole of the succinate diester, a mixture of a total of two moles comprising 50 to 99.8 mol% 4-chlorobenzonitrile represented by the formula "A-CN" and 0.2 to 50 mol% benzonitrile compound represented by the formula "B-CN". Production is more preferably carried out by reacting, per one mole of the succinate diester, a mixture of a total of two moles comprising 55 to 99.8 mol% 4-chlorobenzonitrile represented by the formula "A-CN" and 0.2 to 45 mol% benzonitrile compound represented by the formula "B-CN". Production is even more preferably carried out by reacting, per one mole of the succinate diester, a mixture of a total of two moles comprising 60 to 99.8 mol% 4-chlorobenzonitrile represented by the formula "A-CN" and 0.2 to 40 mol% benzonitrile compound represented by the formula "B-CN".

The proportion in the mixture of the benzonitrile compound represented by the formula "B-CN" is particularly preferably 1 to 30 mol%, which is a range in which there is no loss of the excellent color of the diketopyrrolopyrrole pigment with formula (I) and also no reduction in the inhibition of foreign material.

When the proportion in the mixture of the benzonitrile compound represented by the formula "B-CN" exceeds 50 mol%, a foreign material inhibiting activity is often not obtained and the hue of the pigment composition as a whole and its pigment characteristics will end up being different from those of the diketopyrrolopyrrole pigment represented by the previously given general formula (I). On the other hand, the effects provided by the presence of the benzonitrile compound represented by the formula "B-CN" are inadequate when its proportion in the mixture is less than 0.2 mol%.

However, as is made clear, for example, from Example 28, even at a high proportion in the mixture of the benzonitrile compound represented by the formula "B-CN" (for example, above 50 mol%), the desired effects can be obtained by the subsequent addition of a compound represented by formula (I) in order to lower the content of the compound represented by formula (II) that is obtained from the benzonitrile compound represented by the formula "B-CN".

The compound represented by the previously described formula (II) is approximately proportional to the quantity of addition of the benzonitrile compound represented by the formula "B-CN". For example, when 4-cyanobiphenyl is used for the benzonitrile compound represented by the formula "B-CN", 3-(4-biphenylyl)-6-(4-chlorophenyl)-pyrrolo[3,4-c]pyrrole-1,4(2H,5H)-dione is produced as the compound represented by formula (II), and the relationship between its amount of production and the amount of 4-cyanobiphenyl addition is shown in Figure 1. Thus, the addition of 5 mol% 4-cyanobiphenyl results in the production of approximately 5 weight% 3-(4-biphenylyl)-6-(4-chlorophenyl)-pyrrolo[3,4-c]pyrrole-1,4(2H,5H)-dione.

The proportions of the diketopyrrolopyrrole compounds represented by general formulas (I) and (II) in the pigment composition or color composition of the present invention can be analyzed by recovering the pigment fraction and analyzing this using TOFF-MASS, FD-MASS, or solid-state NMR. Or, as disclosed in Japanese Patent Application Laid-open No. Hei 08-199085, the diketopyrrolopyrrole pigment may be converted to the soluble diketopyrrolopyrrole compound obtained by stirring with di-tert-butyl dicarbonate and 4-dimethylaminopyridine in tetrahydrofuran at room temperature, after which analysis may be performed using NMR, MASS, or LC-MASS. Or, these analyses may be performed after conversion into the soluble diketopyrrolopyrrole by converting the hydrogen on the NH group in the pyrrolopyrrole ring to an alkyl group using, for example, an alkyl halide.

The pigment composition of the present invention may contain the diketopyrrolopyrrole compound produced when two moles of the benzonitrile compound represented by the formula "B-CN" react with one mole of the succinate diester (i.e., a compound in which two B groups are substituted on the pyrrolopyrrole ring).

The benzonitrile compound represented by the formula "B-CN" and the benzonitrile compound represented by the formula "A-CN" (4-chlorobenzonitrile) may be used in the condensation reaction in the succinate ester synthesis method in the form of a mixture provided by mixing in advance. Alternatively, a two-step addition method may be used in which first 4-chlorobenzonitrile is added and a condensation reaction is run and the benzonitrile compound represented by "B-CN" is then added and a condensation reaction is run. In order to produce the diketopyrrolopyrrole compound represented by formula (II) more efficiently, preferably a mixture of the two compounds is prepared in advance and this is used for the condensation reaction.

The inert organic solvent

The first step's cyclization reaction that synthesizes the crude diketopyrrolopyrrole pigment crystals is run in an inert organic solvent. Suitable inert organic solvents are, for example, $C_{1-10}$ primary to tertiary alcohols, glycols, ethers, glycol ethers, aprotic polar solvents, aliphatic or aromatic hydrocarbons, and aromatic heterocyclic compounds. Secondary and tertiary alcohols are preferred, and isobutanol, tert-butanol and tert-amyl alcohol are most preferred. Mixtures of these alcohols with an aromatic hydrocarbon such as toluene may also be used.

The quantity of the inert organic solvent used should be sufficient to dissolve the starting materials used for the cyclization reaction and provide a uniform stirring regime, and the inert organic solvent is preferably used at 2X to 15X by weight with reference to the benzonitrile compound. When the inert organic solvent is used at less than 2X by weight, the starting materials do not undergo complete dissolution and the reaction does not proceed satisfactorily. When, on the other hand, 10X by weight is exceeded, the opportunity for contact between the succinate diester and benzonitrile compound is reduced due to the low reactant concentration and as a result the yield will tend to decline.

When an alcohol is used as the inert organic solvent, the use of a succinate diester and alkali metal alkoxide (strongly basic compound) that have the same alkyl chain as the alcohol is preferred from the standpoint of organic solvent recoverability and improving the yield. The combination of the tert-amyl-containing di-tert-amyl succinate, sodium tert-amylate, and tert-amyl alcohol is particularly preferred.

The strongly basic compound

The strongly basic compound can be exemplified by an alkali metal as such, alkali metal amides, alkali metal hydroxides, alkali metal or alkaline-earth metal alkoxides (alcoholates), and alkali metal alkoxides are preferred. The alkali metal alkoxide used as the strongly basic compound may be synthesized *in situ* or may be a commercially available product. The alkoxides derived from sodium or potassium and secondary or tertiary alcohols are preferred for the alkali metal alkoxide. Alkoxides derived from primary alcohols are disfavored because their strong basicity facilitates the occurrence of secondary reactions. Sodium isopropylate, sodium isobutylate, sodium tert-butylate, and sodium tert-amylate are particularly preferred alkali metal alkoxides.

In the case of *in situ* synthesis, synthesis can be carried out by dissolving, with heating to at least 100°C, an alkali metal such as sodium in an alcohol used at 10X to 20X by weight with respect to the sodium and then vigorously stirring for an extended period of time to effect complete dissolution of the sodium. The alkali metal alkoxide is used at from 1X to 4X, preferably at 1.5X to 2X on a molar basis with respect to the succinate diester.

The cyclization reaction conditions

The cyclization reaction in the first step, which results in synthesis of the diketopyrrolopyrrole pigment, is run by dissolving the succinate diester, benzonitrile compounds, and strongly basic compound (for example, an alkali metal alkoxide) in an inert organic solvent and heating and stirring for several hours under ambient pressure or moderately elevated pressure (< 0.2 MPa) at an elevated temperature of 70 to 120°C and preferably 80 to 105°C.

In a preferred method of reactant addition here, a mixture prepared by heating and dissolving the succinate diester and benzonitrile compounds in the inert organic solvent is added dropwise in small portions to inert organic solvent in which the alkali metal alkoxide has been dissolved by heating. The heating/dissolution temperature is preferably in the range of 80 to 105°C for both solutions. While the hot dissolution mixture prepared by heating and dissolving the succinate diester and benzonitrile compounds in the inert organic solvent, is added dropwise to the solution prepared by the hot dissolution of the alkali metal alkoxide in the inert organic solvent, this dropwise addition is preferably carried out gradually at a constant rate over 1 to 2 hours. In order to avoid secondary reactions, dropwise addition is preferably carried out with vigorous stirring. Once addition has been completed, the cyclization reaction is brought to completion by continuing to heat and stir, for example, for an additional 1 to 5 hours at 80 to 100°C.

In addition, it is also effective to carry out the dropwise addition of only the succinate diester after the hot dissolution of the benzonitrile compounds and metal alkoxide in the organic solvent. In this case also, the dropwise addition is preferably carried out gradually over 1 to 2 hours, and stirring and heating are carried out for 1 to 5 hours after the completion of addition.

It is critical that the inert organic solvent, succinate diester, benzonitrile compound, and strongly basic compound (for example, alkali metal alkoxide) used in the reaction be free of moisture to the greatest extent possible. When moisture is present at 0.2 weight% or more, decomposition of the benzonitrile compounds and the produced diketopyrrolopyrrole pigment is induced by the strongly basic compound that is produced, e.g., sodium hydroxide, and the yield of the diketopyrrolopyrrole pigment is then reduced.

Protolysis and crude crystal recovery

The cyclization reaction yields the alkali metal salt of a diketopyrrolopyrrole pigment produced by the reaction of two moles benzonitrile compound with one mole succinate diester. After the cyclization reaction, the diketopyrrolopyrrole pigment alkali metal salt is in a dissolved form or a precipitate-containing suspension form at 70 to 100°C. When a proton-containing medium, e.g., water, an alcohol, or an acid, is brought into contact with the diketopyrrolopyrrole pigment alkali metal salt at 70°C to 100°C in a stable dissolved or suspension form, protonation of the alkali metal salt occurs and diketopyrrolopyrrole pigment crystals precipitate.

With regard to the temperature of the diketopyrrolopyrrole pigment alkali metal salt at the time of contact with the proton-containing medium, lower temperatures can inhibit product decomposition and enable the maintenance of a lower temperature after contact with the proton-containing medium (maintenance at not more than 10°C is preferred) and as a consequence 70 to 80°C is preferred. At below 60°C, the product and alkali metal salt are prone to precipitation and conversion to the solid state and product recovery is made difficult; also, after conversion to the solid state has occurred, uniform and microfine-size particles cannot be obtained even upon contact with the proton-containing medium.

The protonation step is called protolysis. Protonation is generally performed by thoroughly mixing the diketopyrrolopyrrole pigment alkali metal salt and protonation medium, e.g., water, alcohol, or acid, under strong stirring.

The objective of the first step is the synthesis of crude crystals of a diketopyrrolopyrrole pigment that has microfine-sized and uniform primary particles. The crystal form in the first step is not particularly limited, while the size and uniformity of the primary particles is crucial. Since the conditions during protonation of the diketopyrrolopyrrole pigment alkali metal salt exert a very substantial influence on the size and uniformity of the primary particles, the protonation conditions, i.e., the composition of the medium that performs protonation, the method of adding the diketopyrrolopyrrole pigment alkali metal salt solution to the protonation medium, the temperature of the medium, and the medium stirring conditions will be specified in detail.

A $C_{1-3}$ alcohol and/or water and/or acid is used as the protonation medium. This $C_{1-3}$ alcohol is methanol, ethanol, n-propanol, or isopropanol, and it plays the role of a compatibilizing agent that brings about compatibility between water and the inert organic solvent used in the cyclization reaction. The alcohol and water are used in an alcohol:water weight ratio range of 50:50 to 0:100. Relatively less alcohol is preferred because this promotes crystal growth.

The acid refers to acids in a broad sense and also includes acidic substances, and can be specifically exemplified by acids such as hydrochloric acid, sulfuric acid, acetic acid, formic acid, phosphoric acid and nitric acid, and by acidic substances such as acid salts, e.g., sodium bisulfite and potassium bisulfite, and normal salts that exhibit acidity such as ammonium chloride, aluminum sulfate and ammonium sulfate. The acid functions to speed up the protonation rate.

The acid is preferably used in an amount larger than the quantity that completely neutralizes the strongly basic compound, e.g., the alkali metal alkoxide, used in the reaction. In general, acid corresponding to 1.2X to 5X on a molar basis per one mole of the alkali metal alkoxide is used. The pH from the start to finish of protonation is preferably controlled to 10 or less and is more preferably maintained in the acidic region of $1 < pH < 7$.

The quantity of the protonation medium comprising, for example, a mixture of alcohol, water, and acid, must be a quantity that enables the maintenance of a viscosity sufficiently low that the suspension in which the diketopyrrolopyrrole pigment is precipitated can be strongly stirred, and the protonation medium is used at 3X to 10X by weight with reference to the inert organic solvent used in the cyclization reaction.

Protonation of the diketopyrrolopyrrole pigment alkali metal salt is run by adding the solution of the diketopyrrolopyrrole pigment alkali metal salt to the protonation medium. Conversely, when the protonation medium is added to the reaction solution of the diketopyrrolopyrrole pigment alkali metal salt, the diketopyrrolopyrrole pigment precipitates locally in correspondence to the dropwise addition and crystal growth occurs at the time of dropwise addition; as a consequence, size nonuniformity is prone to occur and an excellent fitness for color filter applications is then no longer obtained. In addition, the viscosity of the suspension undergoes a substantial increase due to the localized precipitation of the diketopyrrolopyrrole pigment and the stirring conditions are then prone to deteriorate and substantial nonuniformity will readily appear in the obtained particles. Due to this, the addition of the diketopyrrolopyrrole pigment alkali metal salt to the protonation medium is preferred because it provides finely divided particles of uniform size.

The rate of addition of the diketopyrrolopyrrole pigment alkali metal salt to the protonation medium is basically addition in small portions. The protonation temperature is desirably maintained in a low and constant range by adjusting the addition rate. The target for the addition time is 15 minutes to 4 hours. Rapid addition leads to a deterioration in the capacity to effect an immediate dispersion and large primary particles will be prone to occur as a result. In addition, since the diketopyrrolopyrrole pigment alkali metal salt being added resides in a state of hot dissolution at 70°C or more, the temperature of the suspension that is performing protonation (the protonation medium) will be prone to rise, and addition in small portions is therefore also preferred in order to maintain the suspension at a low and constant temperature. When, on the other hand, a very long addition time is used, the already precipitated crude diketopyrrolopyrrole pigment crystals will undergo gradual crystal growth even at the low temperature, making very long addition times unfavorable from the standpoint of primary particle uniformity. The most favorable addition time, while depending on the stirring regime and cooling capacity, is in the range from 30 minutes to 2 hours.

The temperature of the protonation medium during addition of the diketopyrrolopyrrole pigment alkali metal salt to the protonation medium is preferably maintained, from the start to finish of protonation, at 10°C or below and more preferably at 5°C or below. When protonation is performed at a temperature above 10°C, the primary particles tend to become large and the contrast ratio in color filter service declines. The temperature of the protonation medium is preferably held at 0°C or below. Since the diketopyrrolopyrrole pigment alkali metal salt being added to the protonation medium resides at an elevated temperature of 70 to 100°C, an increase in the temperature can quite easily occur and it will be necessary to provide sufficient cooling capacity to maintain the low temperature. The use of large amounts of ice is effective for maintaining a low temperature and at the same time for maintaining a constant or prescribed temperature range.

Addition of the diketopyrrolopyrrole pigment alkali metal salt to the protonation medium is carried out by adding the diketopyrrolopyrrole pigment alkali metal salt to the stirred protonation medium. This stirred condition for the protonation medium refers to a stirring sufficiently strong to immediately disperse the diketopyrrolopyrrole pigment alkali metal salt, i.e., refers to a strong stirring regime that disperses the added diketopyrrolopyrrole pigment alkali metal salt to uniformity in several seconds, and a high shear force stirring regime is preferred. In specific terms, and expressing the stirring rate as the peripheral velocity, the stirring rate is at least 2 m/second, preferably 5 to 50 m/second, and particularly preferably 10 m to 50 m/second.

The stirring rate, while also depending on the size of the stirring blades, is preferably at least 100 rpm. A great variety of stirring blades can be used for stirring, e.g., shaft types, anchor types, propeller types, plate shapes or two-stage types. In addition, MAXBLEND blades, which have an excellent stirring efficiency, are also effective. The stirring apparatus can be exemplified by the stirring devices having stirring rates of about 0 to 300 rpm as used for the usual chemical reactions and by high-speed stirrers that go up to several thousand rpm, such as dissolvers, high-speed mixers, and homomixers. The use of a 100 to 300 rpm stirring device in combination with high-speed dissolver type stirring is very effective because this provides stirring of the entire mass while also providing localized high-speed stirring at the location of diketopyrrolopyrrole pigment alkali metal salt addition.

Protonation of the diketopyrrolopyrrole pigment alkali metal salt in the first step may also be performed using a stirring regime in which the protonation medium is circulated using a water-jet aspirator or a water-jet injector. The use of a water-jet aspirator or water-jet injector makes it possible to obtain crude diketopyrrolopyrrole pigment crystals that have a more finely divided and uniform size, and a high-quality pigment for color filter service can be obtained upon execution of the solvent processing step in the second step, vide infra.

In the case of the circulation of the protonation medium using a water-jet aspirator or water-jet injector, the protonation medium can be preliminarily prepared and introduced into a tank and can then be sent by a powerful pump to the water-jet aspirator or water-jet injector, thereby generating a high-speed flow of the protonation medium and applying a high shear force at the instant the diketopyrrolopyrrole pigment alkali metal salt comes into contact with the protonation medium.

When a water-jet aspirator or water-jet injector is used, the diketopyrrolopyrrole pigment alkali metal salt can be added in small portions by passage through a narrow tube into the high-speed protonation medium flowing through the conduit or tube at a pressure of 0.05 to 0.6 MPa, and crude crystals of a very finely divided diketopyrrolopyrrole pigment can be obtained due to the action of the jet-induced high shear force at the instant of contact with the protonation

medium of alcohol, water, and/or acid. In addition, crude crystals of diketopyrrolopyrrole pigment of uniform size can be obtained because protonation can be performed at a constant temperature and constant pressure from start to finish.

With regard to water-jet injectors, a glass injector can be purchased from the Asahi Group. An injector produces low pressure by means of a water flow using a structure resembling that of an aspirator, but has a fairly large diameter. While the protonation medium is being forcibly circulated at high velocity with a pump, the diketopyrrolopyrrole pigment alkali metal salt can be added in small portions through the injector into the high-velocity flow of the medium, and, as for the water-jet aspirator, microfine-sized crude crystals of uniform size can be obtained by the stable operation of high shear forces.

An acid or acidic substance is not particularly required when protonation is performed using a water-jet aspirator or water-jet injector. Crude crystals of a diketopyrrolopyrrole pigment of microfine-sized and uniform primary particles can be obtained even without the use of an acid or acidic substance. However, the effects of the acid or acidic substance can provide crude crystals of a diketopyrrolopyrrole pigment with even more finely divided primary particles, and for this reason the addition of acid or an acidic substance is more preferred even when protonation is carried out using a water-jet aspirator or water-jet injector.

The pH from the start to finish of protonation is preferably controlled to 10 or less by the addition of acid or an acidic substance and is more preferably maintained in the acidic range of $1 < pH < 7$. The temperature during protonation using a water-jet aspirator or water-jet injector is preferably not more than 5°C and more preferably not more than 0°C because this makes it possible to obtain crude crystals of a diketopyrrolopyrrole pigment of microfine-sized and uniform primary articles.

Once protonation of the diketopyrrolopyrrole pigment alkali metal salt has been carried out, a red suspension containing the diketopyrrolopyrrole pigment is produced. Almost all of the protonation medium used in the first step must be removed since a heating/stirring treatment is carried out in the second step in a crystal transition-supporting organic solvent.

In order to remove the protonation medium used in the first step, filtration is carried out using a filtration apparatus or separation apparatus such as a filter press, leaf filter, Nutsche filter, horizontal filter plate filtration apparatus or continuous centrifugal separator. Filtration can be effectively performed using the effect of an overpressure, reduced pressure, or centrifugal force. After the mother liquor has been filtered off, impurities are removed from the obtained diketopyrrolopyrrole pigment by washing with water and/or an organic solvent such as an alcohol. After filtration, the diketopyrrolopyrrole pigment is finally isolated as a water-based or organic solvent-based paste containing approximately 10 to 40 weight% of the pigment.

Protonation can be carried out in the production method under acidic conditions (acid-pasting method) or basic conditions (base-pasting method), and in either case the diketopyrrolopyrrole pigment composition can be obtained as a precipitate. Protonation under basic conditions is preferred. There are no particular limitations on the acid used in the acid-pasting method to bring about dissolution of the diketopyrrolopyrrole pigment composition, but sulfuric acid or phosphoric acid is preferably used. There are no particular limitations on the base used in the base-pasting method to bring about dissolution of the diketopyrrolopyrrole pigment composition, but sodium metal, sodium hydride, or an alcoholate is preferably used.

A high-speed stirrer or water-jet injector may be used during precipitation of the precipitate in the acid-pasting method or base-pasting method. There are no particular limitations on the precipitation solvent used to carry out either method, but a sufficient quantity of water, an aqueous methanol solution, or base is preferably used in the acid-pasting method, while a sufficient quantity of water, an aqueous methanol solution, acetic acid, hydrochloric acid, or sulfuric acid is preferably used in the base-pasting method.

The diketopyrrolopyrrole pigment paste obtained in the first step may be used as such to carry out the solvent processing of the second step, or the obtained paste may be used after processing into a powder form by drying and grinding. The paste is dried generally at a temperature of 50 to 90°C using a dryer such as a hot air dryer, paddle dryer or vacuum dryer. Grinding is carried out using a grinder such as a hammer mill, cutter mill or atomizer. A Micron dryer or spin flash dryer, which combine both drying and grinding, may also be used. In addition, when freeze drying is used, there is little drying-induced aggregation and a powder with a good dispersibility can be obtained. Viewed from the perspective of productivity and cost, it is more advantageous to use the paste directly rather than proceed through drying and grinding. Grinding using a grinder such as a hammer mill, cutter mill or atomizer, brings about conversion into a powder form by the mechanical grinding of pigment aggregated during drying and does not bring about microfine-sizing of the primary particles of the pigment.

While carrying out concentration and removal of the protonation medium, for example, using an ultrafiltration device, from the suspension formed in the first step and containing crude crystals of the diketopyrrolopyrrole pigment in the protonation medium, the new solvent that will be used for solvent processing in the second step may be added in an amount equal to that removed, in order to gradually convert to the composition for the solvent processing of the second step. Once the second step solvent composition that enables crystal transition to proceed has finally been achieved, the solvent processing of the second step may then also be performed. This method makes it possible to

successively carry out the first step and second step without proceeding through the filtration process and drying process and can thereby provide a highly efficient production method.

In those instances in which the crude diketopyrrolopyrrole pigment crystals obtained in the first step are filtered off, dried, and ground and then submitted to solvent processing, the suspension containing the crude diketopyrrolopyrrole pigment crystals may be treated with a resin or surfactant prior to drying in order to relax drying-induced aggregation.

The treatment with a resin is a treatment with, for example, rosin, an acrylic resin or a styrene-acrylic resin, and is carried out by dissolving the resin or adding an emulsion to the suspension containing the crude crystals of diketopyrrolopyrrole pigment.

The treatment with surfactant, like the resin treatment, is carried out by adding a solution or emulsion of the surfactant to the suspension containing the crude crystals of diketopyrrolopyrrole pigment. A cationic surfactant, anionic surfactant, or nonionic surfactant can be used as the surfactant.

There are no particular limitations on the crystal form of the crude crystals of diketopyrrolopyrrole pigment obtained in the first step. When the diketopyrrolopyrrole pigment is C.I. Pigment Red 254, the crystal form of the crude crystals yielded by the first step is frequently the β-form. However, the size and uniformity of the primary particles are more important than the particular crystal form of the crude crystals provided by the first step (in the case of C.I. Pigment Red 254, more important than whether the particular crystal form is the α-form, β-form, or an α-form/β-form mixed crystal).

The crude diketopyrrolopyrrole pigment crystals yielded by the first step, including the controlled protonation process, are microfine-sized primary particles with a diameter of 10 to 60 nm according to observation by the transmission electron microscope (TEM). In particular, when the diketopyrrolopyrrole pigment is C.I. Pigment Red 254, the size of the primary particles of diketopyrrolopyrrole crude crystals obtained in the first step is very fine with a diameter of 10 to 40 nm. Crude crystals with a diameter of 10 to 30 mm can be obtained when a water-jet aspirator or water-jet injector is used.

The second step

In the second step, the crude diketopyrrolopyrrole pigment crystals obtained in the first step are treated by mixing and stirring in an organic solvent that supports crystal transition and the crystal form is thereby controlled while the growth of the crude crystals is inhibited. The mixing/stirring treatment in the crystal transition-supporting organic solvent in the second step is carried out by dispersing the powder or water-based or organic solvent-based paste of crude diketopyrrolopyrrole pigment crystals obtained in the first step in a crystal transition-supporting organic solvent and stirring, for example, at a temperature of -15 to 100°C for 10 minutes to several tens of hours. The stirring is not particularly required to be high-speed stirring, but a condition is preferred in which the entire suspension is constantly moving. Stirring is generally performed at a stirring rate of about 100 to 300 rpm.

The crystal transition-supporting organic solvent

The organic solvent used in the second step is an organic solvent that can bring about the development of a crystal transition of the diketopyrrolopyrrole pigment. A $C_{1-4}$ alcohol is used. Specifically, a straight chain alcohol such as methanol, ethanol, n-propanol, or n-butanol, or a branched alcohol such as isopropyl alcohol, 2-butanol, or tert-butanol, or ethylene glycol or diethylene glycol, is used. These alcohols can be favorably used because of their low toxicity.

In this second step, the crude diketopyrrolopyrrole pigment crystals obtained in the first step are subjected to a mixing/stirring treatment in a medium that contains 80 to 100 weight% of the aforementioned alcohol and 20 to 0 weight% water. When the alcohol is less than 80 weight% of the medium, phenomena such as an incomplete crystal transition and a slow crystal transition rate are seen. While a plurality of the aforementioned alcohols may be present, the presence of fewer alcohols is preferred from the standpoint of solvent recycling.

The temperature for bringing about the crystal transition will vary with the alcohol used, but for the use of methanol or ethanol, because the crystal transition proceeds rapidly and the size of the particles also readily grows at the same time, a temperature in the range of -10 to 5°C is preferably maintained. On the other hand, because the rate of crystal transition is slow in a $C_3$ or $C_4$ alcohol such as isobutyl alcohol or tert-butyl alcohol, a temperature in the range of 10 to 20°C is preferably maintained. The quantity of use of the organic solvent that is used in the second step is not particularly limited, but 10X to 40X by weight with reference to the diketopyrrolopyrrole pigment is desirable.

The stirring treatment

Through combination with a bead mill such as a sand mill or Eiger mill, the stirring treatment in organic solvent, which adjusts the crystal form and regulates the particle size, may also be effectively carried out while milling and dispersing. In this case, crystal transition is promoted by the mechanical impact.

The beads used in the bead mill may be the finely divided beads, e.g., glass beads, steel beads, zirconia beads

or alumina beads, having diameters of 0.3 to 2 mm that are ordinarily used for pigment dispersion. The co-use of a bead mill does provide better properties, e.g., transparency, viscosity stability, dispersion stability or haze, than for treatment by stirring alone, but isolation during filtration is also more difficult.

Promotion of crystal transition by a basic substance or stable pigment

Crystal transition in the mixing/stirring treatment in organic solvent in the second step can be promoted by the addition of a small amount of a basic substance. However, the quantity of use and procedure for use can be problematic since substantial crystal growth occurs when a diketopyrrolopyrrole pigment is treated by heating and stirring under basic conditions.

Basic substances that can be added to the mixing/stirring treatment in organic solvent should dissolve in the crystal transition-supporting organic solvent but are not otherwise particularly limited. Examples are inorganic basic substances such as sodium hydroxide, potassium hydroxide, calcium hydroxide, barium hydroxide, sodium carbonate, sodium bicarbonate and ammonium carbonate; alkoxides such as sodium methylate, sodium ethylate, sodium tert-butylate and potassium tert-butylate; and amines such as ammonia, methylamine and dimethylaminopropylamine.

The quantity of addition for the basic substance is desirably not more than 25 mol% with reference to the diketopyrrolopyrrole pigment. While larger quantities of addition of the basic substance do provide a greater promotion of crystal transition, they also lead to faster crystal growth and thus work against the control of particle size.

When a basic substance has been added, it is desirable once crystal transition has been completed to adjust the pH to 7 or below by the addition of an acid such as hydrochloric acid, sulfuric acid or acetic acid. When standing is allowed to occur, or in the event of going into the ensuing filtration and purification steps at the basicity generated by the addition of the basic substance, crystal growth occurs during these steps and there is a risk that the quality of the resulting pigment will be impaired as a result. In addition, continuing to perform the mixing/stirring treatment in organic solvent after the return to acidity is effective for preventing a decline in crystal quality.

The crystal transition in the heating and stirring treatment of the second step can also be promoted by the fresh addition of a stable pigment. This method is a process that brings about crystal transition to the target crystal form by providing a templating effect through the addition of crystals that have the target crystal form. When the diketopyrrolopyrrole pigment is C.I. Pigment Red 254, a templating effect operates when α-form pigment is added and can raise the rate of crystal transition from the β-form to the α-form. The quantity of addition of the α-form pigment, expressed with reference to the crude crystals, is preferably 5 to 20 weight%. The crystal transition promoting effect is weak at below this range, while exceeding this range is disadvantageous for both cost and productivity.

Inhibition of crystal growth by a dye derivative

Particle growth and uniformity are also important in the second step. In addition, there is no particular limitation on the proportions of the diketopyrrolopyrrole pigment crystal forms obtained as a result (proportions for the individual crystal forms when a plurality of crystal forms are present). The stirring treatment in organic solvent is preferably performed in the second step in the presence of at least one dye derivative selected from the group consisting of quinacridone derivatives, diketopyrrolopyrrole derivatives, benzoisoindole derivatives, anthraquinone derivatives, dianthraquinone derivatives, thiazineindigo derivatives, azo dye derivatives, and quinophthalone derivatives.

Crystal growth is inhibited during solvent processing by the addition of at least one dye derivative selected from the group consisting of quinacridone derivatives, diketopyrrolopyrrole derivatives, benzoisoindole derivatives, anthraquinone derivatives, dianthraquinone derivatives, thiazineindigo derivatives, azo dye derivatives, and quinophthalone derivatives, i.e., by the addition of a crystal growth inhibitor. A crystal growth inhibitor frequently also inhibits the crystal transition and care must therefore be exercised in selecting the type and quantity of addition of the dye derivative and in the timing of its addition.

The quinacridone derivatives, diketopyrrolopyrrole derivatives, benzoisoindole derivatives, anthraquinone derivatives, dianthraquinone derivatives, thiazineindigo derivatives, azo dye derivatives, and quinophthalone derivatives used in the present invention are compounds provided by the introduction of a substituent into, respectively, quinacridone, diketopyrrolopyrrole, benzoisoindole, anthraquinone, dianthraquinone, thiazineindigo, an azo dye, and quinophthalone.

The structure of the dye derivative cis exemplified by dye derivatives represented by the previously given general formula "Q-X". The Q in the formula "Q-X" is a quinacridone residue, diketopyrrolopyrrole residue, benzoisoindole residue, anthraquinone residue, dianthraquinone residue, thiazineindigo residue, azo dye residue, or quinophthalone residue; each X is independently -OH, $-SO_3H$, -COOH, or a monovalent to trivalent metal salt, alkylamine salt, piperazinyl salt, or morpholinyl salt of these acidic groups, or a phthalimidomethyl group, or a group in which a triazine ring bearing a tertiary amino group-containing basic group is bonded on one side of -NH-, or a group represented by the previously given formula (a), (b), (c), (d), (e), (f), (g), or (h); each $T_1$ is independently $-SO_2NH-$, -CONH-, $-CH_2NHCOCH_2-$, -S-, or -NH-; each $T_2$ is independently $C_{1-4}$ alkylene; $R_1$ and $R_2$ are each independently $C_{1-4}$ alkyl; and $R_3$ is -H, $-NH_2$, $-NHCOCH_3$,

or $-NHR_4$ wherein $R_4$ is $C_{1-4}$ alkyl or a triazine ring bearing a tertiary amino group-containing basic group.

The monovalent to trivalent metal can be exemplified by sodium, potassium, magnesium, calcium, iron and aluminum. The alkylamine salt can be exemplified by the quaternary ammonium salts of long-chain monoalkylamines, e.g., octylamine, laurylamine and stearylamine, and by quaternary ammonium salts such as palmityltrimethylammonium, dilauryldimethylammonium and distearyldimethylammonium.

The dye derivative can be synthesized by known methods, for example, sulfonation by heating in sulfuric acid or fuming sulfuric acid; phthalimidomethylation by carrying out a dehydration condensation with N-hydroxymethylphthalimide in sulfuric acid; and chlorosulfonation using chlorosulfonic acid and thionyl chloride followed by sulfonamidation by reaction with an amine such as dimethylaminopropylamine. Preferably from one to three and most preferably one or two of the aforementioned substituents are introduced in the dye derivative per molecule of the quinacridone, diketopyrrolopyrrole, benzoisoindole, anthraquinone, dianthraquinone, thiazineindigo, azo dye, or quinophthalone.

The quantity of the dye derivative used is not particularly limited, but is preferably 0.5 to 20 weight% and particularly preferably 2 to 10 weight% with reference to the crude diketopyrrolopyrrole pigment crystals. No inhibition of crystal growth appears when the quantity of dye derivative is less than 0.5 weight%, and when more than 20 weight% is used the influence of the dye derivative on the hue, heat resistance, light fastness, water resistance or sublimation properties is seen and the properties as a pigment may be lost.

This dye derivative has the effect of inhibiting growth of the diketopyrrolopyrrole pigment crystals, and in order to manifest a crystal growth inhibiting effect the dye derivative must efficiently adsorb to the surface of the diketopyrrolopyrrole pigment and must not be easily desorbed. Due to this, the structure of the dye derivative is frequently set up to have a chemical structure that is in part the same as that of the pigment used. For this reason, dye derivatives that have a diketopyrrolopyrrole structure, quinacridone structure, thiazineindigo structure, or benzoisoindole structure are generally effective when a diketopyrrolopyrrole pigment is being produced. Among the aforementioned dye derivatives, dye derivatives that have a phthalimidomethyl group exhibit the highest crystal growth inhibiting effect.

Improving the hue with the dye derivative

In addition, to improve the hue, the use is preferred of a dye derivative with a diketopyrrolopyrrole structure, benzoisoindole structure, thiazineindigo structure, azo dye structure, or quinophthalone structure that exhibits a yellow color or orange color.

Specific examples of quinacridone derivatives

Compounds represented by the following formula (1) can specifically be used as the quinacridone derivative.

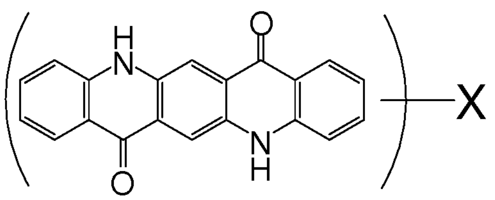

(1)

(1-1) X = -OH (1-2) X = -COOH

(1-3) X = $-SO_3H$ (1-4) X = $-SO_2N(CH_3)_2$

(1-5) X = $-SO_2NH(CH_2)_4N(CH_3)_2$ (1-6) X = $-SO_2N(CH_2)_2N(C_2H_5)_2$

(1-7) X = $-CH_2NHCOCH_2CH_2N(CH_3)_2$ (1-8) X = $-CH_2NHCOCH_2NHCH_2N(C_2H_5)_2$

(1-9) 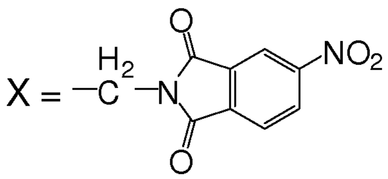

(1-10) 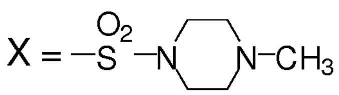

(continued)

(1-11) 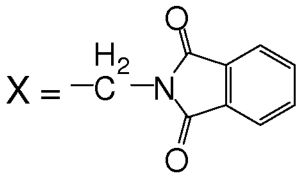

Specific examples of diketopyrrolopyrrole derivatives

Compounds represented by the following formula (2) or (3) can specifically be used as the diketopyrrolopyrrole derivative.

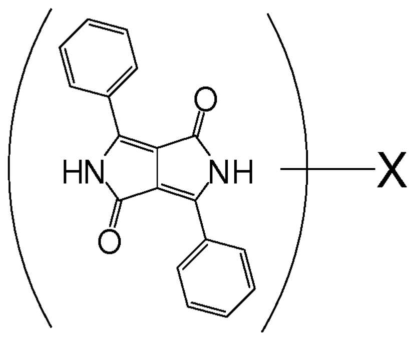 (2)

| | | | |
|---|---|---|---|
| (2-1) | X = -OH | (2-2) | X = -COOH |
| (2-3) | X = $-SO_3H$ | (2-4) | X = $-SO_2NH_2$ |
| (2-5) | X = $-SO_2NH(CH_2)_2N(C_2H_5)_2$ | (2-6) | X = $-SO_2NH(CH_2)_3N(CH_3)_2$ |
| (2-7) | X = $-CH_2NHCOCH_2N(C_4H_9)_2$ | (2-8) | X = $-CH_2NHCOCH_2NH(CH_2)_2N(CH_3)_2$ |
| (2-9) | 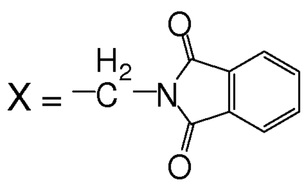 | (2-10) | 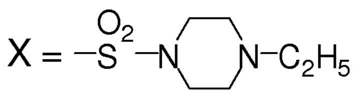 |
| (2-11) | X = $-SO_2NH(CH_2)_3N(C_2H_5)_2$ | | |

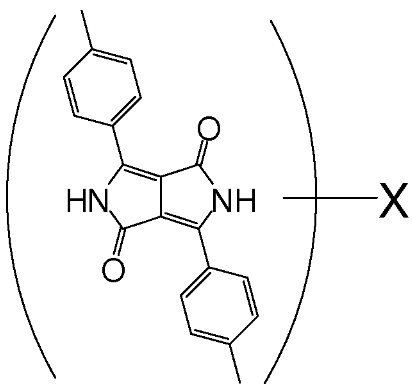 (3)

| | | | |
|---|---|---|---|
| (3-1) | X = -OH | (3-2) | X = -COOH |
| (3-3) | X = $-SO_3H$ | (3-4) | X = $-SO_2NH_2$ |

(continued)

(3-5) X = $-SO_2N(CH_3)_2$

(3-6) X = $-SO_2NH(CH_2)_2N(C_2H_5)_2$ (3-7) X = $-SO_2NH(CH_2)_3N(CH_3)_2$

(3-8) X = $-CH_2NHCOCH_2N(C_4H_9)_2$ (3-9) X = $-CH_2NHCOCH_2NH(CH_2)_2N(CH_3)_2$

(3-10) 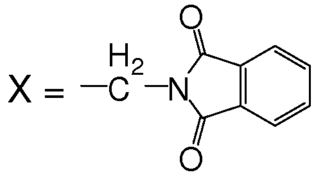 (3-11) 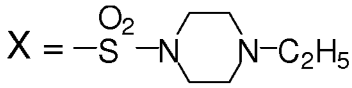

(3-12) X = $-SO_2NH(CH_2)_2N(CH_3)_2$

Specific examples of benzoisoindole derivatives

The following compounds represented by formula (4) can specifically be used as the benzoisoindole derivative.

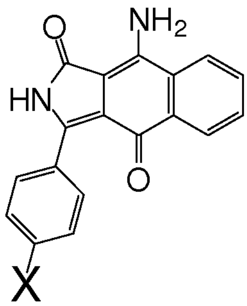

(4)

(4-1) X = $-SO_2NHC_3H_6N(CH_3)_2$
(4-2) X = $-SO_2NHC_4H_3N(CH_3)_2$
(4-3) X = $-SO_2NHCH_2N(CH_3)_2$
(4-4) X = $-SO_2NHC_2H_4N(C_2H_5)_2$
(4-5) X = $-SO_2NHC_2H_4N(CH_3)_2$
(4-6) X = $-SO_2NH(CH_2)_2N(CH_3)(C_2H_5)$
(4-7) X = $-SO_2NH(CH_2)_2N(CH_3)(n\text{-}C_3H_7)$
(4-8) X = $-SO_2NH(CH_2)_3N(C_2H_5)_2$
(4-9) X = $-SO_2NH(CH_2)_3N(C_4H_9)_2$
(4-10) X = $-SO_2NH(CH_2)_4N(C_2H_5)_2$
(4-11) X = $-SO_2NH(CH)(CH_3)(CH_2)N(CH_3)_2$
(4-12) X = $-SO_2NH(CH_2)(CH)(CH_3)N(CH_3)_2$
(4-13) X = $-SO_2NH(CH_2)_2N(i\text{-}C_3H_7)_2$
(4-14) X = $-SO_2NH(CH_2)_3N(C_2H_5)_2$

Specific examples of anthraquinone derivatives

Compounds represented by the following formula (5) can specifically be used as the anthraquinone derivative.

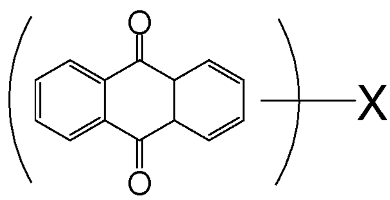

(5)

(5-1) X = -OH (5-2) X = -COOH

(continued)

(5-3) X = $-SO_3H$ (5-4) X = $-SO_2NH_2$

(5-5) X = $-SO_2NH(CH_2)_2N(C_2H_5)_2$ (5-6) X = $-SO_2NH(CH_2)_3N(CH_3)_2$

(5-7) X =$-CH_2NHCOCH_2N(C_4H_9)_2$ (5-8) X = $-CH_2NHCOCH_2NH(CH_2)_2N(CH_3)_2$

(5-9) 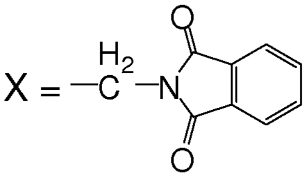 (5-10) 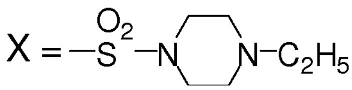

Specific examples of dianthraquinone derivatives

Compounds represented by the following formula (6) can specifically be used as the dianthraquinone derivative.

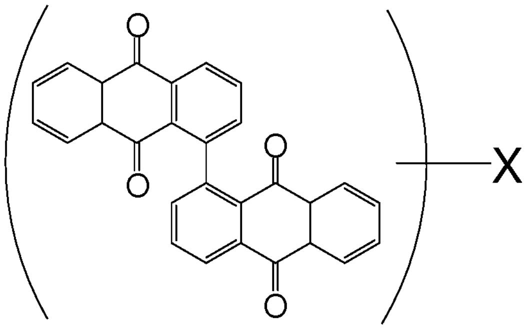 (6)

(6-1) X = -OH (6-2) X = -COOH

(6-3) X = $-SO_3H$ (6-4) X = $-SO_2NH_2$

(6-5) X = $-SO_2NH(CH_2)_2N(C_2H_5)_2$ (6-6) X = $-SO_2NH(CH_2)_3N(CH_3)_2$

(6-7) X = $-CH_2NHCOCH_2N(C_4H_9)_2$ (6-8) X = $-CH_2NHCOCH_2NH(C_4H_9)_2N(CH_3)_2$

(6-9) 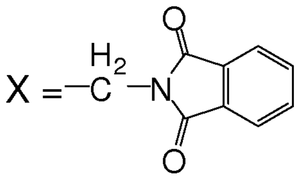 (6-10) 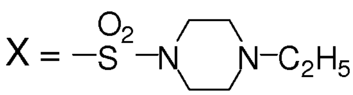

Specific examples of thiazineindigo derivatives

Compounds represented by the following formula (7) can specifically be used as the thiazineindigo derivative.

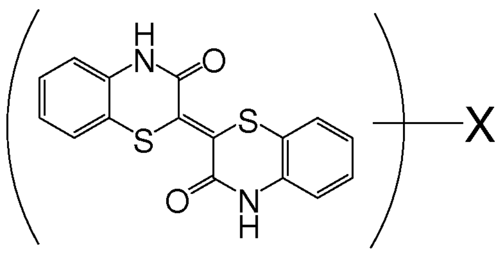

(7-1) X = $-SO_2NH(CH_2)_3N(C_2H_5)_2$

(7-2) 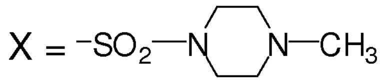

(7-3) X = $-SO_2NH(CH_2)_3N\{(CH_2)_3CH_3\}_2$

(7-4) X = $-SO_2NH(CH_2)_2N(C_2H_5)_2$

(7-5) X = $-SO_2N(CH_3)_2$

(7-6) X = $-SO_2N(C_2H_5)_2$

(7-7) X = $-SO_2N(C_4H_9)_2$

(7-8) X = $-SO_2NH(CH_2)_3N(C_2H_5)(CH_3)$

(7-9) X = $-SO_2NH(CH_2)_3N(CH_3)_2$

(7-10) X = $-SO_2NH(CH_2)_2N(CH_3)_2$

Specific examples of azo dye derivatives

Compounds represented by the following formulas (8), (9), and (10) can specifically be used as the azo dye derivative.

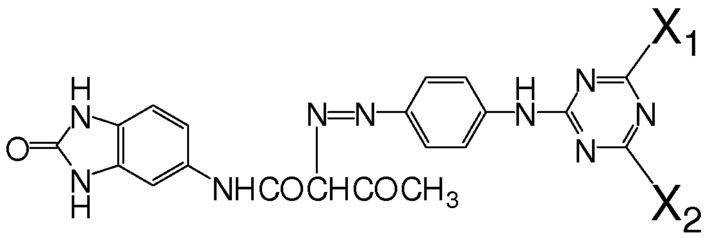

(8)

(8-1) $X_1$ = -OH $X_2$=$-NH(CH_2)_4N(C_2H_5)_2$

(8-2) $X_1$ = -OH $X_2$=$-NH(CH_2)_3N(C_4H_9)_2$

(8-3) $X_1$ = $-NH(CH_2)_3N(C_2H_5)_2$ $X_2$ = $-NH(CH_2)_3N(C_2H_5)_2$

(8-4) $X_1$ = $-NH(CH_2)_2N(C_3H_7)_2$ $X_2$ = $-NH(CH_2)_3N(C_2H_5)_2$

(8-5) $X_1$ = -OH 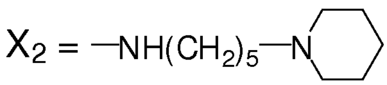

(8-6) $X_1$ = -OH 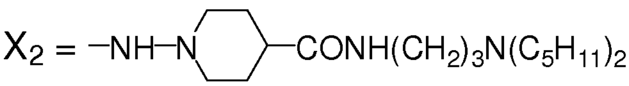

(8-7)

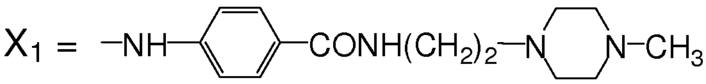

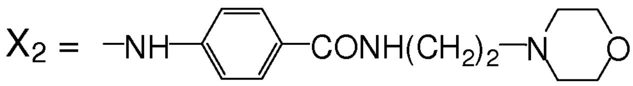

(8-8)

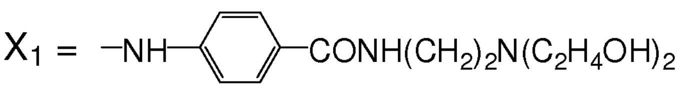

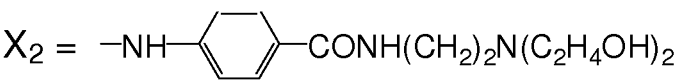

(8-9)

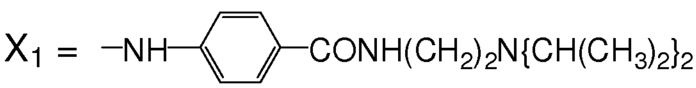

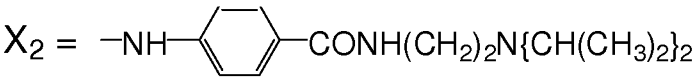

(8-10) $X_1$ = $-NH(CH_2)_2N(CH_3)_2$ $X_2$ = $-NH(CH_2)_2N(CH_3)_2$

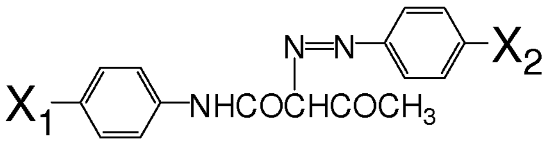

(9)

(9-1) $X_1$ = $-CH_3$ $X_2$ = $-CONH(CH_2)_2N(C_2H_5)_2$
(9-2) $X_1$ = $-CH_3$ $X_2$ = $-CONH(CH_2)_3N(C_2H_5)_2$
(9-3) $X_1$ = $-CH_3$ $X_2$ = $-SO_2NH(CH_2)_2N(C_2H_5)_2$
(9-4) $X_1$ = $-CH_3$ $X_2$ = $-SO_2NH(CH_2)_3N(C_2H_5)_2$

(9-5) $X_1$ = $-OCH_3$ $X_2$ = $-CONH(CH_2)_2N(C_2H_5)_2$
(9-6) $X_1$ = $-OCH_3$ $X_2$ = $-CONH(CH_2)_3N(C_2H_5)_2$
(9-7) $X_1$ = $-OCH_3$ $X_2$ = $-SO_2NH(CH_2)_2N(C_2H_5)_2$
(9-8) $X_1$ = $-OCH_3$ $X_2$ = $-SO_2NH(CH_2)_3N(C_2H_5)_2$

(9-9) $X_1$ = $-NO_2$ $X_2$ = $-CONH(CH_2)_2N(C_2H_5)_2$
(9-10) $X_1$ = $-NO_2$ $X_2$ = $-CONH(CH_2)_3N(C_2H_5)_2$
(9-11) $X_1$ = $-NO_2$ $X_2$ = $-SO_2NH(CH_2)_2N(C_2H_5)_2$
(9-12) $X_1$ = $-NO_2$ $X_2$ = $-SO_2NH(CH_2)_3N(C_2H_5)_2$

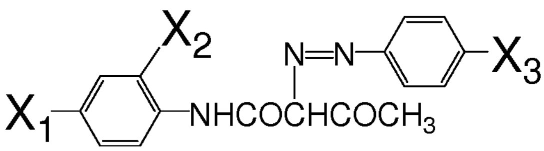

(10)

(10-1) $X_1$ = $-CH_3$ $X_2$ = $-CH_3$ $X_3$ = $-CONH(CH_2)_2N(C_2H_5)_2$
(10-2) $X_1$ = $-CH_3$ $X_2$ = $-CH_3$ $X_3$ = $-CONH(CH_2)_3N(C_2H_5)_2$
(10-3) $X_1$ = $-CH_3$ $X_2$ = $-CH_3$ $X_3$ = $-SO_2NH(CH_2)_2N(C_2H_5)_2$
(10-4) $X_1$ = $-CH_3$ $X_2$ = $-CH_3$ $X_3$ = $-SO_2NH(CH_2)_3N(C_2H_5)_2$

(10-5) $X_1$ = $-CH_3$ $X_2$ = $-NO_2$ $X_3$ = $-CONH(CH_2)_2N(C_2H_5)_2$
(10-6) $X_1$ = $-CH_3$ $X_2$ = $-NO_2$ $X_3$ = $-CONH(CH_2)_3N(C_2H_5)_2$
(10-7) $X_1$ = $-CH_3$ $X_2$ = $-NO_2$ $X_3$ = $-SO_2NH(CH_2)_2N(C_2H_5)_2$
(10-8) $X_1$ = $-CH_3$ $X_2$ = $-NO_2$ $X_3$ = $-SO_2NH(CH_2)_3N(C_2H_5)_2$

Specific examples of quinophthalone derivatives

Compounds represented by the following formulas (11-1) to (11-17) can specifically be used as the quinophthalone derivative.

(11-1)

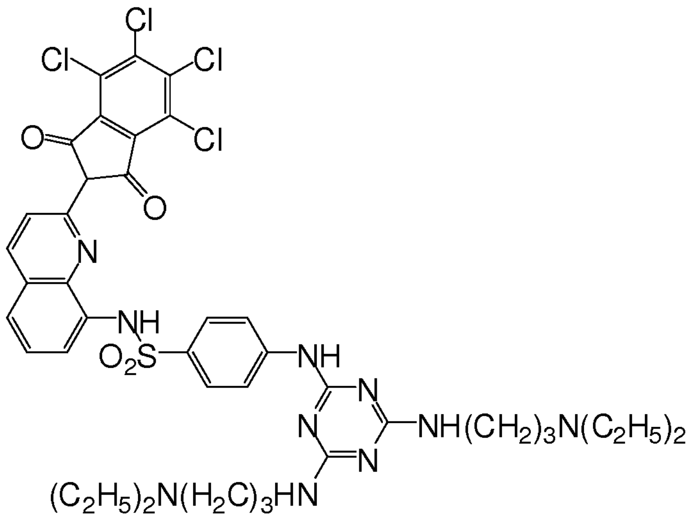

(11-2)

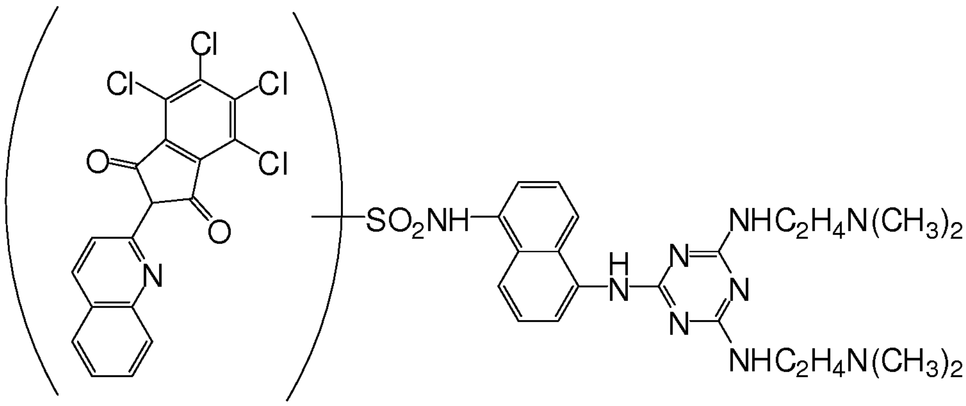

(11-3)

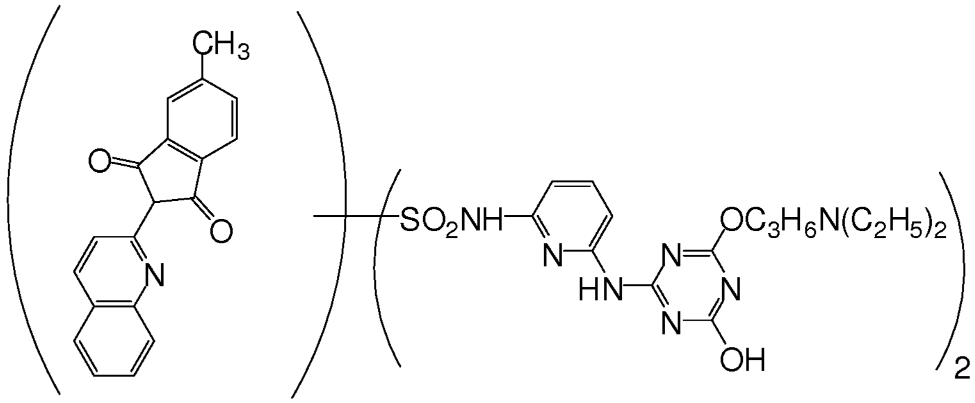

(11-4) 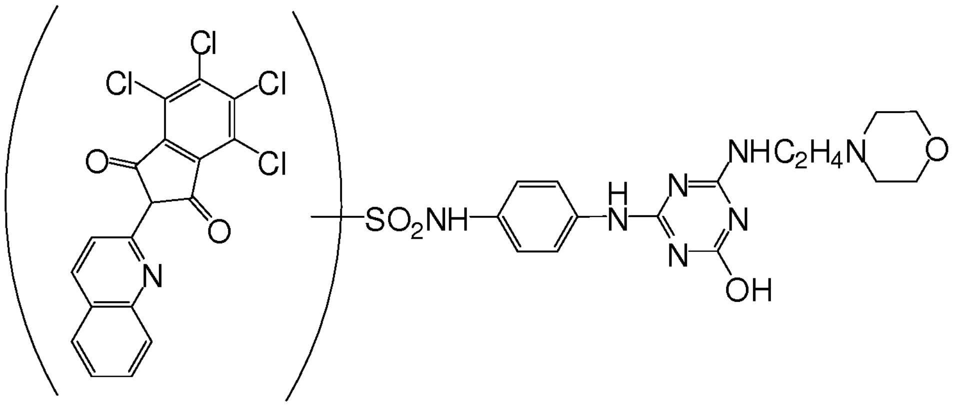

(11-5) 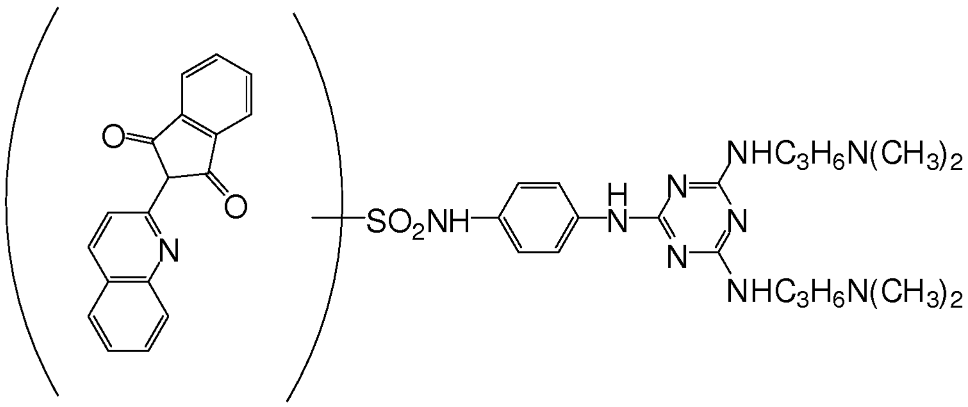

(11-6) 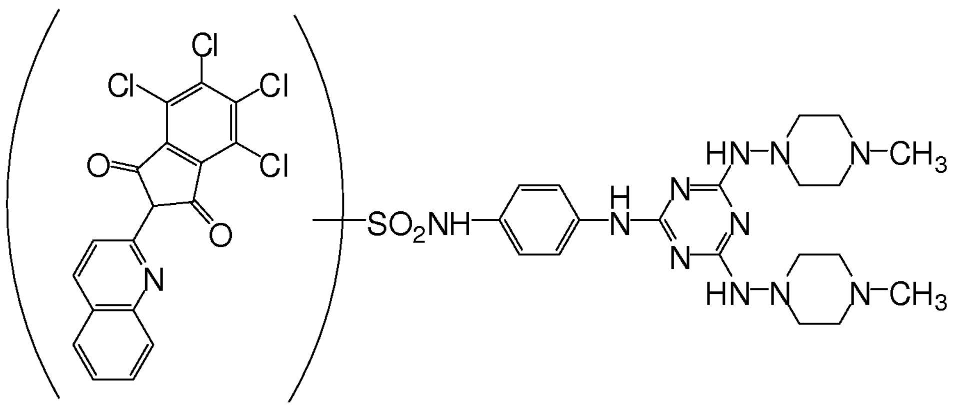

(11-7) 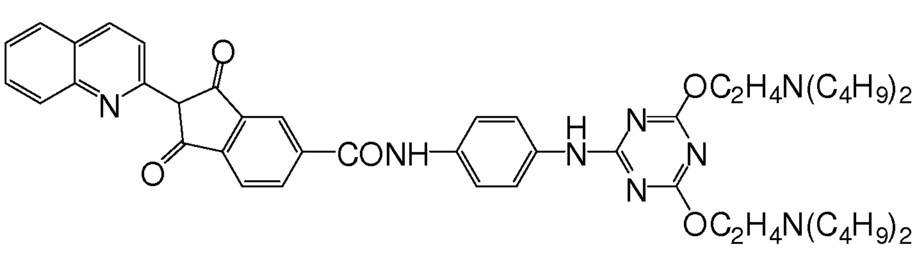

(11-8)

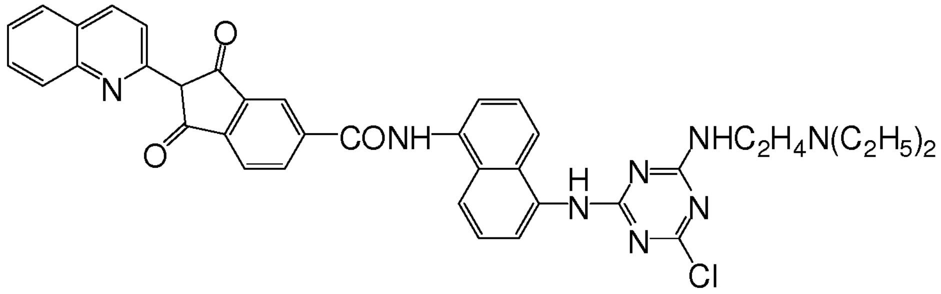

(11-9)

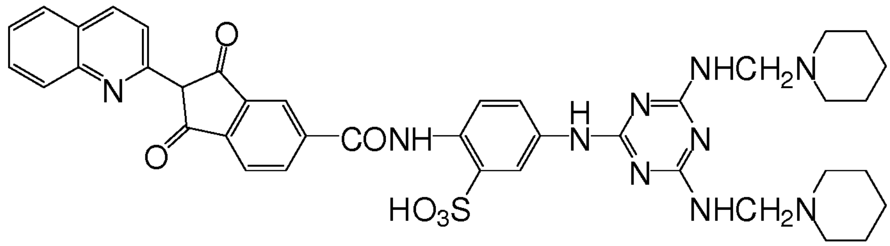

(11-10)

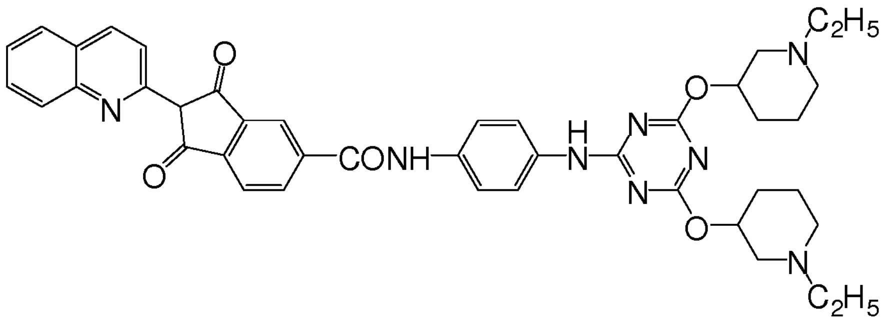

(11-11)

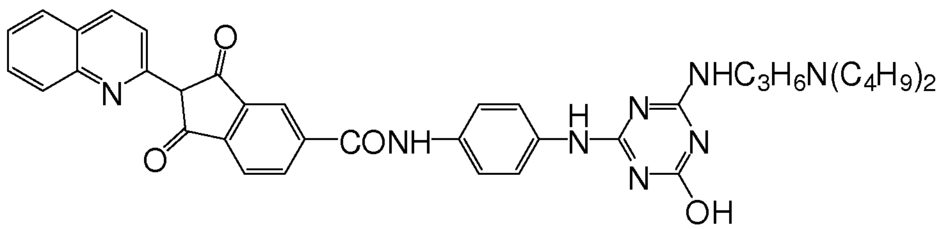

(11-12)

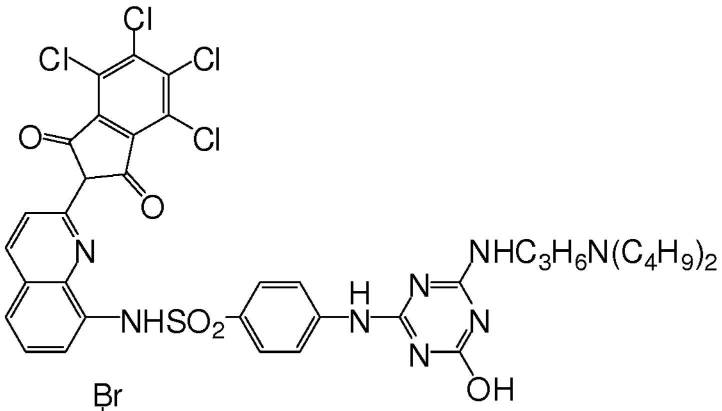

(11-13)

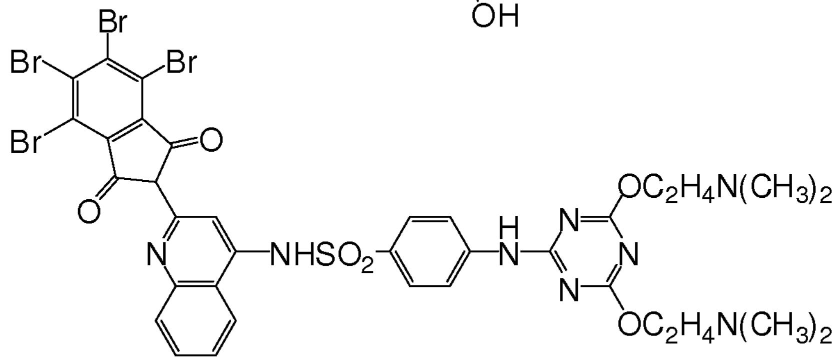

(11-14)

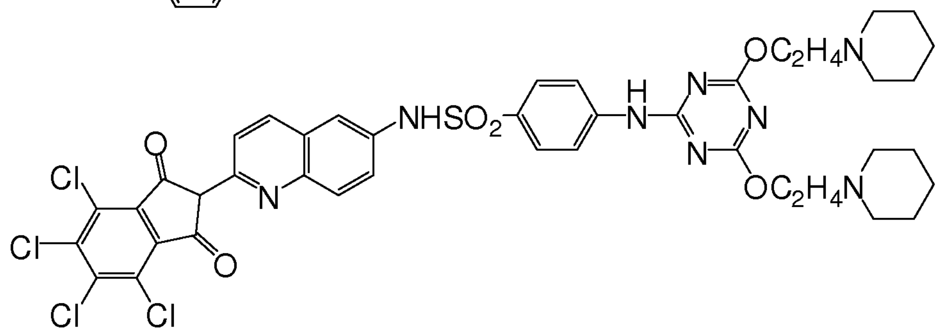

(11-15)

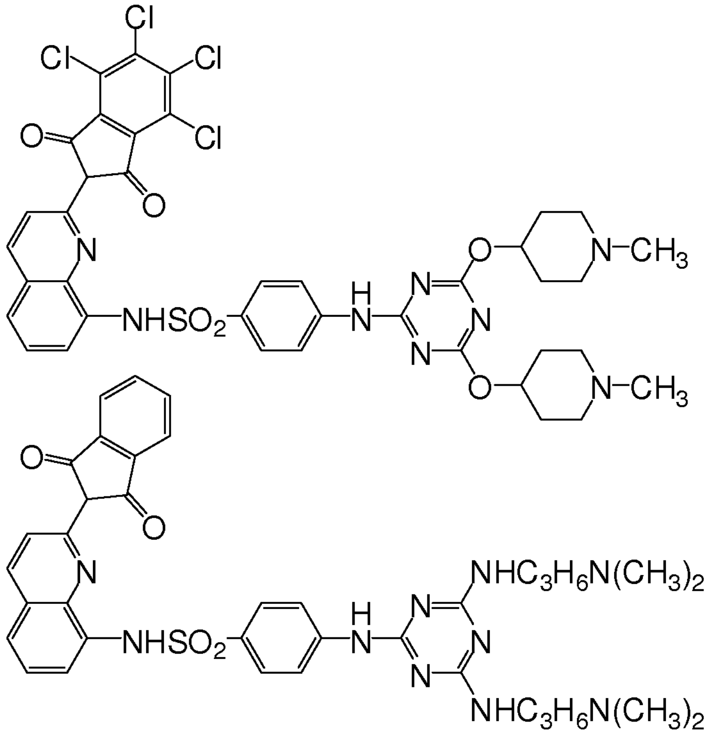

(11-16)

(11-17)

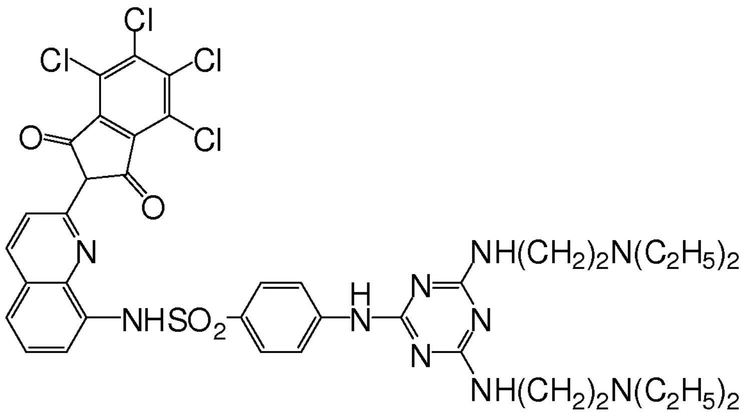

Recovery of the diketopyrrolopyrrole pigment that has been subjected to control of the crystal form

The crystal form-controlled diketopyrrolopyrrole pigment yielded by the preceding procedure is submitted to removal of the organic solvent using a filtration apparatus or separation apparatus such as a filter press, leaf filter, Nutsche filter, horizontal filter plate filtration apparatus or continuous centrifugal separator, and is washed with water or redispersed in water and filtered and is thereby isolated as a water-based paste in which the organic solvent has been replaced by water. The obtained water-based paste is then passed through drying and grinding to obtain the final powdered pigment form.

Drying is performed generally at 50 to 90°C using a dryer such as a hot air dryer, paddle dryer or vacuum dryer. Grinding is carried out using a grinder such as a hammer mill, cutter mill or atomizer. A Micron dryer or spin flash dryer, which combine both drying and grinding, may also be used. In addition, when a low temperature vacuum process such as freeze drying is used, there is little drying-induced aggregation and a powder with a good dispersibility can be obtained. Grinding using a grinder such as a hammer mill, cutter mill or atomizer, brings about conversion into a powder form by the mechanical grinding of pigment aggregated during drying and does not bring about microfine-sizing of the primary particles of the pigment.

In order to relax drying-induced aggregation, the obtained diketopyrrolopyrrole pigment may be treated with a resin or surfactant. The treatment with a resin is a treatment with, for example, rosin, an acrylic resin or a styrene-acrylic resin, and is carried out by adding a solution or emulsion of the resin to the suspension containing the diketopyrrolopyrrole

pigment. The treatment with surfactant, like the resin treatment, is carried out by adding a solution or emulsion of the surfactant to the suspension containing the crude diketopyrrolopyrrole pigment crystals. A cationic surfactant, anionic surfactant, or nonionic surfactant can be used as the surfactant.

Supplemental addition of a diketopyrrolopyrrole compound represented by formula (II)

A diketopyrrolopyrrole compound represented by the previously given formula (II) may be added on a supplemental basis in the previously described succinate ester method that provides the diketopyrrolopyrrole pigment composition according to the present invention, and its addition may be timed over a broad range from the stage of synthesis of the diketopyrrolopyrrole pigment composition to the stage in which a photosensitive color composition is prepared. It is preferably added prior to protolysis of the alkali metal salt of the pigment or in the initial stage of the synthesis, i.e., prior to the addition of the prescribed succinate diester and benzonitrile compounds to the prescribed inert organic solvent and strongly basic compound.

The diketopyrrolopyrrole compound represented by the formula (II) added on a supplemental basis need not be pure and may be, for example, a pigment composition (for example, a mixture containing compounds represented by formulas (I) and (II) and others) that contains a high concentration of the diketopyrrolopyrrole compound represented by the formula (II). With regard to obtaining an effect from the supplemental addition of the compound represented by the formula (II), an effect is obtained even at a small final quantity for the compound represented by the formula (II) in the pigment composition of the present invention (for example, at least 0.2% compound represented by the formula (II)).

Properties of the diketopyrrolopyrrole pigment composition

There are no particular limitations on the crystal form of the inventive diketopyrrolopyrrole pigment composition produced by the previously described method. The diketopyrrolopyrrole pigment composition of the present invention may contain the β-form, in the form of the mixed crystal or a mixture, within a range that does not impair the effects of the present invention. The diketopyrrolopyrrole pigment composition of the present invention preferably has an average primary particle diameter of not more than 40 nm, while from 10 nm to 35 nm is more preferred. This average primary particle diameter refers to the diameter of the pigment particle that is the smallest unit. The average primary particle diameter can be obtained, for example, by extinguishing aggregation simply by the addition of organic solvent to the obtained pigment powder; thereafter carrying out observation with a transmission electron microscope (TEM); and calculating the average value by analysis of the obtained image. A diketopyrrolopyrrole pigment composition in which the average primary particle diameter exceeds 40 nm exhibits strong light scattering, which works against the generation of a high contrast ratio by a red film that contains such a pigment composition. The diketopyrrolopyrrole pigment composition of the present invention has an approximately spherical, cubic, or rectangular solid shape according to observation of its particles with a transmission electron microscope (TEM).

The color composition, e.g., a colored organic polymer material and a color composition for color filter service

The color composition of the present invention (including a colored organic polymer material and a color composition for color filter service) will now be described. The color composition of the present invention comprises a pigment vehicle and the diketopyrrolopyrrole pigment composition of the present invention. When this pigment vehicle is an organic polymer material, it then becomes a colored organic polymer material.

The pigment vehicle

The pigment vehicle is typically composed of a resin, a precursor therefor, or a mixture of the preceding, and a pigment vehicle is preferably selected that exhibits an effect on the dispersibility and dispersion stability of the diketopyrrolopyrrole pigment composition. The resin encompasses thermosetting resins, thermoplastic resins, and resins that are cured by actinic radiation, while the resin precursors encompass the monomers, dimers, trimers, and oligomers that when cured by exposure to actinic radiation form a film that is the same as the resin. A single one of the preceding may be used, or a mixture of two or more may be used. The pigment vehicle is used preferably at 50 to 700 weight parts and more preferably at 100 to 400 weight parts, in each case per 100 weight parts of the diketopyrrolopyrrole pigment composition.

When a color filter is to be produced using the color composition, the resin is preferably a transparent resin that has a transmittance in the total visible light region from 400 to 700 nm of at least 80% and preferably at least 95%. The resin must have a good heat resistance since the downstream steps in color filter production include, for example, high-temperature heat treatment in the steps for forming the transparent electrode and alignment film.

The thermoplastic resin can be exemplified by butyral resins, styrene-maleic acid copolymers, chlorinated

polyethylene, chlorinated polypropylene, polyvinyl chloride, vinyl chloride-vinyl acetate copolymers, polyvinyl acetate, polyurethane resins, polyester resins, acrylic resins, alkyd resins, polystyrene resins, polyamide resins, rubber resins, cyclized rubber resins, celluloses, polyethylene (HDPE, LDPE), polybutadiene and polyimide resins. The thermosetting resins can be exemplified by epoxy resins, benzoguanamine resins, rosin-modified maleic acid resins, rosin-modified fumaric acid resins, melamine resins, urea resins and phenolic resins.

The actinic radiation-curing resins are resins provided by the introduction via, for example, the isocyanate group, aldehyde group or epoxy group, of a photocrosslinkable group, e.g., from a (meth)acrylic compound or cinnamic acid, into a polymer bearing a reactive substituent such as the hydroxyl group, carboxyl group or amino group. Also usable are polymers provided by the hemiesterification, with a hydroxyl-functional (meth)acrylic compound such as hydroxyalkyl (meth)acrylate, of an acid anhydride-containing linear polymer such as a styrene-maleic anhydride copolymer or α-olefin-maleic anhydride copolymer.

The monomers and oligomers that are resin precursors can be exemplified by the various acrylate esters and methacrylate esters, e.g., 2-hydroxyethyl (meth)acrylate, 2-hydroxypropyl (meth)acrylate, cyclohexyl (meth)acrylate, polyethylene glycol di(meth)acrylate, pentaerythritol tri(meth)acrylate, dipentaerythritol hexa(meth)acrylate, tricyclodecanyl (meth)acrylate, and the caprolactone adducts of dipentaerythritol hexa(meth)acrylate, and by acrylic acid, methacrylic acid, (meth)acrylamide, N-hydroxymethyl(meth)acrylamide, styrene, vinyl acetate, acrylonitrile, melamine (meth)acrylate, and epoxy (meth)acrylate prepolymers.

The photopolymerization initiator

A photopolymerization initiator, inter alia, is added to the color composition when this composition is to be made curable by exposure to ultraviolet radiation. Any of the photopolymerization initiators used conventionally can be used as this photopolymerization initiator. The photopolymerization initiator can be specifically exemplified by acetophenone-type photopolymerization initiators such as 4-phenoxydichloroacetophenone, 4-butyldichloroacetophenone, diethoxyacetophenone, 1-(4-isopropylphenyl)-2-hydroxy-2-methylpropan-1-one, 1-hydroxycyclohexyl phenyl ketone, 2-benzyl-2-dimethylamino-1-(4-morpholinophenyl)butan-1-one, and 2-methyl-1-[4-(methylthio)phenyl]-2-morpholinopropan-1-one; benzoin-type photopolymerization initiators such as benzoin, benzoin methyl ether, benzoin ethyl ether, benzoin isopropyl ether, and benzil dimethyl ketal; benzophenone-type polymerization initiators such as benzophenone, benzoylbenzoic acid, methyl benzoylbenzoate, 4-phenylbenzophenone, hydroxybenzophenone, acrylated benzophenone, and 4-benzoyl-4'-methyldiphenyl sulfide; thioxanthone-type photopolymerization initiators such as thioxanthone, 2-chlorothioxanthone, 2-methylthioxanthione, isopropylthioxanthone, and 2,4-diisopropylthioxanthone; triazine-type photopolymerization initiators such as 2,4,6-trichloro-S-triazine, 2-phenyl-4,6-bis(trichloromethyl)-S-triazine, 2-(p-methoxyphenyl)-4,6-bis(trichloromethyl)-S-triazine, 2-(p-tolyl)-4,6-bis(trichloromethyl)-S-triazine, 2-piperonyl-4,6-bis(trichloromethyl)-S-triazine, 2-(naphtho)-4,6-bis(trichloromethyl)-S-triazine, 2-(4-methoxynaphth-1-yl)-4,6-bis(trichloromethyl)-S-triazine, 2,4-bis(trichloromethyl)(piperonyl)-6-triazine, and 2,4-bis(trichloromethyl)-(4'-methoxystyryl)-6-triazine; borate-type photopolymerization initiators; carbazole-type photopolymerization initiators; and imidazole-type photopolymerization initiators. The photopolymerization initiator is used preferably at 5 to 150 weight parts per 100 weight parts of the diketopyrrolopyrrole pigment composition. A single one of the preceding photopolymerization initiators may be used or a mixture of two or more may be used.

The sensitizer

In addition, compounds such as α-acyloxy esters, acylphosphine oxide, methylphenyl glyoxylate, benzil, 9,10-phenanthrenequinone, camphorquinone, ethylanthraquinone, 4,4'-diethylisophthalophenone, 3,3',4,4'-tetra(t-butylperoxycarbonyl)benzophenone and 4,1'-diethylaminobenzophenone, can be used at the same time as a sensitizer. The sensitizer is preferably used at 0.1 to 150 weight parts per 100 weight parts of the photopolymerization initiator.

The solvent

A solvent can be used in the color composition in order to bring about a thorough dispersion of the diketopyrrolopyrrole pigment composition in the pigment vehicle and provide uniform application on the substrate. The solvent can be exemplified by cyclohexanone, ethyl cellosolve acetate, butyl cellosolve acetate, 1-methoxy-2-propylacetate, diethylene glycol dimethyl ether, ethylbenzene, ethylene glycol diethyl ether, xylene, ethyl cellosolve, methyl n-amyl ketone, propylene glycol monomethyl ether, toluene, methyl ethyl ketone, ethyl acetate, methanol, ethanol, isopropyl alcohol, butanol, isobutyl ketone, and petroleum-based solvents. A single one of these or a mixture may be used. The solvent is preferably used at 500 to 4,000 weight parts per 100 weight parts of the diketopyrrolopyrrole pigment composition.

Production of the color composition

Various dispersing means, e.g., a three-roll mill, two-roll mill, sand mill or kneader, may be used to disperse the diketopyrrolopyrrole pigment composition of the present invention in the pigment vehicle. Various dispersion auxiliaries, e.g., surfactant or dye derivatives, can be added as appropriate in order to obtain a good dispersion with these means. The use of a dispersion auxiliary makes it possible to produce a color composition in which the pigment is well dispersed and re-aggregation of the pigment post-dispersion is prevented.

Various additives may be added as necessary to the color composition of the present invention, e.g., red pigments other than the diketopyrrolopyrrole pigment of the present invention, yellow pigments, dyes, oxidation inhibitors, polymerization inhibitors, leveling agents, humectants, viscosity adjusters, anticorrosion agents, antimicrobials, surfactants, anti-blocking agents, ultraviolet absorbers, infrared absorbers, fillers and electroconductive substances.

When a color composition such as a printing ink or colored resist agent is to be prepared, coarse particles greater than or equal to 5 μm, preferably coarse particles greater than or equal to 1μm, and more preferably coarse particles greater than or equal to 0.5 μm, as well as admixed dust, are preferably removed using a means such as centrifugal separation, a sintered filter or a membrane filter.

The red film

The red film of the present invention will now be described. The red film of the present invention is a red film that contains the diketopyrrolopyrrole pigment composition of the present invention and a pigment vehicle, and can be formed on a substrate by coating the color composition of the present invention on the substrate, dipping the substrate in the color composition of the present invention, spraying the color composition of the present invention on the substrate or an inkjet method. Application of the color composition of the present invention can be performed using, for example, a spin coater, bar coater, blade coater, roll coater, die coater or screen printer. When the color composition of the present invention contains solvent, film production can be carried out by removal of the solvent in the film coating by, for example, air drying, hot air drying or vacuum drying. After the red film has been formed, additional curing may also be performed by, for example, baking (post-baking) and/or exposure to actinic radiation. When curing is to be brought about by baking, the color composition of the present invention can contain known heat-curing materials and the baking temperature can be set in conformity to these materials. When curing is to be brought about by exposure to actinic radiation, the color composition of the present invention can contain known actinic radiation-curable materials and the exposure conditions can be set up in conformity to these materials.

Application of the red film to color filters

The red film of the present invention is well-suited for application as the red filter segment of a color filter. Color filters generally have at least one red filter segment, at least one green filter segment, and at least one blue filter segment disposed on a transparent substrate, and the respective color filter segments are preferably partitioned by a black matrix.

The substrate coated by the color composition of the present invention is preferably a transparent substrate, e.g., a glass plate of soda-lime glass, low-alkali borosilicate glass, or non-alkali aluminoborosilicate glass, or a resin plate of polycarbonate, polymethyl methacrylate, or polyethylene terephthalate. A transparent electrode of, e.g., indium oxide or tin oxide, may be formed on the surface of the substrate, e.g., a glass plate or resin plate, for the purpose of driving the liquid crystals after conversion into the panel. The dry film thickness of the respective color filter segments and black matrix is preferably 0.2 to 4 μm.

Methods for forming the respective color filter segments include photolithographic methods, printing methods, and inkjet methods. Photolithographic methods and inkjet methods are particularly preferred. Formation of the respective color filter segments by photolithography can proceed by the following method. Thus, a transparent substrate is coated, by a method such as spray coating, spin coating, slit coating or roll coating, with a color composition formulated as a solvent-developable or base-developable colored resist material so as to yield a dry film thickness of 0.2 to 4 μm. As necessary, the dried film is subjected to exposure to ultraviolet radiation through a mask having a prescribed pattern and disposed in contact with the film or disposed without contacting the film. This is followed by immersion in solvent or a basic developing solution, or the developing solution is sprayed on with, e.g., a sprayer, in order to remove the uncured regions and form a desired pattern and thereby form the respective color filter segments. Heating may also be performed as necessary in order to promote the polymerization of the colored resist material.

Development can be carried out using an aqueous solution of an inorganic base, e.g., sodium carbonate or sodium hydroxide, as the basic developing solution or using an aqueous solution of an organic base, e.g., dimethylbenzylamine, triethanolamine, tetramethylammonium hydroxide or choline, as the basic developing solution. A defoamer and surfactant may also be added to the developing solution. A shower development technique, spray development technique, dipping development technique or paddle development technique, can be employed as the development

processing method.

In order to improve the sensitivity to ultraviolet exposure, application and drying of the colored resist material can be followed by the application and drying of a water-soluble or base-soluble resin, e.g., polyvinyl alcohol or a water-soluble acrylic resin, in order to form a film that prevents oxygen-mediated inhibition of the polymerization; this is then followed by exposure to ultraviolet radiation.

Formation of the filter segments by an inkjet procedure is carried out by ejecting the color composition, in this case formulated as an inkjet ink, using an inkjet ejection device within the black matrix-demarcated regions on the substrate on which a black matrix has been formed. The black matrix can be formed on the substrate, for example, by a photolithographic method in which patterning is performed by application of a radical-polymerizable black resist followed by photoexposure and then development, or by a printing method in which printing is carried out with a black ink, or by a vapor deposition method in which etching is performed after the vapor deposition of a metal.

## EXAMPLES

The present invention is more particularly described herebelow based on examples. In the examples and comparative examples, parts indicates weight parts and % indicates weight%. The primary particle size of the pigment is reported as the particle diameter (nm) by visual observation with a transmission electron microscope (TEM).

A benzoisoindole derivative dye derivative represented by the aforementioned (4-1) was used as the dye derivative in the examples and comparative examples.

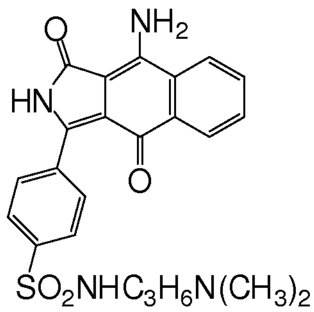

(4-1)

### Example 1

#### The first step

200 g tert-amyl alcohol that had been dried over molecular sieve and 140 g sodium tert-amyl alkoxide were introduced under a nitrogen atmosphere into a stainless steel reactor fitted with a reflux condenser and heating to 100°C was performed with stirring to produce an alcoholate solution.

Separately, 88 g diisopropyl succinate, 97.0 g 4-chlorobenzonitrile, and 3.9 g 4-cyanobiphenyl were introduced into a 500 mL glass flask and were dissolved by heating to 90°C with stirring to produce a solution of their mixture. This hot solution of the mixture was gradually added dropwise at a constant rate over 2 hours with vigorous stirring into the above-described alcoholate solution heated to 100°C. After the completion of dropwise addition, heating and stirring were continued for 2 hours at 90°C to obtain the alkali metal salt of a diketopyrrolopyrrole pigment composition.

Further, 600 g methanol, 600 g water, and 304 g acetic acid were added to a 3L jacketed glass reactor and were cooled to -10°C. To this cooled mixture was added, in small portions, the previously obtained solution of a diketopyrrolopyrrole pigment composition alkali metal salt, which had been cooled to 75°C; this was done while rotating an 8 cm-diameter shear disk at 4000 rpm in the cooled mixture using a high-stirring-speed disperser. The addition in small portions was carried out over about 120 minutes while cooling using a coolant and adjusting the rate of addition of the 75°C diketopyrrolopyrrole pigment composition alkali metal salt so as to always maintain the temperature of the mixture composed of methanol, acetic acid and water at - 5°C or below. After the addition of the alkali metal salt, dark red crystals precipitated and a dark red suspension was produced. The pH of the suspension was 4.8.

#### The second step

The dark red suspension obtained as described above was washed and then filtered off at 5°C using an ultrafiltration apparatus. The obtained red paste had a solids fraction of 19.7%. This paste was resuspended in 3550 g methanol that had been cooled to 0°C to give a suspension that had a methanol concentration of approximately 90%. Particle size adjustment with an accompanying crystal transition was performed by stirring this suspension for 3 hours

at 5°C. Washing and then separation by filtration was carried out using an ultrafiltration apparatus. A small amount of the resulting slurry was removed, separated by filtration, and dried and X-ray diffraction and TEM measurements were carried out: the particles were round with a size of 20 to 40 nm. The obtained red paste was resuspended in 3000 mL water, and a dye derivative slurry - prepared from 100 g water and 5.5 g of the benzoisoindole derivative dye derivative represented by (4-1) above - was then added while stirring. After stirring for 1 hour at not more than 10°C, separation by filtration and washing were carried out to obtain a water-based paste of a finely divided diketopyrrolopyrrole pigment composition. Using a hot air dryer, this water-based finely divided diketopyrrolopyrrole pigment composition paste was dried for 24 hours at 80°C and was then processed into powder form by grinding with a hammer mill to yield a finely divided diketopyrrolopyrrole pigment composition.

According to TEM observation, the particles of the resulting finely divided diketopyrrolopyrrole pigment composition were round and had a primary particle diameter of 20 to 40 nm. The yield was 80.0 g.

Example 2

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 95.0 g 4-chlorobenzonitrile and 6.5 g 4-cyanobiphenyl.

According to TEM observation, the particles of the resulting finely divided diketopyrrolopyrrole pigment composition were round and had a primary particle diameter of 20 to 40 nm. The yield was 77.1 g.

Example 3

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 90.0 g 4-chlorobenzonitrile and 13.0 g 4-cyanobiphenyl.

According to TEM observation, the particles of the resulting finely divided diketopyrrolopyrrole pigment composition were round and had a primary particle diameter of 20 to 40 nm. The yield was 78.4 g.

Example 4

A finely divided diketopyrrolopyrrole pigment composition was obtained by performing the same first step and second step as in Example 2, but in this case changing the stirring of the suspension with an approximately 90% methanol concentration for 3 hours at 5°C in the second step in Example 2 to stirring for 6 hours.

According to TEM observation, the particles of the resulting finely divided diketopyrrolopyrrole pigment composition were round and had a primary particle diameter of 20 to 40 nm. The yield was 78.9 g.

Example 5

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 74.8 g 4-chlorobenzonitrile and 27.7 g 1-naphthonitrile.

According to TEM observation, the particles of the resulting finely divided diketopyrrolopyrrole pigment composition were round and had a primary particle diameter of 20 to 40 nm. The yield was 61.7 g.

Example 6

Synthesis of 3-(4-biphenylyl)-6-(4-chlorophenyl)-pyrrolo[3,4-c]pyrrole-1,4(2H,5H)-dione

Under a nitrogen atmosphere, 110 g ethyl 4-chlorobenzoylacetate, 100 g potassium carbonate, and 20 g sodium iodide were introduced into a reactor equipped with a reflux condenser and were cooled on an ice water bath while stirring. 100 g ethyl bromoacetate was added dropwise to this solution and stirring was carried out for 2 hours at 80°C. 1 kg water was introduced into a separate container and the previously produced reaction solution was introduced into this. After stirring, the target material was extracted with ethyl acetate; the organic layer was dried over anhydrous magnesium sulfate; and evaporation to dryness under reduced pressure then provided 93.8 g of the target material.

Then, 90 g of the obtained compound was mixed with 360 g acetic acid and 250 g ammonium acetate and heating under reflux for 6 hours was performed in a reactor fitted with a Soxhlet extractor filled with molecular sieve. Precipitation was induced by introducing the resulting reaction solution into a separate container containing 2000 g water. This was followed by recrystallization from 2-propanol to obtain 62.2 g of the pyrrolinecarboxylate ester.

Subsequently, 110 g tert-amyl alcohol was introduced into a reactor 1; 16 g 60% NaH was introduced while cooling on a water bath; and heating to 90°C was performed with stirring. Then 50 g tert-amyl alcohol, 44.6 g of the previously obtained pyrrolinecarboxylate ester, and 30.1 g 4-cyanobiphenyl were heated and dissolved in a reactor 2, and this was added dropwise over 1 hour to reactor 1. A reaction was carried out for 6 hours at 120°C; cooling was performed to 60°C; 200 g methanol and 25 g acetic acid were added; and filtration and washing with methanol were subsequently carried out to obtain 33.4 g 3-(4-biphenylyl)-6-(4-chlorophenyl)-pyrrolo[3,4-c]pyrrole-1,4(2H, 5H)-dione.

76 parts of the diketopyrrolopyrrole pigment obtained in the first step in Comparative Example 1, described below, 10 parts 3-(4-biphenylyl)-6-(4-chlorophenyl)-pyrrolo[3,4-c]pyrrole-1,4(2H, 5H)-dione, 9 parts of the benzoisoindole derivative dye derivative represented by the aforementioned (4-1), 900 parts sodium chloride, and 110 parts diethylene glycol were introduced into a kneader ("1 Gallon Kneader" from Inoue Mfg., Inc.) and were kneaded for 15 hours. The kneaded mixture was then introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 86.0 parts of a finely divided diketopyrrolopyrrole pigment composition. According to TEM observation, the particles of the obtained finely divided diketopyrrolopyrrole pigment composition were round and had a primary particle diameter of 20 to 40 nm.

## Example 7

### The first step

200 g tert-amyl alcohol that had been dried over molecular sieve and 140 g sodium tert-amyl alkoxide were introduced under a nitrogen atmosphere into a stainless steel reactor fitted with a reflux condenser and heating to 100°C was performed with stirring to produce an alcoholate solution.

Meanwhile, 88 g diisopropyl succinate and 100.0 g 4-chlorobenzonitrile were introduced into a 500 mL glass flask and were dissolved by heating to 90°C with stirring to produce a solution of their mixture. This hot solution of the mixture was gradually added dropwise at a constant rate over 2 hours with vigorous stirring into the previously described alcoholate solution heated to 100°C. After the completion of dropwise addition, heating and stirring were continued for 2 hours at 90°C to obtain the alkali metal salt of a diketopyrrolopyrrole pigment. To the obtained alkali metal salt was added 10 g of the 3-(4-biphenylyl)-6-(4-chlorophenyl)pyrrolo[3,4-c]pyrrole-1,4(2H, 5H)-dione synthesized in the previous example (Example 6) and stirring was performed for 1 hour.

600 g methanol, 600 g water, and 304 g acetic acid were added to a 3L jacketed glass reactor and were cooled to -10°C. To this cooled mixture was added, in small portions, the previously obtained solution of a diketopyrrolopyrrole pigment alkali metal salt, which had been cooled to 75°C; this was done while rotating an 8 cm-diameter shear disk at 4000 rpm in the cooled mixture using a high-stirring-speed disperser. The addition in small portions was carried out over about 120 minutes while cooling using a coolant and adjusting the rate of addition of the 75°C diketopyrrolopyrrole pigment alkali metal salt so as to always maintain the temperature of the methanol/acetic acid/water mixture at -5°C or below. After the addition of the alkali metal salt, dark red crystals precipitated and a dark red suspension was produced.

### The second step

The second step was performed as in Example 1. According to TEM observation, particles of the obtained finely divided diketopyrrolopyrrole pigment were round and had a primary particle diameter of 20 to 40 nm. The yield was 91.0 g.

## Example 8

### The first step

200 g tert-amyl alcohol that had been dried over molecular sieve and 140 g sodium tert-amyl alkoxide were introduced under a nitrogen atmosphere into a stainless steel reactor fitted with a reflux condenser and heating to 100°C was performed with stirring to produce an alcoholate solution. To this alcoholate solution were added 38 g of the diketopyrrolopyrrole pigment obtained in the first step of Comparative Example 1, see below, and 5 g of the 3-(4-biphenylyl)-6-(4-chlorophenyl)pyrrolo[3,4-c]pyrrole-1,4(2H, 5H)-dione obtained in Example 6 and stirring was performed for 2 hours at 100°C.

600 g methanol, 600 g water, and 304 g acetic acid were added to a 3L jacketed glass reactor and were cooled to -10°C. To this cooled mixture was added, in small portions, the previously obtained solution of a diketopyrrolopyrrole pigment composition alkali metal salt, which had been cooled to 75°C; this was done while rotating an 8 cm-diameter shear disk at 4000 rpm in the cooled mixture using a high-stirring-speed disperser. The addition in small portions was

carried out over about 120 minutes while cooling using a coolant and adjusting the rate of addition of the 75°C diketopyrrolopyrrole pigment composition alkali metal salt so as to always maintain the temperature of the methanol/acetic acid/water mixture at -5°C or below. After the addition of the alkali metal salt, dark red crystals precipitated and a dark red suspension was produced.

The second step

The second step was carried out as for the second step in Example 1, but changing the dye derivative slurry prepared in the second step of Example 1 from 100 g water and 5.5 g of the benzoisoindole derivative dye derivative represented by (4-1) above to a dye derivative slurry prepared from 50 g water and 2.75 g of the benzoisoindole derivative dye derivative represented by (4-1) above. According to TEM observation, the particles of the resulting finely divided diketopyrrolopyrrole pigment composition were round and had a primary particle diameter of 20 to 40 nm. The yield was 44.1 g.

Example 9

The following were filled into a ball mill with a capacity of approximately 1 L: 7.6 g of the diketopyrrolopyrrole pigment obtained in the first step of Comparative Example 1, described below, 1 g of the 3-(4-biphenylyl)-6-(4-chlorophenyl)pyrrolo[3,4-c]pyrrole-1,4(2H,5H)-dione obtained in Example 6, 0.9 g of the benzoisoindole derivative dye derivative represented by the previously described (4-1), an attrition material in the form of 1.5 kg steel balls (diameter = 1.2 cm) and 150 g nails (length = 3 cm), and 20 g aluminum sulfate hydrate. The mill was tightly sealed and mounted on its rotational platform and was rotated for 6 hours at room temperature; the attrition material was then removed from the milled contents; and the contents were subsequently stirred in 300 mL water. The resulting suspension was heated to 70°C and was stirred for an hour and a half at this temperature. The product was separated by filtration; the filter cake was washed with hot water until neutrality and absence of salts; and drying and grinding were carried out. According to TEM observation, the particles of the obtained finely divided diketopyrrolopyrrole pigment composition were round and had a primary particle diameter of 20 to 40 nm. The yield was 9.0 g.

Comparative Example 1

A finely divided diketopyrrolopyrrole pigment was obtained by carrying out a first step and second step as in Example 1, but in this case changing the 97.0 g 4-chlorobenzonitrile and 3.9 g 4-cyanobiphenyl of Example 1 to 100 g 4-chlorobenzonitrile alone.

According to TEM observation, the particles of the obtained finely divided diketopyrrolopyrrole pigment were round and had a primary particle diameter of 20 to 40 nm. The yield was 79.8 g.

Comparative Example 2

A finely divided diketopyrrolopyrrole pigment composition was obtained by carrying out a first step and second step as in Example 1, but in this case changing the 97.0 g 4-chlorobenzonitrile and 3.9 g 4-cyanobiphenyl of Example 1 to 70.0 g 4-chlorobenzonitrile and 22.5 g cyanobenzene.

According to TEM observation, the particles of the obtained finely divided diketopyrrolopyrrole pigment composition were round and had a primary particle diameter of 20 to 40 nm. The yield was 68.3 g.

Comparative Example 3

A finely divided diketopyrrolopyrrole pigment composition was obtained by carrying out a first step and second step as in Example 1, but in this case changing the 97.0 g 4-chlorobenzonitrile and 3.9 g 4-cyanobiphenyl of Example 1 to 70.0 g 4-chlorobenzonitrile and 37.7 g 2,4-dichlorobenzonitrile.

According to TEM observation, the particles of the obtained finely divided diketopyrrolopyrrole pigment composition were round and had a primary particle diameter of 20 to 40 nm. The yield was 65.8 g.

Comparative Example 4

86 parts of a commercially available diketopyrrolopyrrole pigment (C.I. Pigment Red 254, "IRGAPHOR Red B-CF" from Ciba Specialty Chemicals Corporation), 4 parts of the benzoisoindole derivative dye derivative represented by the aforementioned (4-1), 900 parts sodium chloride, and 110 parts diethylene glycol were introduced into a kneader ("1 Gallon Kneader" from Inoue Mfg., Inc.) and were kneaded for 15 hours. The kneaded mixture was introduced into

hot water and made into a slurry by stirring for 1 hour while heating at approximately 80°C. The sodium chloride and diethylene glycol were removed by filtration and washing with water; this was followed by drying for 24 hours at 80°C and grinding to obtain 86.0 parts of a finely divided diketopyrrolopyrrole pigment. According to TEM observation, the particles of the obtained finely divided diketopyrrolopyrrole pigment were round and had a primary particle diameter of 20 to 40 nm.

Comparative Example 5

This is a commercially available diketopyrrolopyrrole pigment ("IRGAPHOR Red B-CF" from Ciba Specialty Chemicals Corporation). The particles are round and the primary particle diameter is 50 to 70 nm.

Color compositions containing the diketopyrrolopyrrole pigment compositions obtained in Examples 1 to 9 and the diketopyrrolopyrrole pigments obtained in Comparative Examples 1 to 5 were prepared according to the following method of preparing a pigment dispersion paste.

Chip production method

The diketopyrrolopyrrole pigment (or pigment composition), benzoisoindole derivative dye derivative represented by the preceding (4-1), and acrylic resin solution were first thoroughly mixed in the proportions given below and were then milled on a two-roll mill and sheeted out. This sheet was folded into several plies and sent through the two-roll mill again. This process was repeated 10 to 40 times, after which a red compound chip was produced by grinding with a grinder.

| | | |
|---|---|---|
| diketopyrrolopyrrole pigment (or pigment composition) | 97.0 | g |
| dye derivative represented by the preceding (4-1) | 11.0 | g |
| acrylic resin solution (20% solids fraction) | 360.0 | g |

The acrylic resin solution used to prepare the pigment dispersion paste was itself prepared by the following method.

Production of the acrylic resin solution

370 g cyclohexanone was introduced into a reactor and was heated to 80°C while introducing nitrogen gas into the container. A mixture of 20.0 g methacrylic acid, 10.0 g methyl methacrylate, 35.0 g n-butyl methacrylate, 15.0 g 2-hydroxyethyl methacrylate, 4.0 g 2,2'-azobisisobutyronitrile, and 120.0 g ethylene oxide-modified p-cumylphenol acrylate ("Aronix M110" from TOAGOSEI Co., Ltd.) was added dropwise over 1 hour at the same temperature and a polymerization reaction was carried out. After the completion of dropwise addition, the reaction was continued for 3 hours at 80°C; 1.0 g azobisisobutyronitrile dissolved in 50 g cyclohexanone was then added; and the reaction was continued for an additional 1 hour at 80°C to synthesize a resin solution. After cooling to room temperature, approximately 2 g of the resin solution was taken as a sample and the nonvolatile fraction was measured by drying by heating for 20 minutes at 180°C. The acrylic resin solution was produced by adding cyclohexanone to the previously synthesized resin solution so as to provide a nonvolatile fraction of 20%.

Production of the pigment dispersion paste

The mixture with the composition given below was stirred and mixed to homogeneity, after which the pigment dispersion paste was prepared by carrying out dispersion for 4 hours at 320 rpm using a planetary ball mill (P-5 planetary ball mill from Fritsch Japan Co., Ltd.) and 290 g zirconia beads with a diameter of 0.5 mm.

| | | |
|---|---|---|
| previously prepared red compound chip | 25.2 | g |
| cyclohexanone | 23.0 | g |
| propylene glycol monomethyl ether | 91.8 | g |

Production of photosensitive color compositions

The pigment dispersion paste was blended as indicated below with stirring and mixing to homogeneity. This was followed by filtration with a 1 μm filter to yield a base-developable photosensitive color composition.

| | | |
|---|---|---|
| pigment dispersion paste | 36.4 | g |
| acrylic resin solution trimethylolpropane triacrylate ("NK Ester ATMPT" | 15.6 | g |
| from Shin-Nakamura Chemical Co., Ltd.) photoinitiator ("Irgacure-907" from Ciba Specialty | 5.4 | g |
| Chemicals Corporation) | 0.3 | g |
| sensitizer (EAB-F from Hodogaya Chemical Co., Ltd.) | 0.2 | g |
| cyclohexanone | 52.1 | g |

Application of the photosensitive color composition and preparation of a coated substrate for measurement

Using a spin coater, the obtained photosensitive color composition was coated on a 1.1 mm-thick 100 mm × 100 mm glass substrate; coated substrates were prepared that had four different film thicknesses for the colored film. After then drying for 20 minutes at 70°C, exposure to ultraviolet radiation at a cumulative light dose of 150 mJ was performed using an ultrahigh-pressure mercury lamp. Heating was carried out for 1 hour at 230°C after photoexposure; cooling by standing then provided a coated substrate for measurement.

Measurement of the contrast ratio

The coated substrate for measurement was sandwiched by a pair of polarizing plates and, using a "Luminance Colorimeter BM-5A" from the Topcon Corporation, the luminance was measured with the polarizing plates parallel and the luminance was measured with the polarizing plates orthogonal. The polarizing plates were "LLC2-92-18 Polarizing Film" from Sanritsu Co., Ltd. In order to block out stray light during measurement of the luminance, a black mask perforated with a 1 cm square hole was placed on the measurement site. The contrast ratio was calculated using the following formula from the luminance measured for the parallel configuration and the luminance measured for the orthogonal position.

$$\text{contrast ratio} = \text{luminance for parallel position}/\text{luminance for orthogonal position}$$

The contrast ratio for hue x = 0.64 was calculated from the relationship between the hue x value and the contrast ratio for the coated substrates having four different film thicknesses.

Observation of the production of foreign material by a heating step

The obtained four coated substrates with different film thicknesses were reheated for 1 hour at 250°C and were then observed at a magnification of 500X using an electron microscope. The observation results shown in the tables are for a film thickness when the hue x = 0.64.

The type of benzonitrile compound and the results for the primary particle diameter by TEM observation, the yield, the contrast ratio, and the production of foreign material are shown in Tables 1 to 4 for the diketopyrrolopyrrole pigments (or pigment compositions) obtained in the preceding examples and comparative examples.

[Table 1]

| No. | A-CN | B-CN | yield |
|---|---|---|---|
| Ex. 1 | 4-chlorobenzonitrile 97mol% | 4-cyanobiphenyl 3mol% | 80.0g |
| Ex. 2 | 4-chlorobenzonitrile 95mol% | 4-cyanobiphenyl 5mol% | 77.1 g |
| Ex. 3 | 4-chlorobenzonitrile 90mol% | 4-cyanobiphenyl 10mol% | 78.4g |
| Ex. 4 | 4-chlorobenzonitrile 95mol% | 4-cyanobiphenyl 5mol% | 78.9g |
| Ex. 5 | 4-chlorobenzonitrile 75mol% | 1-naphthonitrile 25mol% | 61.7g |
| Ex. 6 | - | - | 144.2g |
| Ex. 7 | - | - | 91.0g |
| Ex. 8 | - | - | 44.1 g |
| Ex. 9 | - | - | 9.0g |

(continued)

| No. | A-CN | B-CN | yield |
|---|---|---|---|
| Com. Ex. 1 | 4-chlorobenzonitrile 100mol% | - | 79.8g |
| Com. Ex. 2 | 4-chlorobenzonitrile 70mol% | cyanobenzene 30mol% | 68.3g |
| Com. Ex. 3 | 4-chlorobenzonitrile 70mol% | 2,4-dichlorobenzonitrile 30mol% | 65.8g |
| Com. Ex. 4 | - | - | 143.3g |
| Com. Ex. 5 | - | - | - |

[Table 2]

| No. | contrast ratio | production of foreign material 250°C/1h | primary parti cle diameter |
|---|---|---|---|
| Ex. 1 | 7109 | 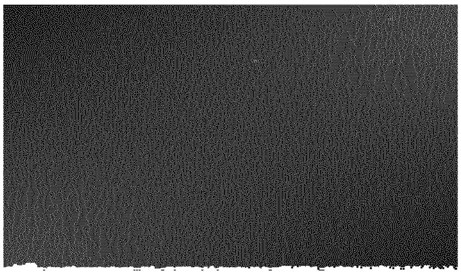 | 20-40nm |
| Ex. 2 | 9247 | 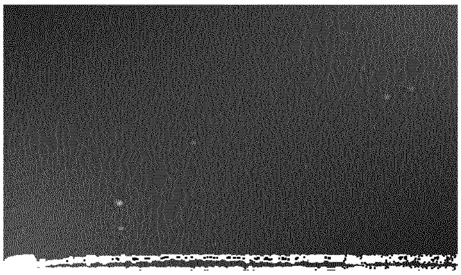 | 20-40nm |
| Ex. 3 | 9451 | 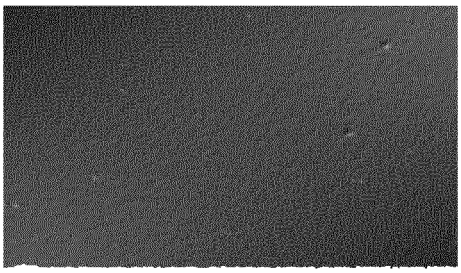 | 20-40nm |
| Ex. 4 | 8503 | 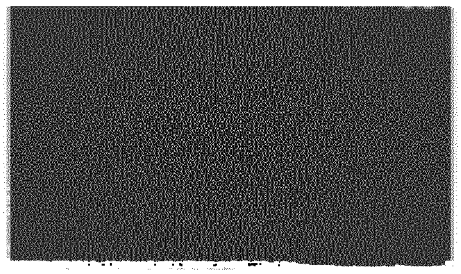 | 20-40nm |

(continued)

| No. | contrast ratio | production of foreign material 250°C/1h | primary parti cle diameter |
|---|---|---|---|
| Ex. 5 | 9491 | 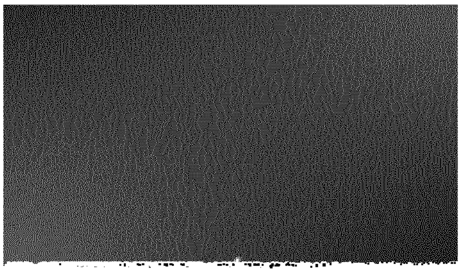 | 20-40nm |

[Table 3]

| No. | contrast ratio | production of foreign material 250°C/1h | primary parti cle diameter |
|---|---|---|---|
| Ex. 6 | 7449 | 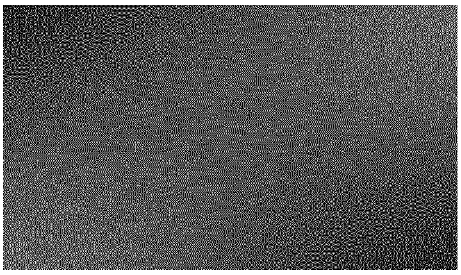 | 20-40nm |
| Ex. 7 | 7065 | 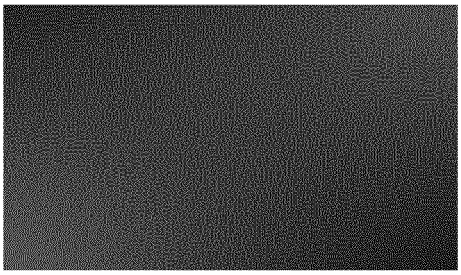 | 20-40nm |
| Ex. 8 | 6989 | 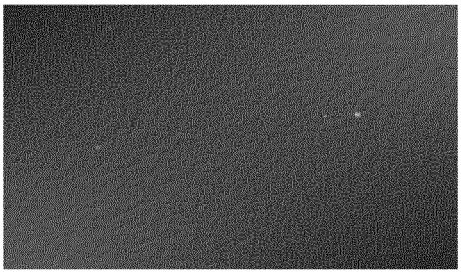 | 20-40nm |
| Ex. 9 | 6549 | 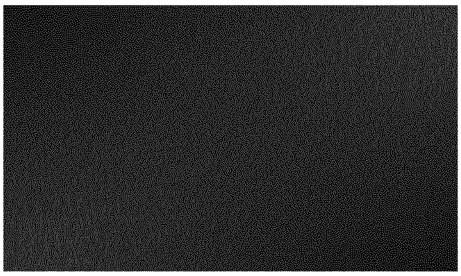 | 20-40nm |

[Table 4]

| No. | contrast ratio | production of foreign material 250°C/1h | primary parti cle diameter |
|---|---|---|---|
| Com. Ex. 1 | 9243 | 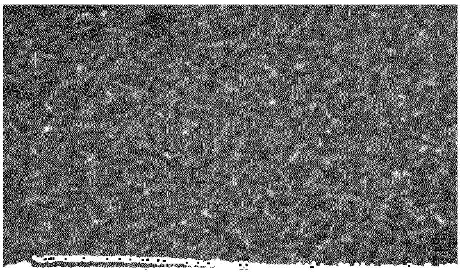 | 20-40nm |
| Com. Ex. 2 | 7358 | 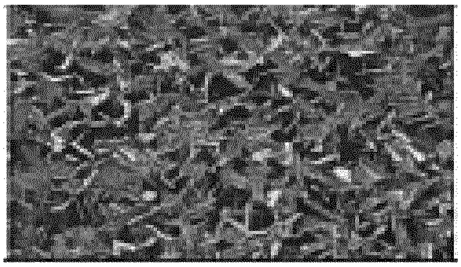 | 20-40nm |
| Com. Ex. 3 | 10132 | 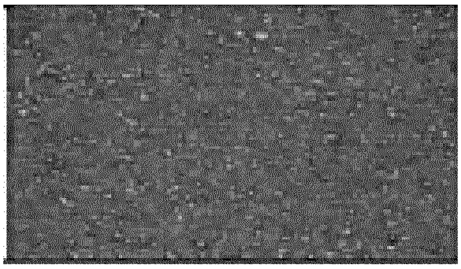 | 20-40nm |
| Com. Ex. 4 | 5587 | 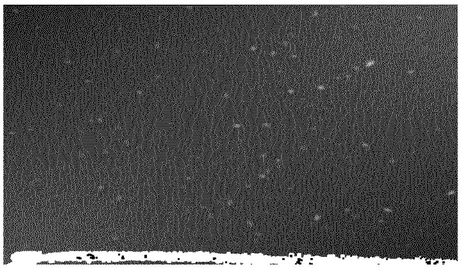 | 20-40nm |
| Com. Ex. 5 | 815 | 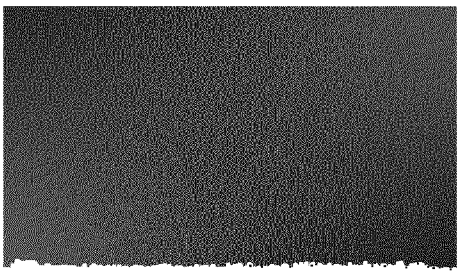 | 50-70nm |

Example 10

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 99.5 g 4-chlorobenzonitrile and 0.7 g 4-cyanobiphenyl. According to TEM observation, the particles in the resulting finely divided diketopyrrolopyrrole pigment composition were round and had a primary particle diameter of 20 to 40 nm. The yield was 81.8 g.

Example 11

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 55.0 g 4-chlorobenzonitrile and 58.6 g 4-cyanobiphenyl. According to TEM observation, the particles in the resulting finely divided diketopyrrolopyrrole pigment composition were round and had a primary particle diameter of 20 to 40 nm. The yield was 72.8 g.

Example 12

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 69.8 g 4-chlorobenzonitrile and 49.9 g 1-naphthonitrile. According to TEM observation, the particles in the resulting finely divided diketopyrrolopyrrole pigment composition were round and had a primary particle diameter of 20 to 40 nm. The yield was 60.0 g.

Example 13

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 95.0 g 4-chlorobenzonitrile and 5.8 g 4-tert-butylbenzonitrile. According to TEM observation, the particles in the resulting finely divided diketopyrrolopyrrole pigment composition were round and had a primary particle diameter of 20 to 40 nm. The yield was 82.5 g.

Example 14

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 90.0 g 4-chlorobenzonitrile and 11.5 g 4-tert-butylbenzonitrile. According to TEM observation, the particles in the resulting finely divided diketopyrrolopyrrole pigment composition were round and had a primary particle diameter of 20 to 40 nm. The yield was 82.7 g.

Example 15

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 95.0 g 4-chlorobenzonitrile and 4.2 g 4-methylbenzonitrile. According to TEM observation, the particles in the resulting finely divided diketopyrrolopyrrole pigment composition were round and had a primary particle diameter of 20 to 40 nm. The yield was 82.6 g.

Comparative Example 6

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 95.0 g 4-chlorobenzonitrile and 4.6 g 4-cyanobenzonitrile. According to TEM observation, the particles in the resulting finely divided diketopyrrolopyrrole pigment composition were round and had a primary particle diameter of 20 to 40 nm. The yield was 80.3 g.

Example 16

90 parts of the diketopyrrolopyrrole pigment composition obtained in Example 2, 900 parts sodium chloride, and 110 parts diethylene glycol were introduced into a kneader ("1 Gallon Kneader" from Inoue Mfg., Inc.) and were kneaded for 15 hours. The kneaded mixture was then introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 85.7 parts of a finely divided diketopyrrolopyrrole pigment composition. According to TEM observation, the particles in the obtained finely divided diketopyrrolopyrrole pigment composition were round and had a primary particle diameter of 10 to 30 nm.

Example 17

90 parts of the diketopyrrolopyrrole pigment composition obtained as in Example 2 but without carrying out the dye derivative treatment, 900 parts sodium chloride, and 110 parts diethylene glycol were introduced into a kneader ("1 Gallon Kneader" from Inoue Mfg., Inc.) and were kneaded for 15 hours. The kneaded mixture was then introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 86.0 parts of a finely divided diketopyrrolopyrrole pigment composition. According to TEM observation, the particles in the obtained finely divided diketopyrrolopyrrole pigment composition were round and had a primary particle diameter of 10 to 30 nm.

Example 18

Except for changing in the second step of Example 2 the benzoisoindole derivative dye derivative represented by the preceding (4-1) to the quinacridone dye derivative represented by the previously given formula (1-9), a finely divided diketopyrrolopyrrole pigment composition was similarly obtained. According to TEM observation, the particles in the obtained finely divided diketopyrrolopyrrole pigment composition were round and had a primary particle diameter of 20 to 40 nm. The yield was 81.4 g.

Example 19

Except for changing in the second step of Example 2 the benzoisoindole derivative dye derivative represented by the preceding (4-1) to the diketopyrrolopyrrole dye derivative represented by the previously given formula (3-6), a finely divided diketopyrrolopyrrole pigment composition was similarly obtained. According to TEM observation, the particles in the obtained finely divided diketopyrrolopyrrole pigment composition were round and had a primary particle diameter of 20 to 40 nm. The yield was 81.0 g.

Example 20

Except for changing in the second step of Example 2 the benzoisoindole derivative dye derivative represented by the preceding (4-1) to the anthraquinone dye derivative represented by the previously given formula (5-5), a finely divided diketopyrrolopyrrole pigment composition was similarly obtained. According to TEM observation, the particles in the obtained finely divided diketopyrrolopyrrole pigment composition were round and had a primary particle diameter of 20 to 40 nm. The yield was 80.0 g.

Example 21

Except for changing in the second step of Example 2 the benzoisoindole derivative dye derivative represented by the preceding (4-1) to the dianthraquinone dye derivative represented by the previously given formula (6-5), a finely divided diketopyrrolopyrrole pigment composition was similarly obtained. According to TEM observation, the particles in the obtained finely divided diketopyrrolopyrrole pigment composition were round and had a primary particle diameter of 20 to 40 nm. The yield was 82.1 g.

Example 22

Except for changing in the second step of Example 2 the benzoisoindole derivative dye derivative represented by the preceding (4-1) to the thiazineindigo dye derivative represented by the previously given formula (7-4), a finely divided diketopyrrolopyrrole pigment composition was similarly obtained. According to TEM observation, the particles in the obtained finely divided diketopyrrolopyrrole pigment composition were round and had a primary particle diameter of 20 to 40 nm. The yield was 81.7 g.

Example 23

Except for changing in the second step of Example 2 the benzoisoindole derivative dye derivative represented by the preceding (4-1) to the azo dye derivative represented by the previously given formula (8-10), a finely divided diketopyrrolopyrrole pigment composition was similarly obtained. According to TEM observation, the particles in the obtained finely divided diketopyrrolopyrrole pigment composition had a shape from round to rice-like and had a primary particle diameter of 20 to 40 nm. The yield was 81.9 g.

Example 24

Except for changing in the second step of Example 2 the benzoisoindole derivative dye derivative represented by the preceding (4-1) to the azo dye derivative represented by the previously given formula (9-1), a finely divided diketopyrrolopyrrole pigment composition was similarly obtained. According to TEM observation, the particles in the obtained finely divided diketopyrrolopyrrole pigment composition had a shape from round to rice-like and had a primary particle diameter of 20 to 40 nm. The yield was 81.4 g.

Example 25

Except for changing in the second step of Example 2 the benzoisoindole derivative dye derivative represented by the preceding (4-1) to the quinophthalone dye derivative represented by the previously given (11-17), a finely divided diketopyrrolopyrrole pigment composition was similarly obtained. According to TEM observation, the particles in the obtained finely divided diketopyrrolopyrrole pigment composition had a shape from round to rice-like and had a primary particle diameter of 20 to 40 nm. The yield was 82.4 g.

Comparative Example 26

85 parts of a commercially available diketopyrrolopyrrole pigment (C.I. Pigment Red 254, "IRGAPHOR Red B-CF" from Ciba Specialty Chemicals Corporation), 1 part 3-(4-biphenylyl)-6-(4-chlorophenyl)pyrrolo[3,4-c]pyrrole-1,4(2H,5H)-dione, 4 parts of the benzoisoindole derivative dye derivative represented by the aforementioned (4-1), 900 parts sodium chloride, and 110 parts diethylene glycol were introduced into a kneader ("1 Gallon Kneader" from Inoue Mfg., Inc.) and were kneaded for 15 hours. The kneaded mixture was introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 86.1 parts of a finely divided diketopyrrolopyrrole pigment composition. According to TEM observation, the particles of the obtained finely divided diketopyrrolopyrrole pigment composition were round and had a primary particle diameter of 20 to 40 nm.

Comparative Example 27

83 parts of a commercially available diketopyrrolopyrrole pigment (C.I. Pigment Red 254, "IRGAPHOR Red B-CF" from Ciba Specialty Chemicals Corporation), 3 parts 3-(4-biphenylyl)-6-(4-chlorophenyl)pyrrolo[3,4-c]pyrrole-1,4(2H,5H)-dione, 4 parts of the benzoisoindole derivative dye derivative represented by the aforementioned (4-1), 900 parts sodium chloride, and 110 parts diethylene glycol were introduced into a kneader ("1 Gallon Kneader" from Inoue Mfg., Inc.) and were kneaded for 15 hours. The kneaded mixture was introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 86.1 parts of a finely divided diketopyrrolopyrrole pigment composition. According to TEM observation, the particles of the obtained finely divided diketopyrrolopyrrole pigment composition were round and had a primary particle diameter of 20 to 40 nm.

Comparative Example 28

90 parts of the diketopyrrolopyrrole pigment obtained in Comparative Example 1 was mixed with 10 parts of the diketopyrrolopyrrole pigment composition obtained in Reference Example 1, infra.

Comparative Example 7

90 parts of the diketopyrrolopyrrole pigment obtained in Comparative Example 1, 900 parts sodium chloride, and 110 parts diethylene glycol were introduced into a kneader ("1 Gallon Kneader" from Inoue Mfg., Inc.) and were kneaded for 15 hours. The kneaded mixture was introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 84.6 parts of a finely divided diketopyrrolopyrrole pigment. According to TEM observation, the particles of the obtained finely divided diketopyrrolopyrrole pigment were round and had a primary particle diameter of 20 to 40 nm.

Comparative Example 8

83 parts of a commercially available diketopyrrolopyrrole pigment (C.I. Pigment Red 254, "IRGAPHOR Red B-CF" from Ciba Specialty Chemicals Corporation), 3 parts of a commercially available diketopyrrolopyrrole pigment (C.I. Pigment Red 264, "IRGAZIN DPP RUBINE TR" from Ciba Specialty Chemicals Corporation), 4 parts of the benzoisoindole derivative dye derivative represented by the aforementioned (4-1), 900 parts sodium chloride, and 110 parts diethylene glycol were introduced into a kneader ("1 Gallon Kneader" from Inoue Mfg., Inc.) and were kneaded for 15 hours. The kneaded mixture was introduced into hot water and made into a slurry by stirring for 1 hour while heating at approximately 80°C. The sodium chloride and diethylene glycol were removed by filtration and washing with water; this was followed by drying for 24 hours at 80°C and grinding to obtain 86.3 parts of a finely divided diketopyrrolopyrrole pigment composition. According to TEM observation, the particles of the obtained finely divided diketopyrrolopyrrole pigment composition were round and had a primary particle diameter of 20 to 40 nm.

Reference Example 1

A finely divided diketopyrrolopyrrole pigment composition was obtained by performing the same first step and second step as in Example 1, but in this case changing the 97.0 g 4-chlorobenzonitrile and 3.9 g 4-cyanobiphenyl of Example 1 to 45.0 g 4-chlorobenzonitrile and 71.7 g 4-cyanobiphenyl.

According to TEM observation, the particles of the resulting finely divided diketopyrrolopyrrole pigment composition were round and had a primary particle diameter of 20 to 40 nm. The yield was 78.0 g.

Color compositions containing the diketopyrrolopyrrole pigments (or pigment compositions) obtained in the preceding Examples 10 to 28, Comparative Examples 6 to 8, and Reference Example 1 were prepared as described above in "Production of the pigment dispersion paste" with reference to Examples 1 to 9 and Comparative Examples 1 to 5. In addition, coated substrates for measurement were produced as in the previously described "Production of a photosensitive color composition" and "Application of the photosensitive color composition and preparation of a coated substrate for measurement" and the contrast ratio was measured and the generation of foreign material by heating was observed. These results are given in Tables 5 to 10.

[Table 5]

| No. | A-CN | B-CN | yield |
|---|---|---|---|
| Ex. 10 | 4-chlorobenzonitrile 99.8mol% | 4-cyanobiphenyl 0.2mol% | 81.8g |
| Ex. 11 | 4-chlorobenzonitrile 55mol% | 4-cyanobiphenyl 45mol% | 72.8g |
| Ex. 12 | 4-chlorobenzonitrile 60mol% | 1-naphthonitrile 40mol% | 60.0g |
| Ex. 13 | 4-chlorobenzonitrile 95mol% | 4-tert-butylbenzonitrile 5mol% | 82.5g |
| Ex. 14 | 4-chlorobenzonitrile 90mol% | 4-tert-butylbenzonitrile 10mol% | 82.7g |
| Ex. 15 | 4-chlorobenzonitrile 95mol% | 4-methylbenzonitrile 5mol% | 82.6g |
| Ex. 16 | - | - | 142.8g |
| Ex. 17 | - | - | 143.3g |
| Ex. 18 | 4-chlorobenzonitrile 95mol% | 4-cyanobiphenyl 5mol% | 81.4g |
| Ex. 19 | 4-chlorobenzonitrile 95mol% | 4-cyanobiphenyl 5mol% | 81.0g |
| Ex. 20 | 4-chlorobenzonitrile 95mol% | 4-cyanobiphenyl 5mol% | 80.0g |
| Ex. 21 | 4-chlorobenzonitrile 95mol% | 4-cyanobiphenyl 5mol% | 82.1g |
| Ex. 22 | 4-chlorobenzonitrile 95mol% | 4-cyanobiphenyl 5mol% | 81.7g |
| Ex. 23 | 4-chlorobenzonitrile 95mol% | 4-cyanobiphenyl 5mol% | 81.9g |
| Ex. 24 | 4-chlorobenzonitrile 95mol% | 4-cyanobiphenyl 5mol% | 81.4g |
| Ex. 25 | 4-chlorobenzonitrile 95mol% | 4-cyanobiphenyl 5mol% | 82.4g |
| Ex. 26 | - | - | 143.5g |
| Ex. 27 | - | - | 143.5g |
| Ex. 28 | - | - | - |
| Com. Ex. 6 | 4-chlorobenzonitrile 95mol% | 4-cyanobenzonitrile 5mol% | 80.3g |
| Com. Ex. 7 | - | - | 141.0g |

(continued)

| No. | A-CN | B-CN | yield |
|---|---|---|---|
| Com. Ex. 8 | - | - | 143.8g |
| Ref. 1 | 4-chlorobenzonitrile 45mol% | 4-cyanobiphenyl 55mol% | 78.0g |

[Table 6]

| No. | contrast ratio | production of foreign material 250°C/1h | primary particle diameter |
|---|---|---|---|
| Ex. 10 | 8551 | 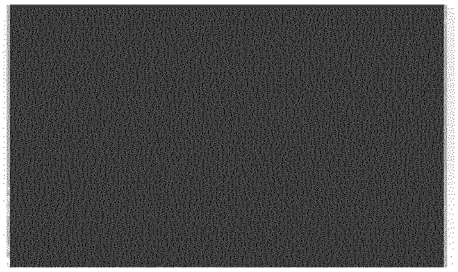 | 20-40nm |
| Ex. 11 | 9754 | 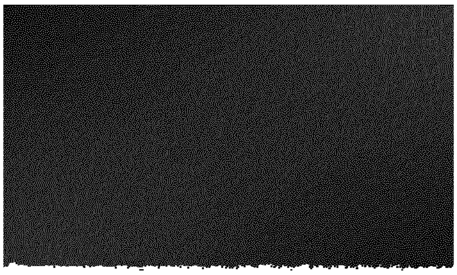 | 20-40nm |
| Ex. 12 | 9571 | 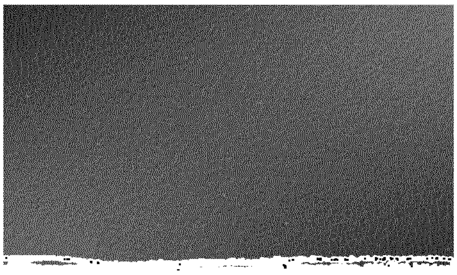 | 20-40nm |
| Ex. 13 | 8480 | 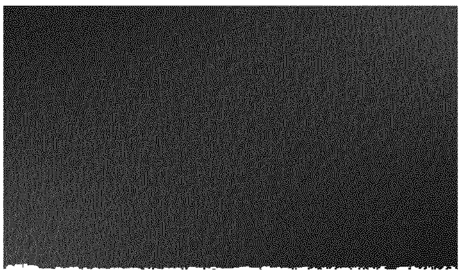 | 20-40nm |
| Ex. 14 | 8928 | 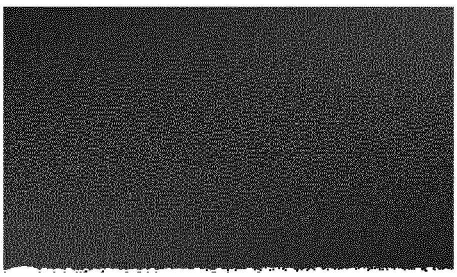 | 20-40nm |

[Table 7]

| No. | contrast ratio | production of foreign material 250°C/1h | primary particle diameter |
| --- | --- | --- | --- |
| Ex. 15 | 9183 | 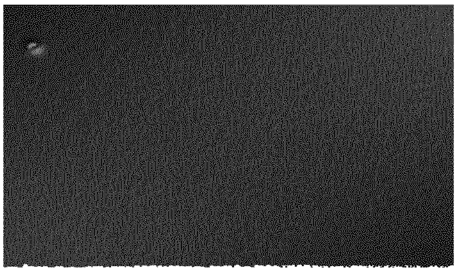 | 20-40nm |
| Ex. 16 | 11174 | 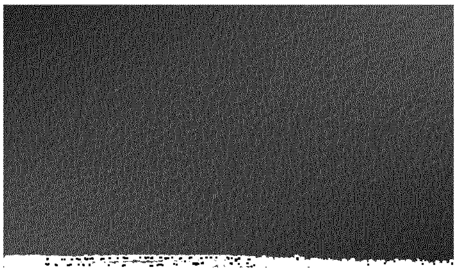 | 10-30nm |
| Ex. 17 | 8716 | 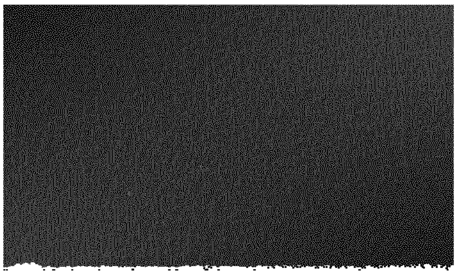 | 10-30nm |
| Ex. 18 | 9108 | 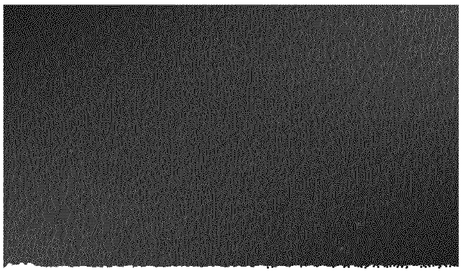 | 20-40nm |
| Ex. 19 | 10171 | 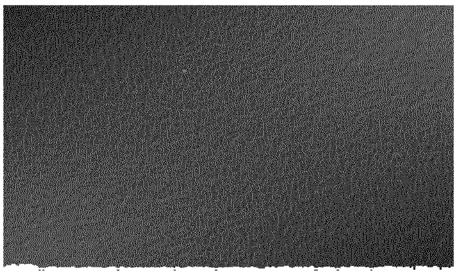 | 20-40nm |

[Table 8]

| No. | contrast ratio | production of foreign material 250°C/1h | primary particle diameter |
|---|---|---|---|
| Ex. 20 | 8692 | 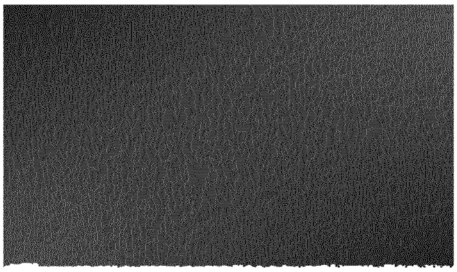 | 20-40nm |
| Ex. 21 | 8599 | 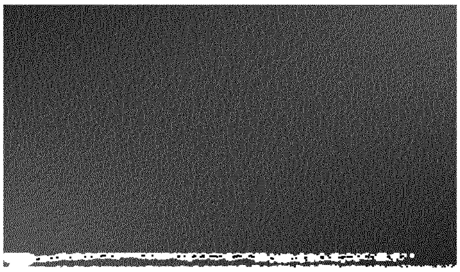 | 20-40nm |
| Ex. 22 | 9154 | 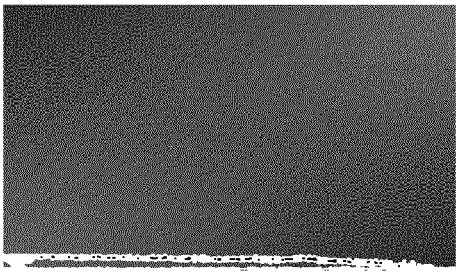 | 20-40nm |
| Ex. 23 | 8732 | 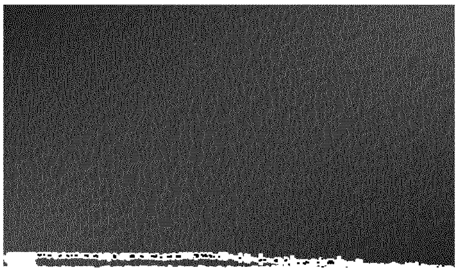 | 20-40nm |
| Ex. 24 | 8795 | 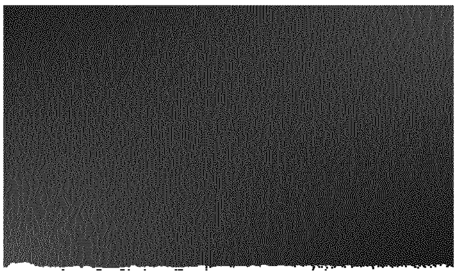 | 20-40nm |

[Table 9]

| No. | contrast ratio | production of foreign material 250°C/1h | primary particle diameter |
|---|---|---|---|
| Ex. 25 | 8823 | 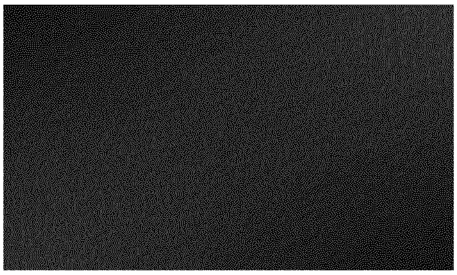 | 20-40nm |
| Comparative Ex. 26 | 6034 | 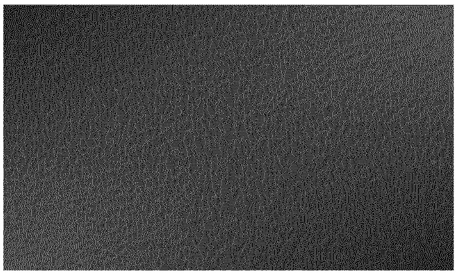 | 20-40nm |
| Comparative Ex. 27 | 6369 | 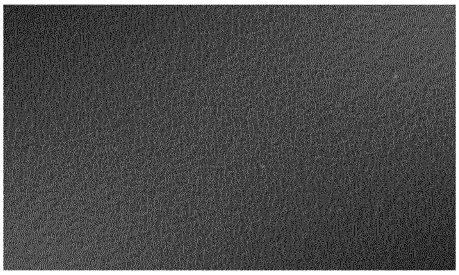 | 20-40nm |
| Comparative Ex. 28 | 9322 | 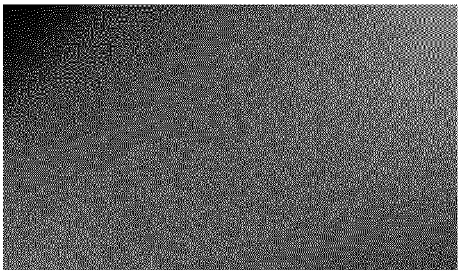 | 20-40nm |

[Table 10]

| No. | contrast ratio | production of foreign material 250°C/1h | primary particle diameter |
|---|---|---|---|
| Com. Ex. 6 | 8454 | 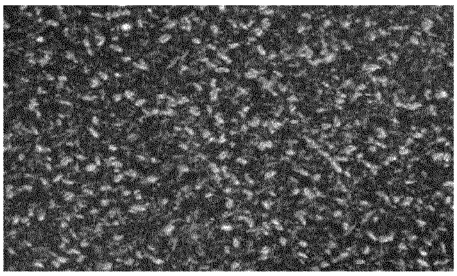 | 20-40nm |

(continued)

| No. | contrast ratio | production of foreign material 250°C/1h | primary particle diameter |
|---|---|---|---|
| Com. Ex. 7 | 7989 | 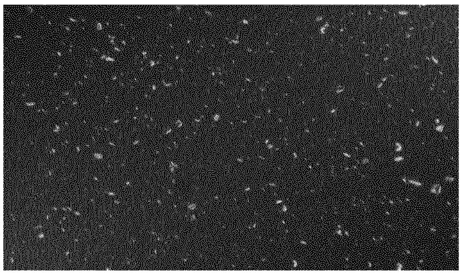 | 20-40nm |
| Com. Ex. 8 | 5523 | 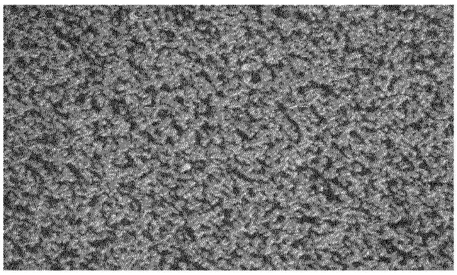 | 20-40nm |
| Ref. 1 | 9721 | 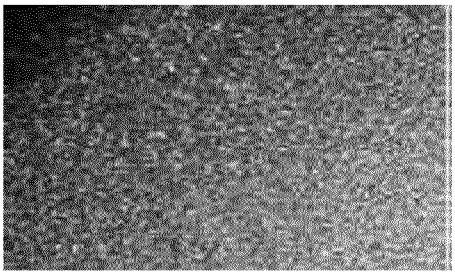 | 20-40nm |

Effects of the Invention

Examples 1 to 28, which relate to diketopyrrolopyrrole pigment compositions of the present invention, exhibited higher contrast ratios than the commercially available IRGAPHOR Red B-CF (Comparative Example 5) and the pigment provided by microfine-sizing IRGAPHOR Red B-CF (Comparative Example 4). Examples 1 to 28, which relate to diketopyrrolopyrrole pigment compositions of the present invention, also provided substantially more inhibition of foreign material production than did Comparative Example 1, which used only 4-chlorobenzonitrile.

The results of the evaluations in Examples 10, 11, and 12 demonstrated that the effects due to the addition of the benzonitrile compound represented by "B-CN" can be expected to appear from at least 0.2 mol%. In addition, based on the results of the evaluations in the preceding examples, the effects of a high contrast and an inhibited production of foreign material were also obtained at 45 mol% for the use of, for example, cyanobiphenyl (Example 11) for the benzonitrile compound represented by "B-CN" and at 40 mol% for the use of naphthonitrile (Example 12) as the benzonitrile compound represented by "B-CN".

The results for Examples 2, 5, 13, and 15 and Comparative Examples 2, 3, and 6 demonstrated the occurrence of a selectivity with respect to the benzonitrile compound represented by "B-CN".

The results of the evaluations in Examples 6 to 9, 16, and 17 demonstrated that, regardless of the method of pigment preparation, an excellent contrast ratio is obtained and the generation of foreign material is dramatically less than heretofore.

The results of the evaluations in Examples 18 to 25 demonstrated that, regardless of the species of dye derivative, an excellent contrast ratio is obtained and the generation of foreign material is dramatically less than heretofore.

Based on the results of the evaluations in Comparative Examples 26 and 27 and Comparative Example 4, it is thought that the effective component that accomplishes the effects of the present invention is the diketopyrrolopyrrole compound represented by formula (II) (heteroDPP).

## Claims

1. A diketopyrrolopyrrole type pigment composition, comprising at least diketopyrrolopyrrole compounds represented by the following general formulas (I) and (II), wherein in formulas (I) and (II),

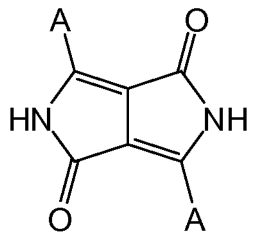
(I)

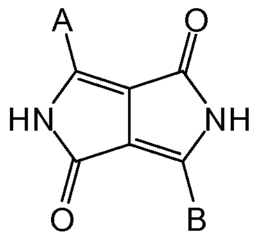
(II)

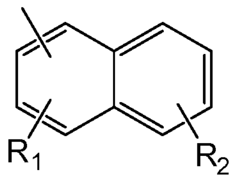
(B-1)

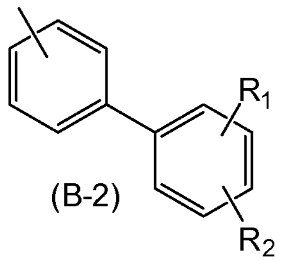
(B-2)

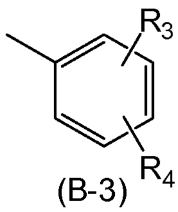
(B-3)

A is a 4-chlorophenyl group;
B is a group represented by the formula (B-1), (B-2), or (B-3);
$R_1$ and $R_2$ in formulas (B-1) and (B-2) are each independently hydrogen, halogen, $C_{1-6}$ alkyl, $C_{1-18}$ alkoxy, $C_{2-19}$ alkoxycarbonyl, $C_{2-19}$ alkylcarbamoyl, $C_{1-18}$ alkylmercapto, $C_{1-18}$ alkylamino, or $C_{5-6}$ cycloalkyl; and
$R_3$ and $R_4$ in formula (B-3) are each independently hydrogen or $C_{1-6}$ alkyl, wherein $R_3$ and $R_4$ are not both hydrogen,
wherein the diketopyrrolopyrrole type pigment composition has an average primary particle diameter of not more than 40 nm,
with the proviso that the diketopyrrolopyrrole type pigment composition does not have a median particle size $d_{50}$ in the range from 10 to 60 nm when it comprises a compound of the following formula

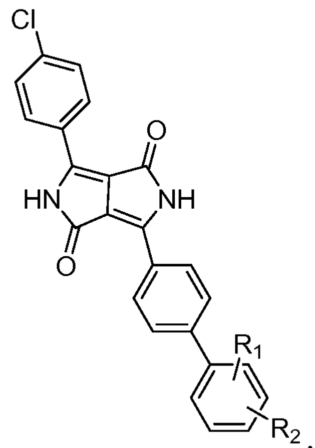

wherein $R_1$ and $R_2$ are each independently hydrogen, F, Cl, Br, $C_{1-6}$ alkyl, $C_{1-8}$ alkoxy, or $C_{5-6}$ cycloalkyl.

2. The diketopyrrolopyrrole type pigment composition according to claim 1, comprising at least one diketopyrrolopyrrole compound represented by the following formula (II-1) or (II-2)

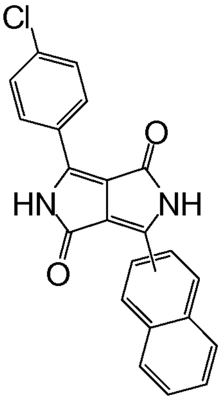

(II-1)

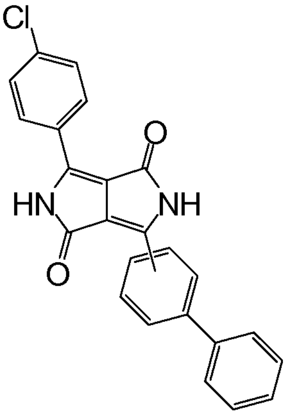

(II-2) ,

with the proviso that the diketopyrrolopyrrole type pigment composition does not have a median particle size $d_{50}$ in the range from 10 to 60 nm when it comprises a compound of formula (II-2) having the formula (II-6)

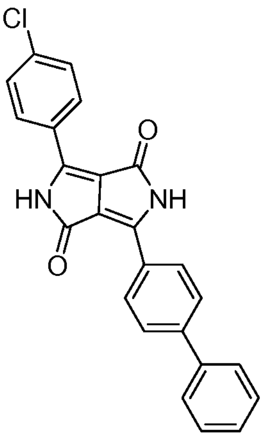

(II-6).

**3.** The diketopyrrolopyrrole pigment composition according to claim 1, comprising at least one diketopyrrolopyrrole compound represented by the following formula (II-3) or (II-4)

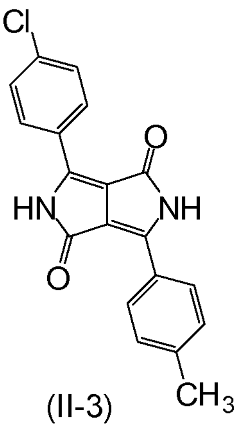

(II-3)

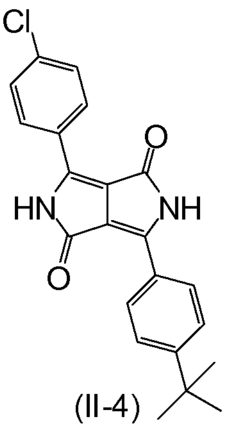

(II-4) .

**4.** The diketopyrrolopyrrole type pigment composition according to claim 1, comprising at least one diketopyrrolopyrrole compound represented by the following formula (II-5) or (II-6)

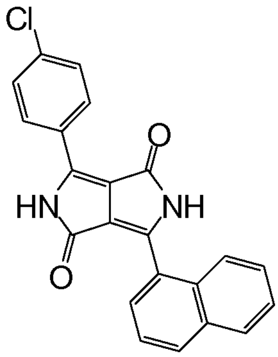 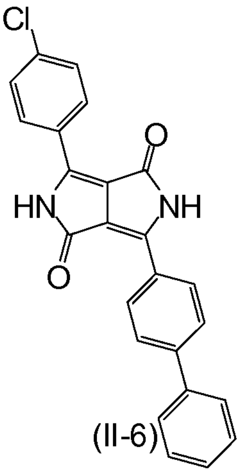

(II-5) (II-6) ,

with the proviso that the diketopyrrolopyrrole type pigment composition does not have a median particle size $d_{50}$ in the range from 10 to 60 nm when it comprises the compound (II-6).

**5.** The diketopyrrolopyrrole type pigment composition according to any of claims 1 to 4, that is obtained by comprising the step of reacting, with 1 mole of a succinate diester, a mixture of a total of 2 moles comprising 60 mol% to 99.8 mol% of a benzonitrile compound represented by the formula "A-CN" and 0.2 mol% to 40 mol% of a benzonitrile compound represented by the formula "B-CN".

**6.** The diketopyrrolopyrrole type pigment composition according to any of claims 1 to 5, that is obtained by a method comprising the steps of:

reacting a succinate diester with a mixture of benzonitrile compounds represented by formulas "A-CN" and "B-CN" to obtain an alkali metal salt of diketopyrrolopyrrole type pigments and protonating the alkali metal salt; and further adding, prior to the protonation, a diketopyrrolopyrrole compound represented by the formula (II).

**7.** The diketopyrrolopyrrole type pigment composition according to any of claims 1 to 5, that is obtained by a method comprising the step of reacting a succinate diester with a mixture of benzonitrile compounds represented by formulas "A-CN" and "B-CN" to obtain an alkali metal salt of diketopyrrolopyrrole type pigments and protonating the alkali metal salt under acidic or basic conditions.

**8.** The diketopyrrolopyrrole type pigment composition according to any of claims 1 to 7, comprising a dye derivative represented by the general formula "Q-X",
wherein in the general formula "Q-X",

Q is a quinacridone residue, diketopyrrolopyrrole residue, benzoisoindole residue, anthraquinone residue, dianthraquinone residue, thiazineindigo residue, azo dye residue, or quinophthalone residue;
each X is independently -OH, $-SO_3H$, -COOH, or a monovalent to trivalent metal salt, alkylamine salt, piperazinyl salt, or morpholinyl salt of these acidic groups; or a phthalimidomethyl group; or a group in which a triazine ring bearing a tertiary amino group-containing basic group is bonded on one side of -NH-; or a group represented by the following formula (a), (b), (c), (d), (e), (f), (g), or (h);
each $T_1$ is independently $-SO_2NH-$, -CONH-, $-CH_2NHCOCH_2-$, -S-, or -NH-;
each $T_2$ is independently $C_{1-4}$ alkylene; and
$R_1$ and $R_2$ are each independently $C_{1-4}$ alkyl, and $R_3$ is -H, $-NH_2$, $-NHCOCH_3$, or $-NHR_4$, wherein $R_4$ is $C_{1-4}$ alkyl or a triazine ring bearing a tertiary amino group-containing basic group.

(a) 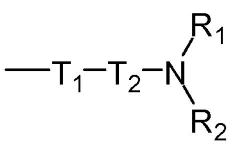

(b) 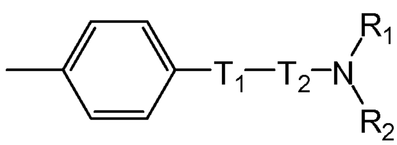

(c)
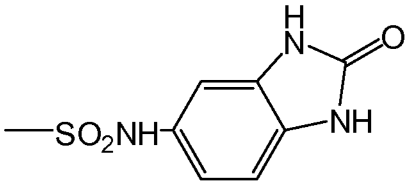
(d)
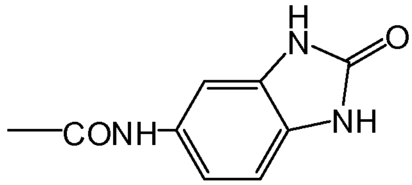

(e)
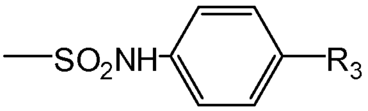
(f)
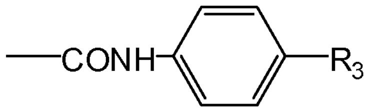

(g)
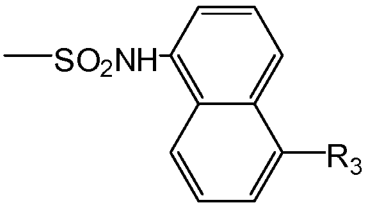
(h)
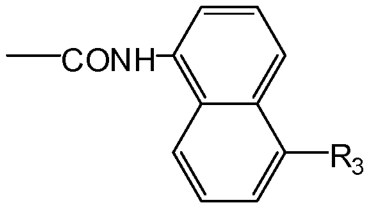

9. An organic polymer material, that is colored by the diketopyrrolopyrrole type pigment composition according to any of claims 1 to 8.

10. A color composition for a color filter, that is obtained by dispersing the diketopyrrolopyrrole type pigment composition according to any of claims 1 to 8 in a transparent resin.

11. A red film, comprising a pigment vehicle and the diketopyrrolopyrrole type pigment composition according to any of claims 1 to 8.

**Patentansprüche**

1. Eine Diketopyrrolopyrrol-artige Pigmentzusammensetzung umfassend mindestens Diketopyrrolopyrrolverbindungen dargestellt durch die folgenden allgemeinen Formeln (I) und (II), wobei in den Formeln (I) und (II)

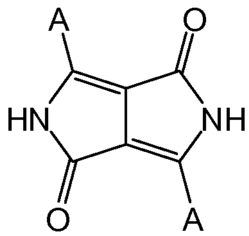
(I)
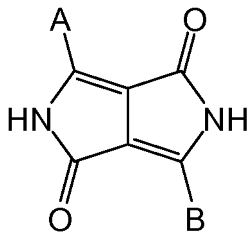
(II)

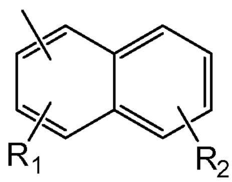
(B-1)
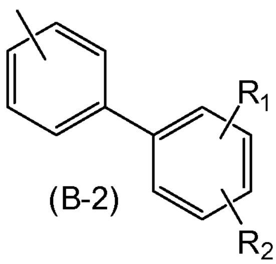
(B-2)
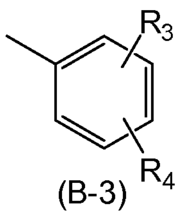
(B-3)

A eine 4-Chlorphenylgruppe ist;
B eine Gruppe dargestellt durch die Formel (B-1), (B-2) oder (B-3) ist;
$R_1$ und $R_2$ in den Formeln (B-1) und (B-2) jeweils unabhängig voneinander Wasserstoff, Halogen, $C_{1-6}$-Alkyl,

$C_{1-18}$-Alkoxy, $C_{2-19}$-Alkoxycarbonyl, $C_{2-19}$-Alkylcarbamoyl, $C_{1-18}$-Alkylmercapto, $C_{1-18}$-Alkylamino oder $C_{5-6}$-Cycloalkyl ist; und

$R_3$ und $R_4$ in Formel (B-3) jeweils unabhängig Wasserstoff oder $C_{1-6}$-Alkyl ist, wobei $R_3$ und $R_4$ nicht beide Wasserstoff sind,

wobei die Diketopyrrolopyrrol-artige Pigmentzusammensetzung einen durchschnittlichen Primärteilchendurchmesser von nicht mehr als 40 nm aufweist,

mit der Maßgabe, dass die Diketopyrrolopyrrol-artige Pigmentzusammensetzung keine mittlere Teilchengröße $d_{50}$ im Bereich von 10 bis 60 nm aufweist, wenn sie eine Verbindung der folgenden Formel umfasst

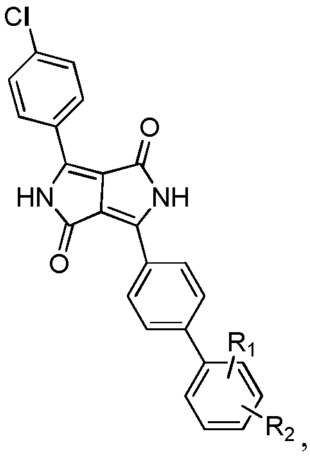

wobei $R_1$ und $R_2$ jeweils unabhängig voneinander Wasserstoff, F, Cl, Br, $C_{1-6}$-Alkyl, $C_{1-8}$-Alkoxy oder $C_{5-6}$-Cycloalkyl ist.

**2.** Die Diketopyrrolopyrrol-artige Pigmentzusammensetzung gemäß Anspruch 1 umfassend mindestens eine Diketopyrrolopyrrol-Verbindung dargestellt durch die folgende Formel (II-1) oder (II-2)

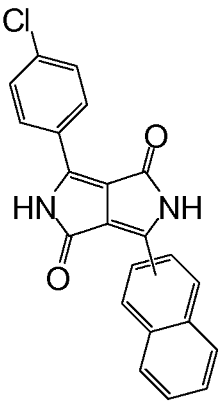

(II-1)

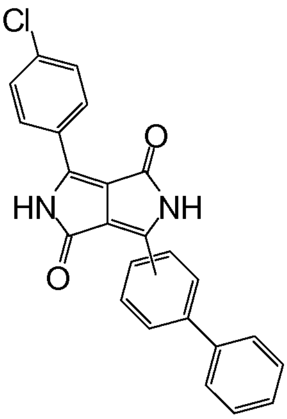

(II-2)

,

mit der Maßgabe, dass die Diketopyrrolopyrrol-artige Pigmentzusammensetzung keine mittlere Teilchengröße $d_{50}$ im Bereich von 10 bis 60 nm aufweist, wenn sie eine Verbindung der Formel (II-2) mit der Formel (II-6) umfasst

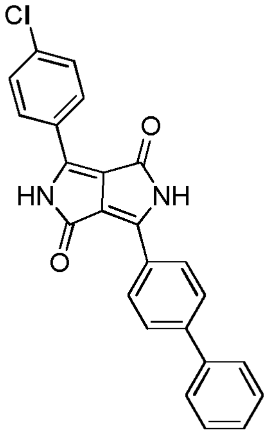

(II-6).

**3.** Die Diketopyrrolopyrrol-Pigmentzusammensetzung gemäß Anspruch 1 umfassend mindestens eine Diketopyrrolopyrrol-Verbindung dargestellt durch die folgende Formel (II-3) oder (II-4)

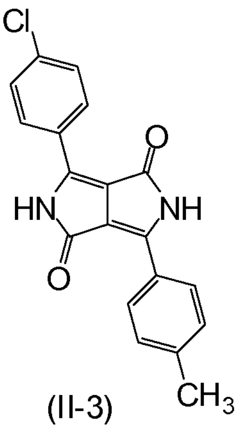

(II-3)

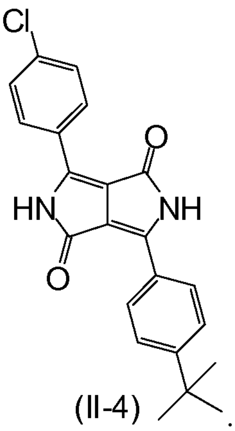

(II-4) .

**4.** Die Diketopyrrolopyrrol-artige Pigmentzusammensetzung gemäß Anspruch 1 umfassend mindestens eine Diketopyrrolopyrrol-Verbindung dargestellt durch die folgende Formel (II-5) oder (II-6)

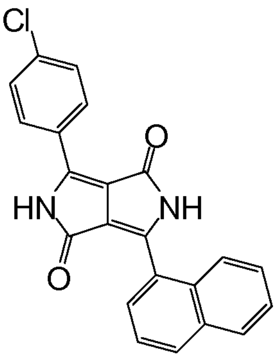

(II-5)

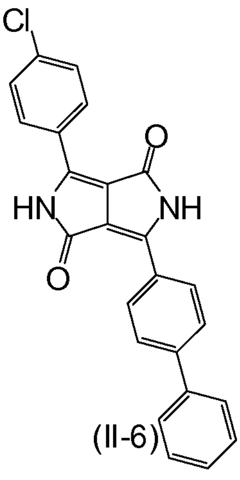

(II-6) ,

mit der Maßgabe, dass die Diketopyrrolopyrrol-artige Pigmentzusammensetzung keine mittlere Teilchengröße $d_{50}$ im Bereich von 10 bis 60 nm aufweist, wenn sie die Verbindung (II-6) umfasst.

**5.** Die Diketopyrrolopyrrol-artige Pigmentzusammensetzung gemäß irgendeinem der Ansprüche 1 bis 4, die durch den Schritt des Umsetzens einer Mischung von insgesamt 2 Mol umfassend 60 Mol-% bis 99,8 Mol-% einer Benzonitrilverbindung dargestellt durch die Formel "A-CN" und 0,2 Mol-% bis 40 Mol-% einer Benzonitrilverbindung dargestellt durch die Formel "B-CN" mit 1 Mol Succinatdiester erhalten wird.

**6.** Die Diketopyrrolopyrrol-artige Pigmentzusammensetzung gemäß irgendeinem der Ansprüche 1 bis 5, die durch ein Verfahren erhalten wird, das die Schritte umfasst:

Umsetzen eines Succinatdiesters mit einer Mischung von Benzonitrilverbindungen dargestellt durch die Formeln "A-CN" und "B-CN", um ein Alkalimetallsalz von Diketopyrrolopyrrol-artigen Pigmenten zu erhalten und Protonieren des Alkalimetallsalzes; und
weiterhin, vor der Protonierung, Zugabe einer Diketopyrrolopyrrol-Verbindung dargestellt durch die Formel (II).

**7.** Die Diketopyrrolopyrrol-artige Pigmentzusammensetzung gemäß irgendeinem der Ansprüche 1 bis 5, die durch ein Verfahren erhalten wird, das den Schritt des Umsetzens eines Succinatdiesters mit einer Mischung von Benzonitrilverbindungen dargestellt durch die Formeln "A-CN" und "B-CN" umfasst, um ein Alkalimetallsalz von Diketopyrrolopyrrol-artigen Pigmenten zu erhalten und Protonieren des Alkalimetallsalzes unter sauren oder basischen Bedingungen.

**8.** Die Diketopyrrolopyrrol-artige Pigmentzusammensetzung gemäß irgendeinem der Ansprüche 1 bis 7 umfassend ein Farbstoffderivat dargestellt durch die allgemeine Formel "Q-X",
wobei in der allgemeinen Formel "Q-X"

Q ein Chinacridonrest, Diketopyrrolopyrrolrest, Benzisoindolrest, Anthrachinonrest, Dianthrachinonrest, Thiazinindigorest, Azofarbstoffrest oder Chinophthalonrest ist;
jedes X unabhängig -OH, $-SO_3H$, -COOH oder ein einwertiges bis dreiwertiges Metallsalz, Alkylaminsalz, Piperazinylsalz oder Morpholinylsalz dieser sauren Gruppen; oder eine Phthalimidomethylgruppe; oder eine Gruppe, in der ein Triazinring, der eine tertiäre Aminogruppe enthaltende basische Gruppe trägt, an einer Stelle von -NH- gebunden ist; oder eine Gruppe dargestellt durch die folgende Formel (a), (b), (c), (d), (e), (f), (g) oder (h) ist;
jedes $T_1$ unabhängig $-SO_2NH-$, -CONH-, $-CH_2NHCOCH_2-$, -S- oder -NH- ist;
jedes $T_2$ unabhängig $C_{1-4}$-Alkylen ist; und
$R_1$ und $R_2$ jeweils unabhängig voneinander $C_{1-4}$-Alkyl ist und $R_3$ -H, $-NH_2$, $-NHCOCH_3$ oder $-NHR_4$ ist, wobei $R_4$ $C_{1-4}$-Alkyl oder ein Triazinring ist, der eine tertiäre Aminogruppe enthaltende basische Gruppe trägt.

(a)
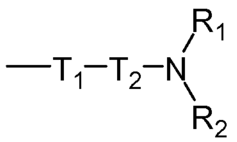

(b)
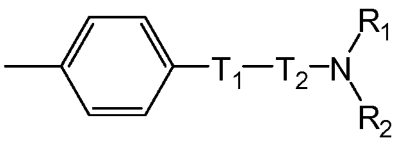

(c)
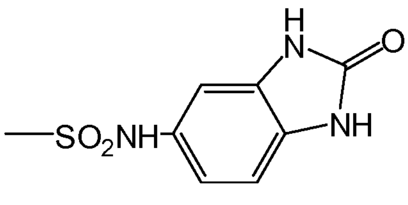

(d)
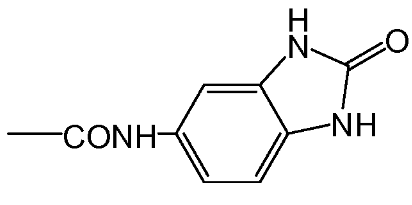

(e)
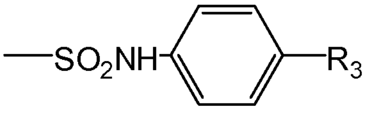

(f)
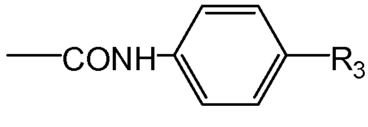

(g) 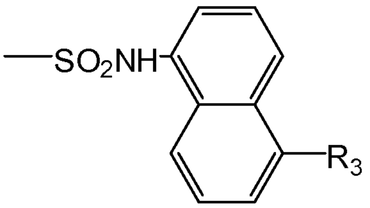

(h) 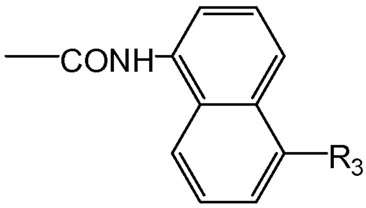

**9.** Ein organisches Polymermaterial, das durch die Diketopyrrolopyrrol-artige Pigmentzusammensetzung gemäß irgendeinem der Ansprüche 1 bis 8 gefärbt ist.

**10.** Eine Farbzusammensetzung für einen Farbfilter, der durch Dispergieren der Diketopyrrolopyrrol-artigen Pigmentzusammensetzung gemäß irgendeinem der Ansprüche 1 bis 8 in einem transparenten Harz erhalten wird.

**11.** Ein roter Film enthaltend einen Pigmentträger und die Diketopyrrolopyrrol-artige Pigmentzusammensetzung gemäß irgendeinem der Ansprüche 1 bis 8.

**Revendications**

**1.** Composition pigmentaire de type dicétopyrrolopyrrole, comportant au moins des composés dicétopyrrolopyrroles représentés par les formules générales (I) et (II) suivantes :

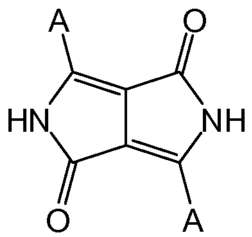 (I)

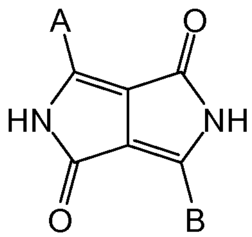 (II)

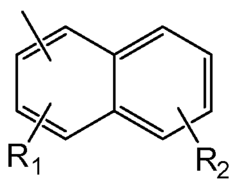
(B-1)

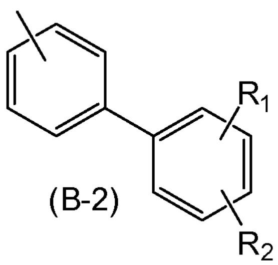
(B-2)

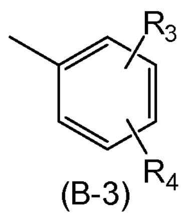
(B-3)

dans lesquelles

A représente un groupe 4-chlorophényle,
B est un groupe représenté par la formule (B-1), (B-2) ou (B-3),
$R_1$ et $R_2$ dans les formules (B-1) et (B-2) représentent chacun, indépendamment l'un de l'autre, l'hydrogène, un halogène, un alkyle en $C_1$ à $C_6$, un alcoxy en $C_1$ à $C_{18}$, un alcoxycarbonyle en $C_2$ à $C_{19}$, un alkylcarbamoyle en $C_2$ à $C_{19}$, un alkylmercapto en $C_2$ à $C_{18}$, un alkylamino en $C_1$ à $C_{18}$ ou un cycloalkyle en $C_5$ à $C_6$, et
$R_3$ et $R_4$ dans la formule (B-3) représentent chacun, indépendamment l'un de l'autre, l'hydrogène ou un alkyle en $C_1$ à $C_6$, $R_3$ et $R_4$ ne représentant pas tous les deux l'hydrogène,
dans laquelle la composition pigmentaire de type dicétopyrrolopyrrole a un diamètre moyen de particules primaires non supérieur à 40 nm,
à condition que la composition pigmentaire de type dicétopyrrolopyrrole n'ait pas une taille médiane de particules $d_{50}$ dans la plage comprise entre 10 et 60 nm lorsqu'elle comporte un composé ayant la formule suivante :

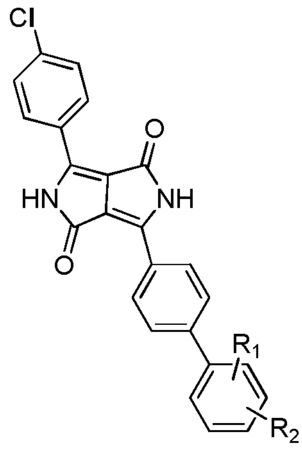,

dans laquelle $R_1$ et $R_2$ représentent chacun, indépendamment l'un de l'autre, l'hydrogène, F, Cl, Br, un alkyle en $C_1$ à $C_6$, un alcoxy en $C_1$ à $C_8$ ou un cycloalkyle en $C_5$ à $C_6$.

**2.** Composition pigmentaire de type dicétopyrrolopyrrole selon la revendication 1, comportant au moins un composé dicétopyrrolopyrrole représenté par la formule (II-1) ou (II-2) suivante :

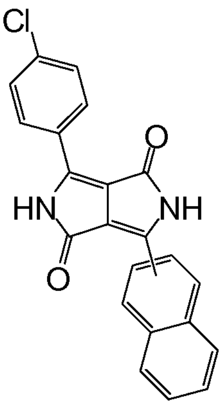

(II-1)

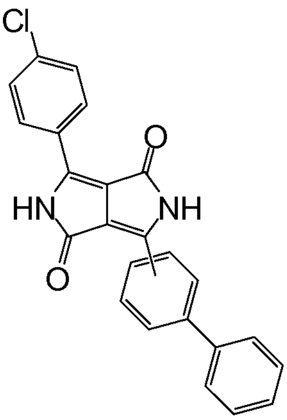

(II-2) ,

à la condition que la composition pigmentaire de type dicétopyrrolopyrrole n'ait pas une taille médiane de particules $d_{50}$ dans la plage comprise entre 10 et 60 nm lorsqu'elle comporte un composé de formule (II-2) ayant la formule (II-6) :

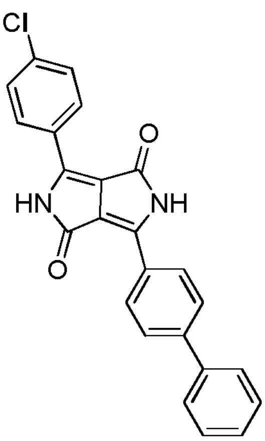

(II-6).

3. Composition pigmentaire de type dicétopyrrolopyrrole selon la revendication 1, comportant au moins un composé dicétopyrrolopyrrole représenté par la formule (II-3) ou (II-4) suivante :

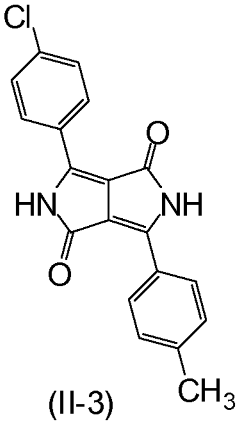
(II-3)

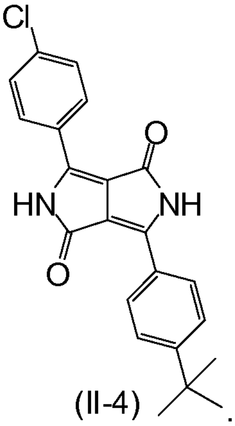
(II-4) .

4. Composition pigmentaire de type dicétopyrrolopyrrole selon la revendication 1, comportant au moins un composé dicétopyrrolopyrrole représenté par la formule (II-5) ou (II-6) suivante :

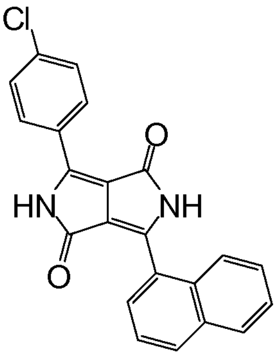
(II-5)

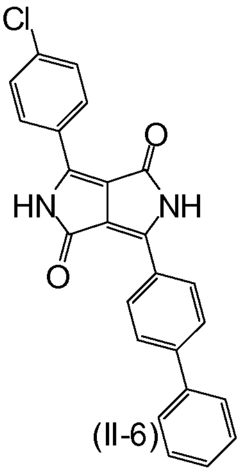
(II-6) ,

à la condition que la composition pigmentaire de type dicétopyrrolopyrrole n'ait pas une taille médiane de particules $d_{50}$ dans la plage comprise entre 10 et 60 nm lorsqu'elle comporte le composé (II-6).

5. Composition pigmentaire de type dicétopyrrolopyrrole selon l'une quelconque des revendications 1 à 4, qui est obtenue par un procédé comportant l'étape consistant à faire réagir, avec 1 mole d'un diester succinique, un mélange d'un total de 2 moles comportant de 60 % en moles à 99,8 % en moles de composé benzonitrile représenté par la formule "A-CN" et de 0,2 % en moles à 40 % en moles d'un composé benzonitrile représenté par la formule "B-CN".

6. Composition pigmentaire de type dicétopyrrolopyrrole selon l'une quelconque des revendications 1 à 5, qui est obtenue par un procédé comportant les étapes consistant à :

faire réagir un diester succinique avec un mélange de composés benzonitrile représentés par des formules "A-CN" et "B-CN" pour obtenir un sel de métal alcalin de pigments de type dicétopyrrolopyrrole et opérer une protonation du sel de métal alcalin, et
ajouter en plus, avant la protonation, un composé dicétopyrrolopyrrole représenté par la formule (II).

7. Composition pigmentaire de type dicétopyrrolopyrrole selon l'une quelconque des revendications 1 à 5, qui est obtenue par un procédé comportant l'étape consistant à faire réagir un diester succinique avec un mélange de composés benzonitrile représentés par des formules "A-CN" et "B-CN" pour obtenir un sel de métal alcalin de pigments de type dicétopyrrolopyrrole et opérer une protonation du sel de métal alcalin dans des conditions acides

ou basiques.

**8.** Composition pigmentaire de type dicétopyrrolopyrrole selon l'une quelconque des revendications 1 à 7, comportant un dérivé de colorant représenté par la formule générale "Q-X",
dans laquelle dans la formule générale "Q-X",

Q représente un résidu de quinacridone, un résidu dicétopyrrolopyrrole, un résidu de benzoisoindole, un résidu d'anthraquinone, un résidu de dianthraquinone, un résidu de thiazineindigo, un résidu de colorant azoïque ou un résidu de quinophthalone,
chaque X représente indépendamment -OH, $-SO_3H$, -COOH ou un sel de métal monovalent à trivalent, un sel d'alkylamine, un sel de pipérazinyle ou un sel de morpholinyle de ces groupes d'acides, ou un groupe phthalimidométhyle, ou un groupe dans lequel un cycle triazine portant un groupe basique contenant un groupe amine tertiaire est lié sur un côté de -NH-, ou un groupe représenté par la formule (a), (b), (c), (d), (e), (f), (g) ou (h) suivante,
chaque $T_1$ représente indépendamment $-SO_2NH-$, -CONH-, $-CH_2NHCOCH_2-$, -S- ou -NH-,
chaque $T_2$ représente indépendamment un alkylène en $C_1$ à $C_4$, et
$R_1$ et $R_2$ représentent chacun, indépendamment l'un de l'autre, un alkyle en $C_1$ à $C_4$, et $R_3$ représente -H, $-NH_2$, $-NHCOCH_3$ ou $-NHR_4$, $R_4$ étant un alkyle en $C_1$ à $C_4$ ou un cycle triazine portant un groupe basique contenant un groupe amine tertiaire.

(a)
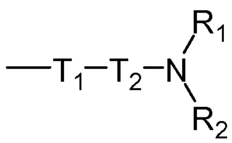
(b)
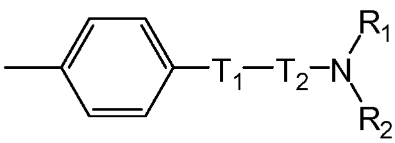

(c)
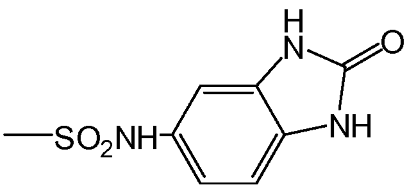
(d)
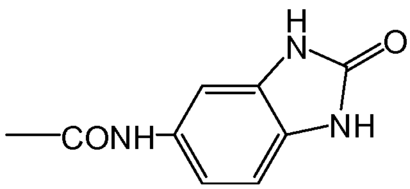

(e)
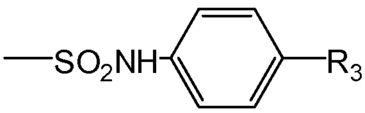
(f)
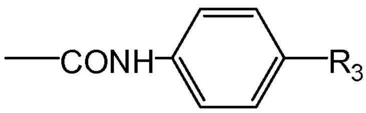

(g)
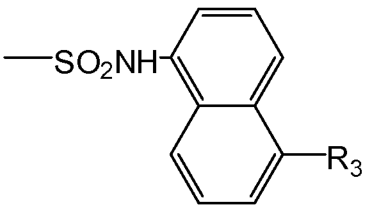
(h)
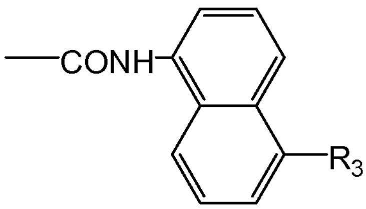

**9.** Matière polymère organique qui est colorée par la composition pigmentaire de type dicétopyrrolopyrrole selon l'une quelconque des revendications 1 à 8.

**10.** Composition colorée pour un filtre coloré, qui est obtenue en dispersant la composition pigmentaire de type dicétopyrrolopyrrole selon l'une quelconque des revendications 1 à 8 dans une résine transparente.

**11.** Film rouge, comportant un véhicule pigmentaire et la composition pigmentaire de type dicétopyrrolopyrrole selon l'une quelconque des revendications 1 à 8.

[FIGURE 1]

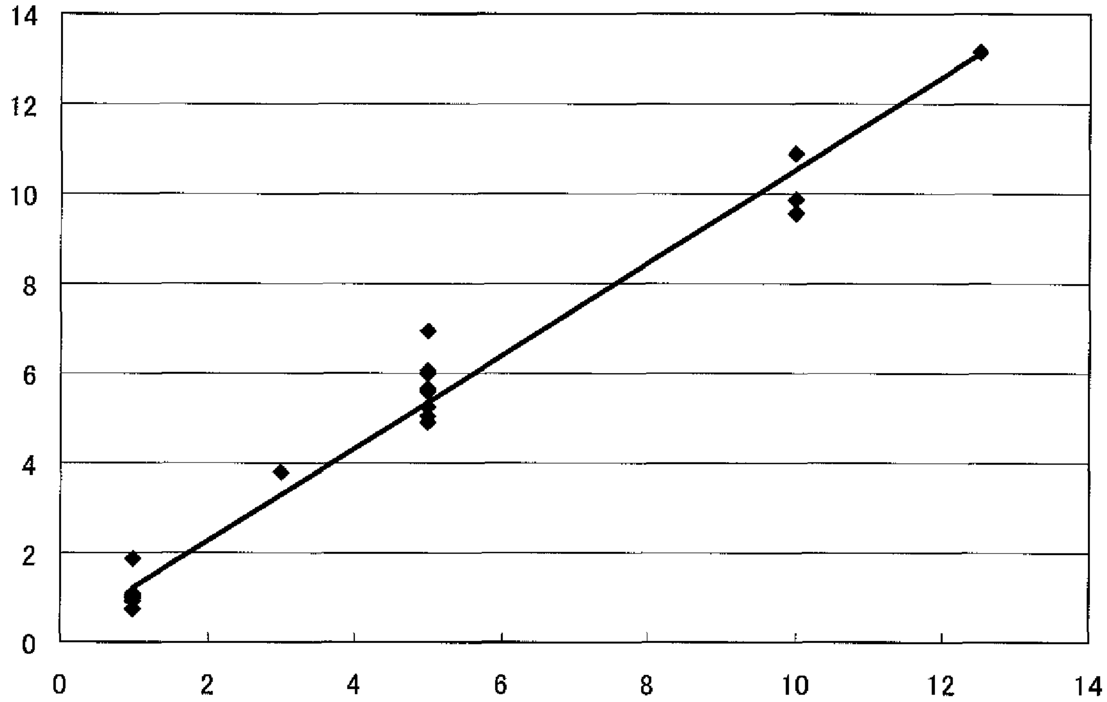


VERTICAL AXIS: AMOUNT OF HETERODPP PRODUCTION (weight%)

HORIZONTAL AXIS: AMOUNT OF 4-CYANOBIPHENYL ADDITION (mol%)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001220520 A
- US 58210084 B
- JP 7090189 A
- JP 61120861 A
- JP SHO58210084 B
- JP HEI0790189 B
- JP SHO61120861 B
- JP HEI08199085 B